(19) Europäisches Patentamt
European Patent Office
Office européen des brevets

(11) **EP 3 349 467 B1**

(12) **EUROPEAN PATENT SPECIFICATION**

(45) Date of publication and mention
of the grant of the patent:
**04.09.2019 Bulletin 2019/36**

(51) Int Cl.:
**H04N 21/218** *(2011.01)*     **H04N 21/2343** *(2011.01)*
**H04N 21/472** *(2011.01)*     **H04N 21/845** *(2011.01)*

(21) Application number: **18150397.0**

(22) Date of filing: **05.01.2018**

(54) **AN APPARATUS, A METHOD AND A COMPUTER PROGRAM FOR VIDEO CODING AND DECODING**

VORRICHTUNG, VERFAHREN UND COMPUTERPROGRAMM ZUR CODIERUNG UND DECODIERUNG VON VIDEOINHALTEN

APPAREIL, PROCÉDÉ ET PROGRAMME INFORMATIQUE POUR CODAGE ET DÉCODAGE VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2017 FI 20175015**

(43) Date of publication of application:
**18.07.2018 Bulletin 2018/29**

(73) Proprietor: **Nokia Technologies Oy**
**02610 Espoo (FI)**

(72) Inventor: **HANNUKSELA, Miska**
**33610 Tampere (FI)**

(74) Representative: **Berggren Oy, Tampere**
**Visiokatu 1**
**33720 Tampere (FI)**

(56) References cited:
**EP-A1- 2 824 885     US-A1- 2014 219 346**

• **"Draft Text of ISO/IEC 23009-1 3rd edition", 113. MPEG MEETING;19-10-2015 - 23-10-2015; GENEVA; (MOTION PICTURE EXPERT GROUP OR ISO/IEC JTC1/SC29/WG11),, no. N15686, 8 December 2015 (2015-12-08), XP030022374,**

Remarks:
The file contains technical information submitted after the application was filed and not included in this specification

**Description**

## TECHNICAL FIELD

The present invention relates to an apparatus, a method and a computer program for video coding and decoding.

## BACKGROUND

Several commercial solutions for adaptive streaming over Hypertext Transfer Protocol (HTTP), such as Microsoft® Smooth Streaming, Apple® Adaptive HTTP Live Streaming and Adobe® Dynamic Streaming, have been launched as well as standardization projects have been carried out. DASH has turned out to be a promising protocol for multimedia streaming applications, especially for 360-degree video or virtual reality (VR) video bistreams.

A recent trend in streaming in order to reduce the streaming bitrate of VR video is viewport-adaptive streaming (a.k.a. viewport dependent delivery), wherein a subset of 360-degree video content covering the primary viewport (i.e., the current view orientation) is transmitted at the best quality/resolution, while the remaining of 360-degree video is transmitted at a lower quality/resolution.

There are generally two approaches for viewport-adaptive streaming:

- Viewport-specific encoding and streaming, a.k.a. viewport-dependent encoding and streaming, a.k.a. asymmetric projection, a.k.a. packed VR video, where 360-degree image content is packed into the same frame with an emphasis on the primary viewport, and the packed VR frames are encoded into a single bitstream.
- VR viewport video, a.k.a. tile-based encoding and streaming, where 360-degree content is encoded and made available in a manner that enables selective streaming of viewports from different encodings.

In viewport-adaptive streaming, the bitrate is aimed to be reduced e.g. such that the primary viewport (i.e., the current viewing orientation) is transmitted at the best quality/resolution, while the remaining of 360-degree video is transmitted at a lower quality/resolution. When the viewing orientation changes, e.g. when the user turns his/her head when viewing the content with a head-mounted display, another version of the content needs to be streamed, matching the new viewing orientation. In general, the new version can be requested starting from a stream access point (SAP). In single-layer video bitstreams, SAPs are intra-coded and hence costly in terms of rate-distortion performance. Conventionally, relatively long SAP intervals in the order of seconds are hence used. Thus, the delay in upgrading the quality after a viewing orientation change (e.g. a head turn) is conventionally in the order of seconds and is therefore clearly noticeable and annoying.

Representations of more frequent SAPs can be additionally made available to reduce the switching delay related to the viewing orientation change. However, all known methods for merging coded tile rectangles or tile sets from Representations having different SAP intervals typically increase the streaming bitrate significantly.

EP 2824885 discloses a method for selecting a video segment of a panoramic video by a client device, wherein a super manifest file is retrieved from a content delivery network (CDN). The super manifest file defines video tiles and comprises necessary information for retrieving a corresponding manifest file for each video tile. Based on the tile information, a manifest file comprising segment information and/or links to segment information on video segments of the video tile is retrieved from the CDN. A selected video segment is retrieved and played on the client device.

US 2014/219346 teaches to provide different representations of the same content through an adaptive resolution change (ARC), where scalable video coding methods are used. For example, different ARC representations may be streamed as DASH Representations.

## SUMMARY

The invention is defined by the appended independent claims and will be more readily understood after reading the following detailed description taken in conjunction with the accompanying drawings.

## BRIEF DESCRIPTION OF THE DRAWINGS

For better understanding of the present invention, reference will now be made by way of example to the accompanying drawings in which:

Figure 1 shows schematically an electronic device employing embodiments of the invention;
Figure 2 shows schematically a user equipment suitable for employing embodiments of the invention;
Figure 3 further shows schematically electronic devices employing embodiments of the invention connected using wireless and wired network connections;
Figure 4 shows schematically an encoder suitable for implementing embodiments of the invention;
Figure 5 shows an example of a system for free-viewpoint navigation;
Figure 6a shows an example of stitching, projecting and mapped images of the same time instance onto a packed virtual reality frame;
Figure 6b shows a process of forming a monoscopic equirectangular panorama picture;
Figure 7 shows an example of a hierarchical data model used in DASH;
Figure 8 shows an example of mapping a higher resolution sampled front face of a cube map on the same packed virtual reality frame as other cube faces;
Figure 9 shows a flow chart of operation of a streaming client according to an embodiment of the invention;
Figure 10a shows an example of tile-based encoding first bitstreams having longer SAP intervals and second bitstreams having shorter SAP intervals;
Figure 10b shows an example of two bitstreams merged from tile rectangles of different quality according to an embodiment of the invention;
Figure 11 shows an example of the bitstream of the lower quality tiles having the same resolution as the bitstream of the higher quality tiles according to an embodiment of the invention;
Figure 12 shows a schematic diagram of a decoder suitable for implementing embodiments of the invention; and
Figure 13 shows a schematic diagram of an example multimedia communication system within which various embodiments may be implemented.

## DETAILED DESCRIPTON OF SOME EXAMPLE EMBODIMENTS

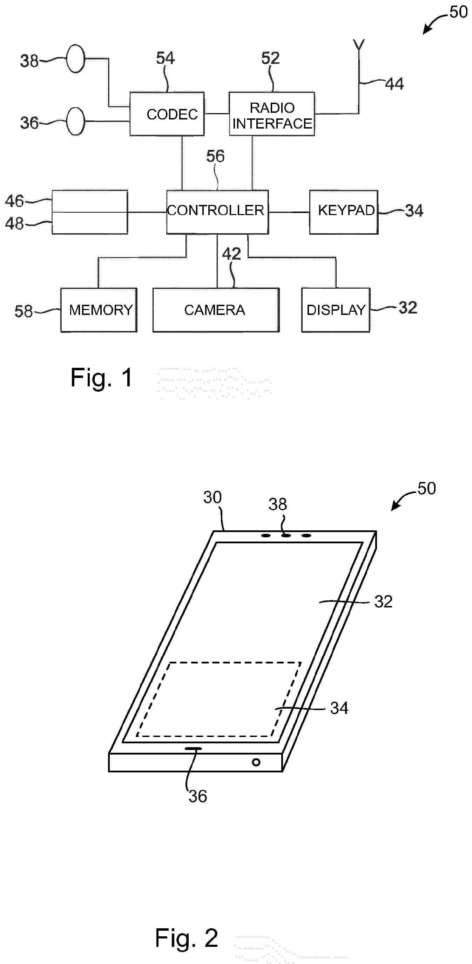

The following describes in further detail suitable apparatus and possible mechanisms for initiating a viewpoint switch. In this regard reference is first made to Figures 1 and 2, where Figure 1 shows a block diagram of a video coding system according to an example embodiment as a schematic block diagram of an exemplary apparatus or electronic device 50, which may incorporate a codec according to an embodiment of the invention. Figure 2 shows a layout of an apparatus according to an example embodiment. The elements of Figs. 1 and 2 will be explained next.

The electronic device 50 may for example be a mobile terminal or user equipment of a wireless communication system. However, it would be appreciated that embodiments of the invention may be implemented within any electronic device or apparatus which may require encoding and decoding or encoding or decoding video images.

The apparatus 50 may comprise a housing 30 for incorporating and protecting the device. The apparatus 50 further may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The apparatus may further comprise a camera 42 capable of recording or capturing images and/or video. The apparatus 50 may further comprise an infrared port for short range line of sight communication to other devices. In other embodiments the apparatus 50 may further comprise any suitable short range communication solution such as for example a Bluetooth wireless connection or a USB/firewire wired connection.

The apparatus 50 may comprise a controller 56 or processor for controlling the apparatus 50. The controller 56 may be connected to memory 58 which in embodiments of the invention may store both data in the form of image and audio data and/or may also store instructions for implementation on the controller 56. The controller 56 may further be connected to codec circuitry 54 suitable for carrying out coding and decoding of audio and/or video data or assisting in coding and decoding carried out by the controller.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

The apparatus 50 may comprise a camera capable of recording or detecting individual frames which are then passed to the codec 54 or the controller for processing. The apparatus may receive the video image data for processing from another device prior to transmission and/or storage. The apparatus 50 may also receive either wirelessly or by a wired connection the image for coding/decoding.

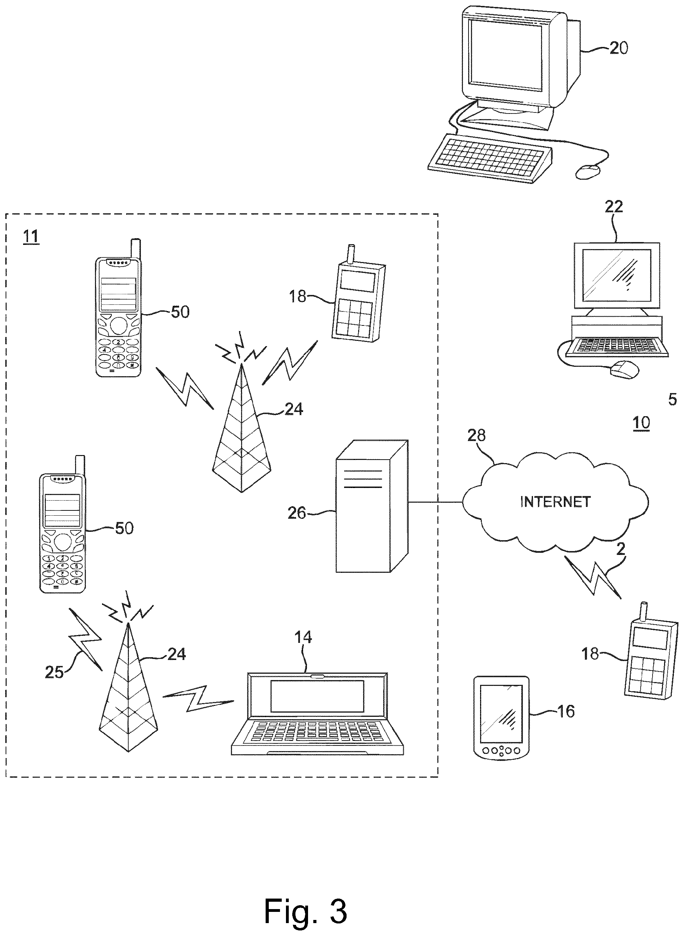

With respect to Figure 3, an example of a system within which embodiments of the present invention can be utilized is shown. The system 10 comprises multiple communication devices which can communicate through one or more networks. The system 10 may comprise any combination of wired or wireless networks including, but not limited to a wireless cellular telephone network (such as a GSM, UMTS, CDMA network etc), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices and/or apparatus 50 suitable for implementing embodiments of the invention.

For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

The embodiments may also be implemented in a set-top box; i.e. a digital TV receiver, which may/may not have a display or wireless capabilities, in tablets or (laptop) personal computers (PC), which have hardware or software or combination of the encoder/decoder implementations, in various operating systems, and in chipsets, processors, DSPs and/or embedded systems offering hardware/software based coding.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio, infrared, laser, cable connections, and any suitable connection.

In telecommunications and data networks, a channel may refer either to a physical channel or to a logical channel. A physical channel may refer to a physical transmission medium such as a wire, whereas a logical channel may refer to a logical connection over a multiplexed medium, capable of conveying several logical channels. A channel may be used for conveying an information signal, for example a bitstream, from one or several senders (or transmitters) to one or several receivers.

Real-time Transport Protocol (RTP) is widely used for real-time transport of timed media such as audio and video. RTP may operate on top of the User Datagram Protocol (UDP), which in turn may operate on top of the Internet Protocol (IP). RTP is specified in Internet Engineering Task Force (IETF) Request for Comments (RFC) 3550, available from www.ietf.org/rfc/rfc3550.txt. In RTP transport, media data is encapsulated into RTP packets. Typically, each media type or media coding format has a dedicated RTP payload format.

An RTP session is an association among a group of participants communicating with RTP. It is a group communications channel which can potentially carry a number of RTP streams. An RTP stream is a stream of RTP packets comprising media data. An RTP stream is identified by an SSRC belonging to a particular RTP session. SSRC refers to either a synchronization source or a synchronization source identifier that is the 32-bit SSRC field in the RTP packet header. A synchronization source is characterized in that all packets from the synchronization source form part of the same timing and sequence number space, so a receiver may group packets by synchronization source for playback. Examples of synchronization sources include the sender of a stream of packets derived from a signal source such as a microphone or a camera, or an RTP mixer. Each RTP stream is identified by a SSRC that is unique within the RTP session. An RTP stream may be regarded as a logical channel.

An MPEG-2 transport stream (TS), specified in ISO/IEC 13818-1 or equivalently in ITU-T Recommendation H.222.0, is a format for carrying audio, video, and other media as well as program metadata or other metadata, in a multiplexed stream. A packet identifier (PID) is used to identify an elementary stream (a.k.a. packetized elementary stream) within the TS. Hence, a logical channel within an MPEG-2 TS may be considered to correspond to a specific PID value.

Available media file format standards include ISO base media file format (ISO/IEC 14496-12, which may be abbreviated ISOBMFF), MPEG-4 file format (ISO/IEC 14496-14, also known as the MP4 format), file format for NAL unit structured video (ISO/IEC 14496-15) and 3GPP file format (3GPP TS 26.244, also known as the 3GP format). The ISO file format is the base for derivation of all the above mentioned file formats (excluding the ISO file format itself). These file formats (including the ISO file format itself) are generally called the ISO family of file formats.

Some concepts, structures, and specifications of ISOBMFF are described below as an example of a container file format, based on which the embodiments may be implemented. The aspects of the invention are not limited to ISOBMFF, but rather the description is given for one possible basis on top of which the invention may be partly or fully realized.

A basic building block in the ISO base media file format is called a box. Each box has a header and a payload. The box header indicates the type of the box and the size of the box in terms of bytes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISO base media file format may be considered to specify a hierarchical structure of boxes.

According to the ISO family of file formats, a file includes media data and metadata that are encapsulated into boxes. Each box is identified by a four character code (4CC) and starts with a header which informs about the type and size of the box.

In files conforming to the ISO base media file format, the media data may be provided in a media data 'mdat' box and the movie 'moov' box may be used to enclose the metadata. In some cases, for a file to be operable, both of the 'mdat' and 'moov' boxes may be required to be present. The movie 'moov' box may include one or more tracks, and each track may reside in one corresponding track 'trak' box. A track may be one of the many types, including a media track that refers to samples formatted according to a media compression format (and its encapsulation to the ISO base media file format). A track may be regarded as a logical channel.

Movie fragments may be used e.g. when recording content to ISO files e.g. in order to avoid losing data if a recording application crashes, runs out of memory space, or some other incident occurs. Without movie fragments, data loss may occur because the file format may require that all metadata, e.g., the movie box, be written in one contiguous area of the file. Furthermore, when recording a file, there may not be sufficient amount of memory space (e.g., random access memory RAM) to buffer a movie box for the size of the storage available, and re-computing the contents of a movie box when the movie is closed may be too slow. Moreover, movie fragments may enable simultaneous recording and playback of a file using a regular ISO file parser. Furthermore, a smaller duration of initial buffering may be required for progressive downloading, e.g., simultaneous reception and playback of a file when movie fragments are used and the initial movie box is smaller compared to a file with the same media content but structured without movie fragments.

The movie fragment feature may enable splitting the metadata that otherwise might reside in the movie box into multiple pieces. Each piece may correspond to a certain period of time of a track. In other words, the movie fragment feature may enable interleaving file metadata and media data. Consequently, the size of the movie box may be limited and the use cases mentioned above be realized.

In some examples, the media samples for the movie fragments may reside in an mdat box, if they are in the same file as the moov box. For the metadata of the movie fragments, however, a moof box may be provided. The moof box may include the information for a certain duration of playback time that would previously have been in the moov box. The moov box may still represent a valid movie on its own, but in addition, it may include an mvex box indicating that movie fragments will follow in the same file. The movie fragments may extend the presentation that is associated to the moov box in time.

Within the movie fragment there may be a set of track fragments, including anywhere from zero to a plurality per track. The track fragments may in turn include anywhere from zero to a plurality of track runs, each of which document is a contiguous run of samples for that track. Within these structures, many fields are optional and can be defaulted. The metadata that may be included in the moof box may be limited to a subset of the metadata that may be included in a moov box and may be coded differently in some cases. Details regarding the boxes that can be included in a moof box may be found from the ISO base media file format specification. A self-contained movie fragment may be defined to consist of a moof box and an mdat box that are consecutive in the file order and where the mdat box contains the samples of the movie fragment (for which the moof box provides the metadata) and does not contain samples of any other movie fragment (i.e. any other moof box).

The track reference mechanism can be used to associate tracks with each other. The TrackReferenceBox includes box(es), each of which provides a reference from the containing track to a set of other tracks. These references are labeled through the box type (i.e. the four-character code of the box) of the contained box(es).

The ISO Base Media File Format contains three mechanisms for timed metadata that can be associated with particular samples: sample groups, timed metadata tracks, and sample auxiliary information. Derived specification may provide similar functionality with one or more of these three mechanisms.

A sample grouping in the ISO base media file format and its derivatives, such as the AVC file format and the SVC file format, may be defined as an assignment of each sample in a track to be a member of one sample group, based on a grouping criterion. A sample group in a sample grouping is not limited to being contiguous samples and may contain non-adjacent samples. As there may be more than one sample grouping for the samples in a track, each sample grouping may have a type field to indicate the type of grouping. Sample groupings may be represented by two linked data structures: (1) a SampleToGroupBox (sbgp box) represents the assignment of samples to sample groups; and (2) a SampleGroupDescriptionBox (sgpd box) contains a sample group entry for each sample group describing the properties of the group. There may be multiple instances of the SampleToGroupBox and SampleGroupDescriptionBox based on different grouping criteria. These may be distinguished by a type field used to indicate the type of grouping. SampleToGroupBox may comprise a grouping_type_parameter field that can be used e.g. to indicate a sub-type of the grouping.

The ISOBMFF includes the so-called level mechanism to specify subsets of the file. Levels follow the dependency hierarchy so that samples mapped to level n may depend on any samples of levels m, where m <= n, and do not depend on any samples of levels p, where p > n. For example, levels can be specified according to temporal sub-layer (e.g., temporal_id of SVC or MVC or TemporalId of HEVC). Levels may be announced in the Level Assignment ('leva') box contained in the Movie Extends ('mvex') box. Levels cannot be specified for the initial movie. When the Level Assignment box is present, it applies to all movie fragments subsequent to the initial movie. For the context of the Level Assignment box, a fraction is defined to consist of one or more Movie Fragment boxes and the associated Media Data boxes, possibly including only an initial part of the last Media Data Box. Within a fraction, data for each level appears contiguously. Data for levels within a fraction appears in increasing order of level value. All data in a fraction shall be assigned to levels. The Level Assignment box provides a mapping from features, such as scalability layers, to levels. A feature can be specified through a track, a sub-track within a track, or a sample grouping of a track. The Level Assignment box includes the syntax element padding_flag. padding_flag is equal to 1 indicates that a conforming fraction can be formed by concatenating any positive integer number of levels within a fraction and padding the last Media Data box by zero bytes up to the full size that is indicated in the header of the last Media Data box. For example, padding_flag can be set equal to 1 when each fraction contains two or more AVC, SVC, or MVC tracks of the same video bitstream, the samples for each track of a fraction are contiguous and in decoding order in a Media Data box, and the samples of the first AVC, SVC, or MVC level contain extractor NAL units for including the video coding NAL units from the other levels of the same fraction.

The Matroska file format is capable of (but not limited to) storing any of video, audio, picture, or subtitle tracks in one file. Matroska may be used as a basis format for derived file formats, such as WebM. Matroska uses Extensible Binary Meta Language (EBML) as basis. EBML specifies a binary and octet (byte) aligned format inspired by the principle of XML. EBML itself is a generalized description of the technique of binary markup. A Matroska file consists of Elements that make up an EBML "document." Elements incorporate an Element ID, a descriptor for the size of the element, and the binary data itself. Elements can be nested. A Segment Element of Matroska is a container for other top-level (level 1) elements. A Matroska file may comprise (but is not limited to be composed of) one Segment. Multimedia data in Matroska files is organized in Clusters (or Cluster Elements), each containing typically a few seconds of multimedia data. A Cluster comprises BlockGroup elements, which in turn comprise Block Elements. A Cues Element comprises metadata which may assist in random access or seeking and may include file pointers or respective timestamps for seek points.

Video codec consists of an encoder that transforms the input video into a compressed representation suited for storage/transmission and a decoder that can uncompress the compressed video representation back into a viewable form. A video encoder and/or a video decoder may also be separate from each other, i.e. need not form a codec. Typically encoder discards some information in the original video sequence in order to represent the video in a more compact form (that is, at lower bitrate).

Typical hybrid video encoders, for example many encoder implementations of ITU-T H.263 and H.264, encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate).

Inter prediction, which may also be referred to as temporal prediction, motion compensation, or motion-compensated prediction, reduces temporal redundancy. In inter prediction the sources of prediction are previously decoded pictures. Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied. Inter prediction typically improves compression efficiency significantly compared to when using intra coding only.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

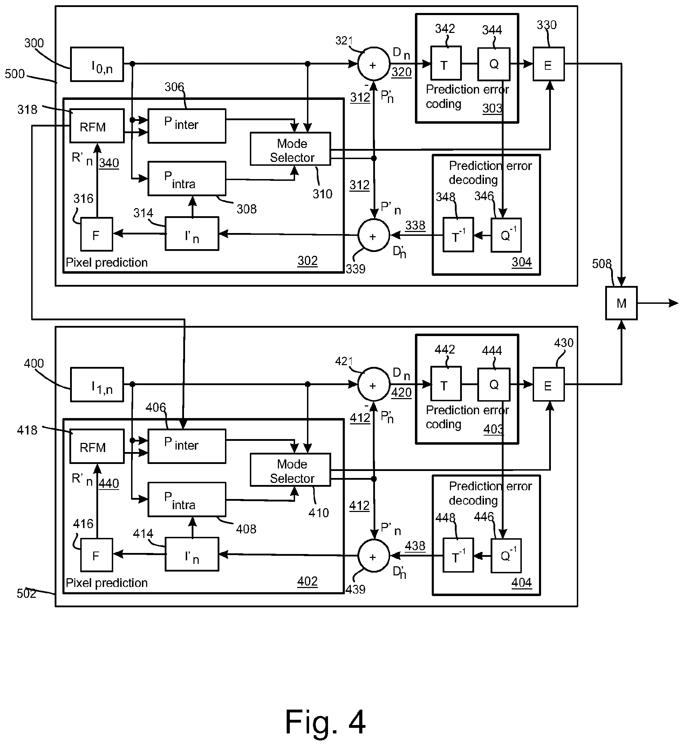

Figure 4 shows a block diagram of a video encoder suitable for employing embodiments of the invention. Figure 4 presents an encoder for two layers, but it would be appreciated that presented encoder could be similarly extended to encode more than two layers. Figure 4 illustrates an embodiment of a video encoder comprising a first encoder section 500 for a base layer and a second encoder section 502 for an enhancement layer. Each of the first encoder section 500 and the second encoder section 502 may comprise similar elements for encoding incoming pictures. The encoder sections 500, 502 may comprise a pixel predictor 302, 402, prediction error encoder 303, 403 and prediction error decoder 304, 404. Figure 4 also shows an embodiment of the pixel predictor 302, 402 as comprising an inter-predictor 306, 406, an intra-predictor 308, 408, a mode selector 310, 410, a filter 316, 416, and a reference frame memory 318, 418. The pixel predictor 302 of the first encoder section 500 receives 300 base layer images of a video stream to be encoded at both the inter-predictor 306 (which determines the difference between the image and a motion compensated reference frame 318) and the intra-predictor 308 (which determines a prediction for an image block based only on the already processed parts of current frame or picture). The output of both the inter-predictor and the intra-predictor are passed to the mode selector 310. The intra-predictor 308 may have more than one intra-prediction modes. Hence, each mode may perform the intra-prediction and provide the predicted signal to the mode selector 310. The mode selector 310 also receives a copy of the base layer picture 300. Correspondingly, the pixel predictor 402 of the second encoder section 502 receives 400 enhancement layer images of a video stream to be encoded at both the inter-predictor 406 (which determines the difference between the image and a motion compensated reference frame 418) and the intra-predictor 408 (which determines a prediction for an image block based only on the already processed parts of current frame or picture). The output of both the inter-predictor and the intra-predictor are passed to the mode selector 410. The intra-predictor 408 may have more than one intra-prediction modes. Hence, each mode may perform the intra-prediction and provide the predicted signal to the mode selector 410. The mode selector 410 also receives a copy of the enhancement layer picture 400.

Depending on which encoding mode is selected to encode the current block, the output of the inter-predictor 306, 406 or the output of one of the optional intra-predictor modes or the output of a surface encoder within the mode selector is passed to the output of the mode selector 310, 410. The output of the mode selector is passed to a first summing device 321, 421. The first summing device may subtract the output of the pixel predictor 302, 402 from the base layer picture 300/enhancement layer picture 400 to produce a first prediction error signal 320, 420 which is input to the prediction error encoder 303, 403.

The pixel predictor 302, 402 further receives from a preliminary reconstructor 339, 439 the combination of the prediction representation of the image block 312, 412 and the output 338, 438 of the prediction error decoder 304, 404. The preliminary reconstructed image 314, 414 may be passed to the intra-predictor 308, 408 and to a filter 316, 416. The filter 316, 416 receiving the preliminary representation may filter the preliminary representation and output a final reconstructed image 340, 440 which may be saved in a reference frame memory 318, 418. The reference frame memory 318 may be connected to the inter-predictor 306 to be used as the reference image against which a future base layer picture 300 is compared in inter-prediction operations. Subject to the base layer being selected and indicated to be source for inter-layer sample prediction and/or inter-layer motion information prediction of the enhancement layer according to some embodiments, the reference frame memory 318 may also be connected to the inter-predictor 406 to be used as the reference image against which a future enhancement layer pictures 400 is compared in inter-prediction operations. Moreover, the reference frame memory 418 may be connected to the inter-predictor 406 to be used as the reference image against which a future enhancement layer picture 400 is compared in inter-prediction operations.

Filtering parameters from the filter 316 of the first encoder section 500 may be provided to the second encoder section 502 subject to the base layer being selected and indicated to be source for predicting the filtering parameters of the enhancement layer according to some embodiments.

The prediction error encoder 303, 403 comprises a transform unit 342, 442 and a quantizer 344, 444. The transform unit 342, 442 transforms the first prediction error signal 320, 420 to a transform domain. The transform is, for example, the DCT transform. The quantizer 344, 444 quantizes the transform domain signal, e.g. the DCT coefficients, to form quantized coefficients.

The prediction error decoder 304, 404 receives the output from the prediction error encoder 303, 403 and performs the opposite processes of the prediction error encoder 303, 403 to produce a decoded prediction error signal 338, 438 which, when combined with the prediction representation of the image block 312, 412 at the second summing device 339, 439, produces the preliminary reconstructed image 314, 414. The prediction error decoder may be considered to comprise a dequantizer 361, 461, which dequantizes the quantized coefficient values, e.g. DCT coefficients, to reconstruct the transform signal and an inverse transformation unit 363, 463, which performs the inverse transformation to the reconstructed transform signal wherein the output of the inverse transformation unit 363, 463 contains reconstructed block(s). The prediction error decoder may also comprise a block filter which may filter the reconstructed block(s) according to further decoded information and filter parameters.

The entropy encoder 330, 430 receives the output of the prediction error encoder 303, 403 and may perform a suitable entropy encoding/variable length encoding on the signal to provide error detection and correction capability. The outputs of the entropy encoders 330, 430 may be inserted into a bitstream e.g. by a multiplexer 508.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

Version 1 of the High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Version 2 of H.265/HEVC included scalable, multiview, and fidelity range extensions, which may be abbreviated SHVC, MV-HEVC, and REXT, respectively. Version 2 of H.265/HEVC was prepublished as ITU-T Recommendation H.265 (10/2014) and is likely to be published as Edition 2 of ISO/IEC 23008-2 in 2015. There are currently ongoing standardization projects to develop further extensions to H.265/HEVC, including three-dimensional and screen content coding extensions, which may be abbreviated 3D-HEVC and SCC, respectively.

SHVC, MV-HEVC, and 3D-HEVC use a common basis specification, specified in Annex F of the version 2 of the HEVC standard. This common basis comprises for example high-level syntax and semantics e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

Some key definitions, bitstream and coding structures, and concepts of H.264/AVC and HEVC are described in this section as an example of a video encoder, decoder, encoding method, decoding method, and a bitstream structure, wherein the embodiments may be implemented. Some of the key definitions, bitstream and coding structures, and concepts of H.264/AVC are the same as in HEVC - hence, they are described below jointly. The aspects of the invention are not limited to H.264/AVC or HEVC, but rather the description is given for one possible basis on top of which the invention may be partly or fully realized.

Similarly to many earlier video coding standards, the bitstream syntax and semantics as well as the decoding process for error-free bitstreams are specified in H.264/AVC and HEVC. The encoding process is not specified, but encoders must generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

In the description of existing standards as well as in the description of example embodiments, a syntax element may be defined as an element of data represented in the bitstream. A syntax structure may be defined as zero or more syntax elements present together in the bitstream in a specified order. In the description of existing standards as well as in the description of example embodiments, a phrase "by external means" or "through external means" may be used. For example, an entity, such as a syntax structure or a value of a variable used in the decoding process, may be provided "by external means" to the decoding process. The phrase "by external means" may indicate that the entity is not included in the bitstream created by the encoder, but rather conveyed externally from the bitstream for example using a control protocol. It may alternatively or additionally mean that the entity is not created by the encoder, but may be created for example in the player or decoding control logic or alike that is using the decoder. The decoder may have an interface for inputting the external means, such as variable values.

The elementary unit for the input to an H.264/AVC or HEVC encoder and the output of an H.264/AVC or HEVC decoder, respectively, is a picture. A picture given as an input to an encoder may also referred to as a source picture, and a picture decoded by a decoded may be referred to as a decoded picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g. in a coded bitstream e.g. using the Video Usability Information (VUI) syntax of H.264/AVC and/or HEVC. A component may be defined as an array or single sample from one of the three sample arrays arrays (luma and two chroma) or the array or a single sample of the array that compose a picture in monochrome format.

In H.264/AVC and HEVC, a picture may either be a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays. Chroma formats may be summarized as follows:

- In monochrome sampling there is only one sample array, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling when no separate color planes are in use, each of the two chroma arrays has the same height and width as the luma array.

In H.264/AVC and HEVC, it is possible to code sample arrays as separate color planes into the bitstream and respectively decode separately coded color planes from the bitstream. When separate color planes are in use, each one of them is separately processed (by the encoder and/or the decoder) as a picture with monochrome sampling.

A partitioning may be defined as a division of a set into subsets such that each element of the set is in exactly one of the subsets.

In H.264/AVC, a macroblock is a 16x16 block of luma samples and the corresponding blocks of chroma samples. For example, in the 4:2:0 sampling pattern, a macroblock contains one 8x8 block of chroma samples per each chroma component. In H.264/AVC, a picture is partitioned to one or more slice groups, and a slice group contains one or more slices. In H.264/AVC, a slice consists of an integer number of macroblocks ordered consecutively in the raster scan within a particular slice group.

When describing the operation of HEVC encoding and/or decoding, the following terms may be used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples.

In some video codecs, such as High Efficiency Video Coding (HEVC) codec, video pictures are divided into coding units (CU) covering the area of the picture. A CU consists of one or more prediction units (PU) defining the prediction process for the samples within the CU and one or more transform units (TU) defining the prediction error coding process for the samples in the said CU. Typically, a CU consists of a square block of samples with a size selectable from a predefined set of possible CU sizes. A CU with the maximum allowed size may be named as LCU (largest coding unit) or coding tree unit (CTU) and the video picture is divided into non-overlapping LCUs. An LCU can be further split into a combination of smaller CUs, e.g. by recursively splitting the LCU and resultant CUs. Each resulting CU typically has at least one PU and at least one TU associated with it. Each PU and TU can be further split into smaller PUs and TUs in order to increase granularity of the prediction and prediction error coding processes, respectively. Each PU has prediction information associated with it defining what kind of a prediction is to be applied for the pixels within that PU (e.g. motion vector information for inter predicted PUs and intra prediction directionality information for intra predicted PUs).

Each TU can be associated with information describing the prediction error decoding process for the samples within the said TU (including e.g. DCT coefficient information). It is typically signalled at CU level whether prediction error coding is applied or not for each CU. In the case there is no prediction error residual associated with the CU, it can be considered there are no TUs for the said CU. The division of the image into CUs, and division of CUs into PUs and TUs is typically signalled in the bitstream allowing the decoder to reproduce the intended structure of these units.

In HEVC, a picture can be partitioned in tiles, which are rectangular and contain an integer number of LCUs. In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

A motion-constrained tile set (MCTS) is such that the inter prediction process is constrained in encoding such that no sample value outside the motion-constrained tile set, and no sample value at a fractional sample position that is derived using one or more sample values outside the motion-constrained tile set, is used for inter prediction of any sample within the motion-constrained tile set. It is noted that sample locations used in inter prediction are saturated so that a location that would be outside the picture otherwise is saturated to point to the corresponding boundary sample of the picture. Hence, if a tile boundary is also a picture boundary, motion vectors may effectively cross that boundary or a motion vector may effectively cause fractional sample interpolation that would refer to a location outside that boundary, since the sample locations are saturated onto the boundary. The temporal motion-constrained tile sets SEI message of HEVC can be used to indicate the presence of motion-constrained tile sets in the bitstream. A motion-constrained tile set may be regarded as an independently coded tile set, since it may be decoded without the other tile sets.

An inter-layer constrained tile set is such that the inter-layer prediction process is constrained in encoding such that no sample value outside each associated reference tile set, and no sample value at fractional sample position that is derived using one of more sample values outside each associated reference tile set, is used for inter-layer prediction of any sample within the inter-layer constrained tile set. The inter-layer constrained tile sets SEI message of HEVC can be used to indicate the presence of inter-layer constrained tile sets in the bitstream.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

The filtering may for example include one more of the following: deblocking, sample adaptive offset (SAO), and/or adaptive loop filtering (ALF). H.264/AVC includes a deblocking, whereas HEVC includes both deblocking and SAO.

In typical video codecs the motion information is indicated with motion vectors associated with each motion compensated image block, such as a prediction unit. Each of these motion vectors represents the displacement of the image block in the picture to be coded (in the encoder side) or decoded (in the decoder side) and the prediction source block in one of the previously coded or decoded pictures. In order to represent motion vectors efficiently those are typically coded differentially with respect to block specific predicted motion vectors. In typical video codecs the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signalling the chosen candidate as the motion vector predictor. In addition to predicting the motion vector values, it can be predicted which reference picture(s) are used for motion-compensated prediction and this prediction information may be represented for example by a reference index of previously coded/decoded picture. The reference index is typically predicted from adjacent blocks and/or co-located blocks in temporal reference picture. Moreover, typical high efficiency video codecs employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signalled among a list of motion field candidate list filled with motion field information of available adjacent/co-located blocks.

Typical video codecs enable the use of uni-prediction, where a single prediction block is used for a block being (de)coded, and bi-prediction, where two prediction blocks are combined to form the prediction for a block being (de)coded. Some video codecs enable weighted prediction, where the sample values of the prediction blocks are weighted prior to adding residual information. For example, multiplicative weighting factor and an additive offset which can be applied. In explicit weighted prediction, enabled by some video codecs, a weighting factor and offset may be coded for example in the slice header for each allowable reference picture index. In implicit weighted prediction, enabled by some video codecs, the weighting factors and/or offsets are not coded but are derived e.g. based on the relative picture order count (POC) distances of the reference pictures.

In typical video codecs the prediction residual after motion compensation is first transformed with a transform kernel (like DCT) and then coded. The reason for this is that often there still exists some correlation among the residual and transform can in many cases help reduce this correlation and provide more efficient coding.

Typical video encoders utilize Lagrangian cost functions to find optimal coding modes, e.g. the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R, \qquad (1)$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Video coding standards and specifications may allow encoders to divide a coded picture to coded slices or alike. In-picture prediction is typically disabled across slice boundaries. Thus, slices can be regarded as a way to split a coded picture to independently decodable pieces. In H.264/AVC and HEVC, in-picture prediction may be disabled across slice boundaries. Thus, slices can be regarded as a way to split a coded picture into independently decodable pieces, and slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighboring macroblock or CU may be regarded as unavailable for intra prediction, if the neighboring macroblock or CU resides in a different slice.

An elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A bytestream format has been specified in H.264/AVC and HEVC for transmission or storage environments that do not provide framing structures. The bytestream format separates NAL units from each other by attaching a start code in front of each NAL unit. To avoid false detection of NAL unit boundaries, encoders run a byte-oriented start code emulation prevention algorithm, which adds an emulation prevention byte to the NAL unit payload if a start code would have occurred otherwise. In order to enable straightforward gateway operation between packet- and stream-oriented systems, start code emulation prevention may always be performed regardless of whether the bytestream format is in use or not. A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

NAL units consist of a header and payload. In H.264/AVC and HEVC, the NAL unit header indicates the type of the NAL unit

H.264/AVC NAL unit header includes a 2-bit nal_ref_idc syntax element, which when equal to 0 indicates that a coded slice contained in the NAL unit is a part of a non-reference picture and when greater than 0 indicates that a coded slice contained in the NAL unit is a part of a reference picture. The header for SVC and MVC NAL units may additionally contain various indications related to the scalability and multiview hierarchy. In HEVC, a two-byte NAL unit header is used for all specified NAL unit types. The NAL unit header contains one reserved bit, a six-bit NAL unit type indication, a three-bit nuh_temporal_id_plus1 indication for temporal level (may be required to be greater than or equal to 1) and a six-bit nuh_layer_id syntax element. The temporal_id_plus1 syntax element may be regarded as a temporal identifier for the NAL unit, and a zero-based TemporalId variable may be derived as follows: TemporalId = temporal_id_plus1 - 1. The abbreviation TID may be used to interchangeably with the TemporalId variable. TemporalId equal to 0 corresponds to the lowest temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to tid_value does not use any picture having a TemporalId greater than tid_value as inter prediction reference. A sub-layer or a temporal sub-layer may be defined to be a temporal scalable layer of a temporal scalable bitstream, consisting of VCL NAL units with a particular value of the TemporalId variable and the associated non-VCL NAL units. nuh layer id can be understood as a scalability layer identifier.

NAL units can be categorized into Video Coding Layer (VCL) NAL units and non-VCL NAL units. VCL NAL units are typically coded slice NAL units. In H.264/AVC, coded slice NAL units contain syntax elements representing one or more coded macroblocks, each of which corresponds to a block of samples in the uncompressed picture. In HEVC, VCLNAL units contain syntax elements representing one or more CU.

In H.264/AVC, a coded slice NAL unit can be indicated to be a coded slice in an Instantaneous Decoding Refresh (IDR) picture or coded slice in a non-IDR picture.

In HEVC, a coded slice NAL unit can be indicated to be one of the following types:

| nal_unit_type | Name of nal_unit_type | Content of NAL unit and RBSP syntax structure |
|---|---|---|
| 0,<br>1 | TRAIL_N,<br>TRAIL_R | Coded slice segment of a non-TSA, non-STSA trailing picture<br>slice_segment_layer_rbsp( ) |
| 2,<br>3 | TSA_N,<br>TSA_R | Coded slice segment of a TSA picture<br>slice_segment_layer_rbsp( ) |
| 4,<br>5 | STSA_N,<br>STSA_R | Coded slice segment of an STSA picture<br>slice_layer_rbsp( ) |
| 6,<br>7 | RADL_N,<br>RADL_R | Coded slice segment of a RADL picture<br>slice_layer_rbsp( ) |
| 8,<br>9 | RASL_N,<br>RASL_R, | Coded slice segment of a RASL picture<br>slice_layer_rbsp( ) |
| 10,<br>12,<br>14 | RSV_VCL_N10<br>RSV_VCL_N12<br>RSV_VCL_N14 | Reserved // reserved non-RAP non-reference VCL NAL unit types |
| 11,<br>13,<br>15 | RSV_VCL_R11<br>RSV_VCL_R13<br>RSV_VCL_R15 | Reserved // reserved non-RAP reference VCL NAL unit types |
| 16,<br>17,<br><br>18 | BLA_W_LP<br>BLA_W_DLP (a.k.a. IDR_W_RADL)<br>BLA_N_LP | Coded slice segment of a BLA picture<br><br><br>slice_segment_layer_rbsp( ) |
| 19,<br><br>20<br>21 | IDR_W_DLP (a.k.a. IDR_W_RADL)<br>IDR_N_LP<br>CRA_NUT | Coded slice segment of an IDR picture<br><br>slice_segment_layer_rbsp( )<br>Coded slice segment of a CRA picture<br>slice_segment_layer_rbsp( ) |
| 22,<br>23 | RSV_IRAP_VCL22..<br>RSV_IRAP_VCL23 | Reserved // reserved RAP VCL NAL unit types |

(continued)

| nal_unit_type | Name of nal_unit_type | Content of NAL unit and RBSP syntax structure |
|---|---|---|
| 24..31 | RSV_VCL24.. RSV_VCL31 | Reserved // reserved non-RAP VCL NAL unit types |

In HEVC, abbreviations for picture types may be defined as follows: trailing (TRAIL) picture, Temporal Sub-layer Access (TSA), Step-wise Temporal Sub-layer Access (STSA), Random Access Decodable Leading (RADL) picture, Random Access Skipped Leading (RASL) picture, Broken Link Access (BLA) picture, Instantaneous Decoding Refresh (IDR) picture, Clean Random Access (CRA) picture.

A Random Access Point (RAP) picture, which may also be referred to as an intra random access point (IRAP) picture, is a picture where each slice or slice segment has nal_unit_type in the range of 16 to 23, inclusive. A IRAP picture in an independent layer contains only intra-coded slices. An IRAP picture belonging to a predicted layer with nuh_layer_id value currLayerId may contain P, B, and I slices, cannot use inter prediction from other pictures with nuh layer id equal to currLayerId, and may use inter-layer prediction from its direct reference layers. In the present version of HEVC, an IRAP picture may be a BLA picture, a CRA picture or an IDR picture. The first picture in a bitstream containing a base layer is an IRAP picture at the base layer. Provided the necessary parameter sets are available when they need to be activated, an IRAP picture at an independent layer and all subsequent non-RASL pictures at the independent layer in decoding order can be correctly decoded without performing the decoding process of any pictures that precede the IRAP picture in decoding order. The IRAP picture belonging to a predicted layer with nuh layer id value currLayerId and all subsequent non-RASL pictures with nuh layer id equal to currLayerId in decoding order can be correctly decoded without performing the decoding process of any pictures with nuh layer id equal to currLayerId that precede the IRAP picture in decoding order, when the necessary parameter sets are available when they need to be activated and when the decoding of each direct reference layer of the layer with nuh layer id equal to currLayerId has been initialized (i.e. when LayerInitializedFlag[refLayerId] is equal to 1 for refLayerIdequal to all nuh layer id values of the direct reference layers of the layer with nuh_layer_id equal to currLayerId). There may be pictures in a bitstream that contain only intra-coded slices that are not IRAP pictures.

In HEVC a CRA picture may be the first picture in the bitstream in decoding order, or may appear later in the bitstream. CRA pictures in HEVC allow so-called leading pictures that follow the CRA picture in decoding order but precede it in output order. Some of the leading pictures, so-called RASL pictures, may use pictures decoded before the CRA picture as a reference. Pictures that follow a CRA picture in both decoding and output order are decodable if random access is performed at the CRA picture, and hence clean random access is achieved similarly to the clean random access functionality of an IDR picture.

A CRA picture may have associated RADL or RASL pictures. When a CRA picture is the first picture in the bitstream in decoding order, the CRA picture is the first picture of a coded video sequence in decoding order, and any associated RASL pictures are not output by the decoder and may not be decodable, as they may contain references to pictures that are not present in the bitstream.

A leading picture is a picture that precedes the associated RAP picture in output order. The associated RAP picture is the previous RAP picture in decoding order (if present). A leading picture is either a RADL picture or a RASL picture.

All RASL pictures are leading pictures of an associated BLA or CRA picture. When the associated RAP picture is a BLA picture or is the first coded picture in the bitstream, the RASL picture is not output and may not be correctly decodable, as the RASL picture may contain references to pictures that are not present in the bitstream. However, a RASL picture can be correctly decoded if the decoding had started from a RAP picture before the associated RAP picture of the RASL picture. RASL pictures are not used as reference pictures for the decoding process of non-RASL pictures. When present, all RASL pictures precede, in decoding order, all trailing pictures of the same associated RAP picture. In some drafts of the HEVC standard, a RASL picture was referred to a Tagged for Discard (TFD) picture.

All RADL pictures are leading pictures. RADL pictures are not used as reference pictures for the decoding process of trailing pictures of the same associated RAP picture. When present, all RADL pictures precede, in decoding order, all trailing pictures of the same associated RAP picture. RADL pictures do not refer to any picture preceding the associated RAP picture in decoding order and can therefore be correctly decoded when the decoding starts from the associated RAP picture. In some drafts of the HEVC standard, a RADL picture was referred to a Decodable Leading Picture (DLP).

When a part of a bitstream starting from a CRA picture is included in another bitstream, the RASL pictures associated with the CRA picture might not be correctly decodable, because some of their reference pictures might not be present in the combined bitstream. To make such a splicing operation straightforward, the NAL unit type of the CRA picture can be changed to indicate that it is a BLA picture. The RASL pictures associated with a BLA picture may not be correctly decodable hence are not be output/displayed. Furthermore, the RASL pictures associated with a BLA picture may be omitted from decoding.

A BLA picture may be the first picture in the bitstream in decoding order, or may appear later in the bitstream. Each BLA picture begins a new coded video sequence, and has similar effect on the decoding process as an IDR picture. However, a BLA picture contains syntax elements that specify a non-empty reference picture set. When a BLA picture has nal_unit_type equal to BLA_W_LP, it may have associated RASL pictures, which are not output by the decoder and may not be decodable, as they may contain references to pictures that are not present in the bitstream. When a BLA picture has nal_unit_type equal to BLA_W_LP, it may also have associated RADL pictures, which are specified to be decoded. When a BLA picture has nal_unit_type equal to BLA_W_DLP, it does not have associated RASL pictures but may have associated RADL pictures, which are specified to be decoded. When a BLA picture has nal_unit_type equal to BLA_N_LP, it does not have any associated leading pictures.

An IDR picture having nal unit type equal to IDR_N_LP does not have associated leading pictures present in the bitstream. An IDR picture having nal_unit_type equal to IDR_W_LP does not have associated RASL pictures present in the bitstream, but may have associated RADL pictures in the bitstream.

When the value of nal_unit_type is equal to TRAIL_N, TSA_N, STSA_N, RADL_N, RASL_N, RSV_VCL_N10, RSV_VCL_N12, or RSV_VCL_N14, the decoded picture is not used as a reference for any other picture of the same temporal sub-layer. That is, in HEVC, when the value of nal_unit_type is equal to TRAIL_N, TSA_N, STSA_N, RADL N, RASL N, RSV VCL N10, RSV VCL N12, or RSV VCL N14, the decoded picture is not included in any of RefPicSet-StCurrBefore, RefPicSetStCurrAfter and RefPicSetLtCurr of any picture with the same value of TemporalId. A coded picture with nal unit type equal to TRAIL_N, TSA_N, STSA_N, RADL_N, RASL_N, RSV_VCL_N10, RSV_VCL_N12, or RSV_VCL_N14 may be discarded without affecting the decodability of other pictures with the same value of TemporalId.

A trailing picture may be defined as a picture that follows the associated RAP picture in output order. Any picture that is a trailing picture does not have nal_unit_type equal to RADL_N, RADL_R, RASL_N or RASL_R. Any picture that is a leading picture may be constrained to precede, in decoding order, all trailing pictures that are associated with the same RAP picture. No RASL pictures are present in the bitstream that are associated with a BLA picture having nal_unit_type equal to BLA_W_DLP or BLA_N_LP. No RADL pictures are present in the bitstream that are associated with a BLA picture having nal_unit_type equal to BLA_N_LP or that are associated with an IDR picture having nal_unit_type equal to IDR_N_LP. Any RASL picture associated with a CRA or BLA picture may be constrained to precede any RADL picture associated with the CRA or BLA picture in output order. Any RASL picture associated with a CRA picture may be constrained to follow, in output order, any other RAP picture that precedes the CRA picture in decoding order.

In HEVC there are two picture types, the TSA and STSA picture types that can be used to indicate temporal sub-layer switching points. If temporal sub-layers with TemporalId up to N had been decoded until the TSA or STSA picture (exclusive) and the TSA or STSA picture has TemporalId equal to N+1, the TSA or STSA picture enables decoding of all subsequent pictures (in decoding order) having TemporalId equal to N+1. The TSA picture type may impose restrictions on the TSA picture itself and all pictures in the same sub-layer that follow the TSA picture in decoding order. None of these pictures is allowed to use inter prediction from any picture in the same sub-layer that precedes the TSA picture in decoding order. The TSA definition may further impose restrictions on the pictures in higher sub-layers that follow the TSA picture in decoding order. None of these pictures is allowed to refer a picture that precedes the TSA picture in decoding order if that picture belongs to the same or higher sub-layer as the TSA picture. TSA pictures have TemporalId greater than 0. The STSA is similar to the TSA picture but does not impose restrictions on the pictures in higher sub-layers that follow the STSA picture in decoding order and hence enable up-switching only onto the sub-layer where the STSA picture resides.

A non-VCL NAL unit may be for example one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

Parameters that remain unchanged through a coded video sequence may be included in a sequence parameter set. In addition to the parameters that may be needed by the decoding process, the sequence parameter set may optionally contain video usability information (VUI), which includes parameters that may be important for buffering, picture output timing, rendering, and resource reservation. There are three NAL units specified in H.264/AVC to carry sequence parameter sets: the sequence parameter set NAL unit containing all the data for H.264/AVC VCL NAL units in the sequence, the sequence parameter set extension NAL unit containing the data for auxiliary coded pictures, and the subset sequence parameter set for MVC and SVC VCL NAL units. In HEVC a sequence parameter set RBSP includes parameters that can be referred to by one or more picture parameter set RBSPs or one or more SEI NAL units containing a buffering period SEI message. A picture parameter set contains such parameters that are likely to be unchanged in several coded pictures. A picture parameter set RBSP may include parameters that can be referred to by the coded slice NAL units of one or more coded pictures.

In HEVC, a video parameter set (VPS) may be defined as a syntax structure containing syntax elements that apply to zero or more entire coded video sequences as determined by the content of a syntax element found in the SPS referred to by a syntax element found in the PPS referred to by a syntax element found in each slice segment header.

A video parameter set RBSP may include parameters that can be referred to by one or more sequence parameter set RBSPs.

The relationship and hierarchy between video parameter set (VPS), sequence parameter set (SPS), and picture parameter set (PPS) may be described as follows. VPS resides one level above SPS in the parameter set hierarchy and in the context of scalability and/or 3D video. VPS may include parameters that are common for all slices across all (scalability or view) layers in the entire coded video sequence. SPS includes the parameters that are common for all slices in a particular (scalability or view) layer in the entire coded video sequence, and may be shared by multiple (scalability or view) layers. PPS includes the parameters that are common for all slices in a particular layer representation (the representation of one scalability or view layer in one access unit) and are likely to be shared by all slices in multiple layer representations.

VPS may provide information about the dependency relationships of the layers in a bitstream, as well as many other information that are applicable to all slices across all (scalability or view) layers in the entire coded video sequence. VPS may be considered to comprise two parts, the base VPS and a VPS extension, where the VPS extension may be optionally present. In HEVC, the base VPS may be considered to comprise the video_parameter_set_rbsp( ) syntax structure without the vps_extension( ) syntax structure. The video_parameter_set_rbsp( ) syntax structure was primarily specified already for HEVC version 1 and includes syntax elements which may be of use for base layer decoding. In HEVC, the VPS extension may be considered to comprise the vps_extension( ) syntax structure. The vps_extension( ) syntax structure was specified in HEVC version 2 primarily for multi-layer extensions and comprises syntax elements which may be of use for decoding of one or more non-base layers, such as syntax elements indicating layer dependency relations.

H.264/AVC and HEVC syntax allows many instances of parameter sets, and each instance is identified with a unique identifier. In order to limit the memory usage needed for parameter sets, the value range for parameter set identifiers has been limited. In H.264/AVC and HEVC, each slice header includes the identifier of the picture parameter set that is active for the decoding of the picture that contains the slice, and each picture parameter set contains the identifier of the active sequence parameter set. Consequently, the transmission of picture and sequence parameter sets does not have to be accurately synchronized with the transmission of slices. Instead, it is sufficient that the active sequence and picture parameter sets are received at any moment before they are referenced, which allows transmission of parameter sets "out-of-band" using a more reliable transmission mechanism compared to the protocols used for the slice data. For example, parameter sets can be included as a parameter in the session description for Real-time Transport Protocol (RTP) sessions. If parameter sets are transmitted in-band, they can be repeated to improve error robustness.

Out-of-band transmission, signaling or storage can additionally or alternatively be used for other purposes than tolerance against transmission errors, such as ease of access or session negotiation. For example, a sample entry of a track in a file conforming to the ISO Base Media File Format may comprise parameter sets, while the coded data in the bitstream is stored elsewhere in the file or in another file. The phrase along the bitstream (e.g. indicating along the bitstream) may be used in claims and described embodiments to refer to out-of-band transmission, signaling, or storage in a manner that the out-of-band data is associated with the bitstream. The phrase decoding along the bitstream or alike may refer to decoding the referred out-of-band data (which may be obtained from out-of-band transmission, signaling, or storage) that is associated with the bitstream.

A parameter set may be activated by a reference from a slice or from another active parameter set or in some cases from another syntax structure such as a buffering period SEI message.

A SEI NAL unit may contain one or more SEI messages, which are not required for the decoding of output pictures but may assist in related processes, such as picture output timing, rendering, error detection, error concealment, and resource reservation. Several SEI messages are specified in H.264/AVC and HEVC, and the user data SEI messages enable organizations and companies to specify SEI messages for their own use. H.264/AVC and HEVC contain the syntax and semantics for the specified SEI messages but no process for handling the messages in the recipient is defined. Consequently, encoders are required to follow the H.264/AVC standard or the HEVC standard when they create SEI messages, and decoders conforming to the H.264/AVC standard or the HEVC standard, respectively, are not required to process SEI messages for output order conformance. One of the reasons to include the syntax and semantics of SEI messages in H.264/AVC and HEVC is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

In HEVC, there are two types of SEI NAL units, namely the suffix SEI NAL unit and the prefix SEI NAL unit, having a different nal_unit_type value from each other. The SEI message(s) contained in a suffix SEI NAL unit are associated with the VCL NAL unit preceding, in decoding order, the suffix SEI NAL unit. The SEI message(s) contained in a prefix SEI NAL unit are associated with the VCL NAL unit following, in decoding order, the prefix SEI NAL unit.

A coded picture is a coded representation of a picture. A coded picture in H.264/AVC comprises the VCL NAL units that are required for the decoding of the picture. In H.264/AVC, a coded picture can be a primary coded picture or a redundant coded picture. A primary coded picture is used in the decoding process of valid bitstreams, whereas a redundant coded picture is a redundant representation that should only be decoded when the primary coded picture cannot be successfully decoded. In HEVC, no redundant coded picture has been specified.

In H.264/AVC, an access unit (AU) comprises a primary coded picture and those NAL units that are associated with it. In H.264/AVC, the appearance order of NAL units within an access unit is constrained as follows. An optional access unit delimiter NAL unit may indicate the start of an access unit. It is followed by zero or more SEI NAL units. The coded slices of the primary coded picture appear next. In H.264/AVC, the coded slice of the primary coded picture may be followed by coded slices for zero or more redundant coded pictures. A redundant coded picture is a coded representation of a picture or a part of a picture. A redundant coded picture may be decoded if the primary coded picture is not received by the decoder for example due to a loss in transmission or a corruption in physical storage medium.

In H.264/AVC, an access unit may also include an auxiliary coded picture, which is a picture that supplements the primary coded picture and may be used for example in the display process. An auxiliary coded picture may for example be used as an alpha channel or alpha plane specifying the transparency level of the samples in the decoded pictures. An alpha channel or plane may be used in a layered composition or rendering system, where the output picture is formed by overlaying pictures being at least partly transparent on top of each other. An auxiliary coded picture has the same syntactic and semantic restrictions as a monochrome redundant coded picture. In H.264/AVC, an auxiliary coded picture contains the same number of macroblocks as the primary coded picture.

In HEVC, a coded picture may be defined as a coded representation of a picture containing all coding tree units of the picture. In HEVC, an access unit (AU) may be defined as a set of NAL units that are associated with each other according to a specified classification rule, are consecutive in decoding order, and contain at most one picture with any specific value of nuh layer id. In addition to containing the VCL NAL units of the coded picture, an access unit may also contain non-VCL NAL units.

Said specified classification rule may be specified for example as follows. The first access unit in the bitstream starts with the first NAL unit of the bitstream. A VCL NAL unit is the first VCL NAL unit of an access unit, when all of the following conditions are true:

- The slice contained in the VCL NAL units is the first slice of a coded picture, which in HEVC is equivalent to the condition that first_slice_segment_in_pic_flag is equal to 1.
- The previous coded picture in decoding order belongs to a difference access unit, which in HEVC multi-layer extensions correspond to at least one of the following conditions being true:

  ○ The previous picture in decoding order belongs to a different POC resetting period than the picture containing the VCL NAL unit.
  ○ PicOrderCntVal derived for the VCL NAL unit differs from the PicOrderCntVal of the previous picture in decoding order.

The first of the NAL units that are allowed, by NAL unit specifications, to appear in the access unit before the first VCL NAL unit firstVclNalUnitInAu of the access unit in decoding order and that follows the last VCL NAL unit of the preceding access unit, in decoding order, starts the access unit. In HEVC, the first of any of the following NAL units preceding the first VCL NAL unit firstVclNalUnitInAu and succeeding the last VCL NAL unit preceding firstVclNalUnitInAu, if any, specifies the start of a new access unit:

- Access unit delimiter NAL unit (when present).
- VPS NAL unit (when present)
- SPS NAL unit (when present)
- PPS NAL unit (when present)
- Prefix SEI NAL unit (when present)
- NAL units with nal_unit_type in the range of RSV_NVCL41..RSV_NVCL44 (when present)
- NAL units with nal_unit_type in the range of UNSPEC48..UNSPEC55 (when present) When there is none of the above NAL units preceding firstVclNalUnitInAu and succeeding the last VCL NAL unit preceding firstVclNalUnitInAu, if any, firstVclNalUnitInAu starts a new access unit.

It may be required that coded pictures appear in certain order within an access unit. For example a coded picture with nuh_layer_id equal to nuhLayerIdA may be required to precede, in decoding order, all coded pictures with nuh layer id greater than nuhLayerIdA in the same access unit.

It may be required that the order of the coded pictures and non-VCL NAL units within an access unit obeys certain constraint such as the following specified for HEVC multi-layer extensions:

- When an access unit delimiter NAL unit is present, it shall be the first NAL unit. There shall be at most one access unit delimiter NAL unit in any access unit.
- When any VPS NAL units, SPS NAL units, PPS NAL units, prefix SEI NAL units, NAL units with nal_unit_type in the range of RSV_NVCL41..RSV_NVCL44, or NAL units with nal_unit_type in the range of UNSPEC48..UNSPEC55 are present, they shall not follow the last VCL NAL unit of the access unit.
- NAL units having nal_unit_type equal to FD_NUT or SUFFIX_SEI_NUT, or in the range of RSV_NVCL45..RSV_NVCL47 or UNSPEC56..UNSPEC63 shall not precede the first VCL NAL unit of the access unit.
- When an end of sequence NAL unit with nuh_layer_id nuhLayerId is present, it shall be the last NAL unit with nuh layer id equal to nuhLayerId in the access unit other than an end of bitstream NAL unit (when present).
- When an end of bitstream NAL unit is present, it shall be the last NAL unit in the access unit.

In HEVC, a picture unit may be defined as a set of NAL units that contain all VCL NAL units of a coded picture and their associated non-VCL NAL units. An associated VCL NAL unit for a non-VCL NAL unit may be defined as the preceding VCL NAL unit, in decoding order, of the non-VCL NAL unit for certain types of non-VCL NAL units and the next VCL NAL unit, in decoding order, of the non-VCL NAL unit for other types of non-VCL NAL units. An associated non-VCL NAL unit for a VCL NAL unit may be defined to be the a non-VCL NAL unit for which the VCL NAL unit is the associated VCL NAL unit. For example, in HEVC, an associated VCL NAL unit may be defined as the preceding VCL NAL unit in decoding order for a non-VCL NAL unit with nal_unit_type equal to EOS_NUT, EOB_NUT, FD_NUT, or SUFFIX_SEI_NUT, or in the ranges of RSV_NVCL45..RSV_NVCL47 or UNSPEC56..UNSPEC63; or otherwise the next VCL NAL unit in decoding order.

A bitstream may be defined as a sequence of bits, in the form of a NAL unit stream or a byte stream, that forms the representation of coded pictures and associated data forming one or more coded video sequences. A first bitstream may be followed by a second bitstream in the same logical channel, such as in the same file or in the same connection of a communication protocol. An elementary stream (in the context of video coding) may be defined as a sequence of one or more bitstreams. The end of the first bitstream may be indicated by a specific NAL unit, which may be referred to as the end of bitstream (EOB) NAL unit and which is the last NAL unit of the bitstream. In HEVC and its current draft extensions, the EOB NAL unit is required to have nuh layer id equal to 0.

In H.264/AVC, a coded video sequence is defined to be a sequence of consecutive access units in decoding order from an IDR access unit, inclusive, to the next IDR access unit, exclusive, or to the end of the bitstream, whichever appears earlier.

In HEVC, a coded video sequence (CVS) may be defined, for example, as a sequence of access units that consists, in decoding order, of an IRAP access unit with NoRaslOutputFlag equal to 1, followed by zero or more access units that are not IRAP access units with NoRaslOutputFlag equal to 1, including all subsequent access units up to but not including any subsequent access unit that is an IRAP access unit with NoRaslOutputFlag equal to 1. An IRAP access unit may be defined as an access unit in which the base layer picture is an IRAP picture. The value of NoRaslOutputFlag is equal to 1 for each IDR picture, each BLA picture, and each IRAP picture that is the first picture in that particular layer in the bitstream in decoding order, is the first IRAP picture that follows an end of sequence NAL unit having the same value of nuh_layer_id in decoding order. In multi-layer HEVC, the value of NoRaslOutputFlag is equal to 1 for each IRAP picture when its nuh_layer_id is such that LayerInitializedFlag[nuh_layer_id] is equal to 0 and LayerInitializedFlag[refLayerId] is equal to 1 for all values of refLayerIdequal to IdDirectRefLayer[nuh_layer_id][j], where j is in the range of 0 to NumDirectRefLayers[nuh_layer_id] - 1, inclusive. Otherwise, the value of NoRaslOutputFlag is equal to HandleCraAsBlaFlag. NoRaslOutputFlag equal to 1 has an impact that the RASL pictures associated with the IRAP picture for which the NoRaslOutputFlag is set are not output by the decoder. There may be means to provide the value of HandleCraAsBlaFlag to the decoder from an external entity, such as a player or a receiver, which may control the decoder. Handle-CraAsBlaFlag may be set to 1 for example by a player that seeks to a new position in a bitstream or tunes into a broadcast and starts decoding and then starts decoding from a CRA picture. When HandleCraAsBlaFlag is equal to 1 for a CRA picture, the CRA picture is handled and decoded as if it were a BLA picture.

In HEVC, a coded video sequence may additionally or alternatively (to the specification above) be specified to end, when a specific NAL unit, which may be referred to as an end of sequence (EOS) NAL unit, appears in the bitstream and has nuh layer id equal to 0.

In HEVC, a coded video sequence group (CVSG) may be defined, for example, as one or more consecutive CVSs in decoding order that collectively consist of an IRAP access unit that activates a VPS RBSP firstVpsRbsp that was not already active followed by all subsequent access units, in decoding order, for which firstVpsRbsp is the active VPS RBSP up to the end of the bitstream or up to but excluding the access unit that activates a different VPS RBSP than firstVpsRbsp, whichever is earlier in decoding order.

A group of pictures (GOP) and its characteristics may be defined as follows. A GOP can be decoded regardless of whether any previous pictures were decoded. An open GOP is such a group of pictures in which pictures preceding the initial intra picture in output order might not be correctly decodable when the decoding starts from the initial intra picture of the open GOP. In other words, pictures of an open GOP may refer (in inter prediction) to pictures belonging to a previous GOP. An HEVC decoder can recognize an intra picture starting an open GOP, because a specific NAL unit type, CRA NAL unit type, may be used for its coded slices. A closed GOP is such a group of pictures in which all pictures can be correctly decoded when the decoding starts from the initial intra picture of the closed GOP. In other words, no picture in a closed GOP refers to any pictures in previous GOPs. In H.264/AVC and HEVC, a closed GOP may start from an IDR picture. In HEVC a closed GOP may also start from a BLA W RADL or a BLA N LP picture. An open GOP coding structure is potentially more efficient in the compression compared to a closed GOP coding structure, due to a larger flexibility in selection of reference pictures.

A Structure of Pictures (SOP) may be defined as one or more coded pictures consecutive in decoding order, in which the first coded picture in decoding order is a reference picture at the lowest temporal sub-layer and no coded picture except potentially the first coded picture in decoding order is a RAP picture. All pictures in the previous SOP precede in decoding order all pictures in the current SOP and all pictures in the next SOP succeed in decoding order all pictures in the current SOP. A SOP may represent a hierarchical and repetitive inter prediction structure. The term group of pictures (GOP) may sometimes be used interchangeably with the term SOP and having the same semantics as the semantics of SOP.

The bitstream syntax of H.264/AVC and HEVC indicates whether a particular picture is a reference picture for inter prediction of any other picture. Pictures of any coding type (I, P, B) can be reference pictures or non-reference pictures in H.264/AVC and HEVC.

H.264/AVC specifies the process for decoded reference picture marking in order to control the memory consumption in the decoder. The maximum number of reference pictures used for inter prediction, referred to as M, is determined in the sequence parameter set. When a reference picture is decoded, it is marked as "used for reference". If the decoding of the reference picture caused more than M pictures marked as "used for reference", at least one picture is marked as "unused for reference". There are two types of operation for decoded reference picture marking: adaptive memory control and sliding window. The operation mode for decoded reference picture marking is selected on picture basis. The adaptive memory control enables explicit signaling which pictures are marked as "unused for reference" and may also assign long-term indices to short-term reference pictures. The adaptive memory control may require the presence of memory management control operation (MMCO) parameters in the bitstream. MMCO parameters may be included in a decoded reference picture marking syntax structure. If the sliding window operation mode is in use and there are M pictures marked as "used for reference", the short-term reference picture that was the first decoded picture among those short-term reference pictures that are marked as "used for reference" is marked as "unused for reference". In other words, the sliding window operation mode results into first-in-first-out buffering operation among short-term reference pictures.

One of the memory management control operations in H.264/AVC causes all reference pictures except for the current picture to be marked as "unused for reference". An instantaneous decoding refresh (IDR) picture contains only intra-coded slices and causes a similar "reset" of reference pictures.

In HEVC, reference picture marking syntax structures and related decoding processes are not used, but instead a reference picture set (RPS) syntax structure and decoding process are used instead for a similar purpose. A reference picture set valid or active for a picture includes all the reference pictures used as reference for the picture and all the reference pictures that are kept marked as "used for reference" for any subsequent pictures in decoding order. There are six subsets of the reference picture set, which are referred to as namely RefPicSetStCurr0 (a.k.a. RefPicSetStCurrBefore), RefPicSetStCurr1 (a.k.a. RefPicSetStCurrAfter), RefPicSetStFoll0, RefPicSetStFoll1, RefPicSetLtCurr, and RefPicSetLtFoll. RefPicSetStFoll0 and RefPicSetStFoll1 may also be considered to form jointly one subset RefPicSetStFoll. The notation of the six subsets is as follows. "Curr" refers to reference pictures that are included in the reference picture lists of the current picture and hence may be used as inter prediction reference for the current picture. "Foll" refers to reference pictures that are not included in the reference picture lists of the current picture but may be used in subsequent pictures in decoding order as reference pictures. "St" refers to short-term reference pictures, which may generally be identified through a certain number of least significant bits of their POC value. "Lt" refers to long-term reference pictures, which are specifically identified and generally have a greater difference of POC values relative to the current picture than what can be represented by the mentioned certain number of least significant bits. "0" refers to those reference pictures that have a smaller POC value than that of the current picture. "1" refers to those reference pictures that have a greater POC value than that of the current picture. RefPicSetStCurr0, RefPicSetStCurr1, RefPicSetStFoll0 and RefPicSetStFoll1 are collectively referred to as the short-term subset of the reference picture set. RefPicSetLtCurr and RefPicSetLtFoll are collectively referred to as the long-term subset of the reference picture set.

In HEVC, a reference picture set may be specified in a sequence parameter set and taken into use in the slice header through an index to the reference picture set. A reference picture set may also be specified in a slice header. A reference picture set may be coded independently or may be predicted from another reference picture set (known as inter-RPS prediction). In both types of reference picture set coding, a flag (used_by_curr_pic_X_flag) is additionally sent for each reference picture indicating whether the reference picture is used for reference by the current picture (included in a *Curr list) or not (included in a *Foll list). Pictures that are included in the reference picture set used by the current slice are marked as "used for reference", and pictures that are not in the reference picture set used by the current slice are marked as "unused for reference". If the current picture is an IDR picture, RefPicSetStCurr0, RefPicSetStCurr1, RefPicSetStFoll0, RefPicSetStFoll1, RefPicSetLtCurr, and RefPicSetLtFoll are all set to empty.

A Decoded Picture Buffer (DPB) may be used in the encoder and/or in the decoder. There are two reasons to buffer decoded pictures, for references in inter prediction and for reordering decoded pictures into output order. As H.264/AVC and HEVC provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

In many coding modes of H.264/AVC and HEVC, the reference picture for inter prediction is indicated with an index to a reference picture list. The index may be coded with variable length coding, which usually causes a smaller index to have a shorter value for the corresponding syntax element. In H.264/AVC and HEVC, two reference picture lists (reference picture list 0 and reference picture list 1) are generated for each bi-predictive (B) slice, and one reference picture list (reference picture list 0) is formed for each inter-coded (P) slice.

A reference picture list, such as reference picture list 0 and reference picture list 1, is typically constructed in two steps: First, an initial reference picture list is generated. The initial reference picture list may be generated for example on the basis of frame_num, POC, temporal_id (or TemporalId or alike), or information on the prediction hierarchy such as GOP structure, or any combination thereof. Second, the initial reference picture list may be reordered by reference picture list reordering (RPLR) commands, also known as reference picture list modification syntax structure, which may be contained in slice headers. In H.264/AVC, the RPLR commands indicate the pictures that are ordered to the beginning of the respective reference picture list. This second step may also be referred to as the reference picture list modification process, and the RPLR commands may be included in a reference picture list modification syntax structure. If reference picture sets are used, the reference picture list 0 may be initialized to contain RefPicSetStCurr0 first, followed by RefPicSetStCurr1, followed by RefPicSetLtCurr. Reference picture list 1 may be initialized to contain RefPicSetStCurr1 first, followed by RefPicSetStCurr0. In HEVC, the initial reference picture lists may be modified through the reference picture list modification syntax structure, where pictures in the initial reference picture lists may be identified through an entry index to the list. In other words, in HEVC, reference picture list modification is encoded into a syntax structure comprising a loop over each entry in the final reference picture list, where each loop entry is a fixed-length coded index to the initial reference picture list and indicates the picture in ascending position order in the final reference picture list.

Many coding standards, including H.264/AVC and HEVC, may have decoding process to derive a reference picture index to a reference picture list, which may be used to indicate which one of the multiple reference pictures is used for inter prediction for a particular block. A reference picture index may be coded by an encoder into the bitstream is some inter coding modes or it may be derived (by an encoder and a decoder) for example using neighboring blocks in some other inter coding modes.

In order to represent motion vectors efficiently in bitstreams, motion vectors may be coded differentially with respect to a block-specific predicted motion vector. In many video codecs, the predicted motion vectors are created in a predefined way, for example by calculating the median of the encoded or decoded motion vectors of the adjacent blocks. Another way to create motion vector predictions, sometimes referred to as advanced motion vector prediction (AMVP), is to generate a list of candidate predictions from adjacent blocks and/or co-located blocks in temporal reference pictures and signalling the chosen candidate as the motion vector predictor. In addition to predicting the motion vector values, the reference index of previously coded/decoded picture can be predicted. The reference index is typically predicted from adjacent blocks and/or co-located blocks in temporal reference picture. Differential coding of motion vectors is typically disabled across slice boundaries.

Scalable video coding may refer to coding structure where one bitstream can contain multiple representations of the content, for example, at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A meaningful decoded representation can be produced by decoding only certain parts of a scalable bit stream. A scalable bitstream typically consists of a "base layer" providing the lowest quality video available and one or more enhancement layers that enhance the video quality when received and decoded together with the lower layers. In order to improve coding efficiency for the enhancement layers, the coded representation of that layer typically depends on the lower layers. E.g. the motion and mode information of the enhancement layer can be predicted from lower layers. Similarly the pixel data of the lower layers can be used to create prediction for the enhancement layer.

In some scalable video coding schemes, a video signal can be encoded into a base layer and one or more enhancement layers. An enhancement layer may enhance, for example, the temporal resolution (i.e., the frame rate), the spatial resolution, or simply the quality of the video content represented by another layer or part thereof. Each layer together with all its dependent layers is one representation of the video signal, for example, at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

Scalability modes or scalability dimensions may include but are not limited to the following:

- Quality scalability: Base layer pictures are coded at a lower quality than enhancement layer pictures, which may be achieved for example using a greater quantization parameter value (i.e., a greater quantization step size for transform coefficient quantization) in the base layer than in the enhancement layer. Quality scalability may be further categorized into fine-grain or fine-granularity scalability (FGS), medium-grain or medium-granularity scalability (MGS), and/or coarse-grain or coarse-granularity scalability (CGS), as described below.
- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.
- Bit-depth scalability: Base layer pictures are coded at lower bit-depth (e.g. 8 bits) than enhancement layer pictures (e.g. 10 or 12 bits).
- Dynamic range scalability: Scalable layers represent a different dynamic range and/or images obtained using a different tone mapping function and/or a different optical transfer function.
- Chroma format scalability: Base layer pictures provide lower spatial resolution in chroma sample arrays (e.g. coded in 4:2:0 chroma format) than enhancement layer pictures (e.g. 4:4:4 format).
- Color gamut scalability: enhancement layer pictures have a richer/broader color representation range than that of the base layer pictures - for example the enhancement layer may have UHDTV (ITU-R BT.2020) color gamut and the base layer may have the ITU-R BT.709 color gamut.
- View scalability, which may also be referred to as multiview coding. The base layer represents a first view, whereas an enhancement layer represents a second view.
- Depth scalability, which may also be referred to as depth-enhanced coding. A layer or some layers of a bitstream may represent texture view(s), while other layer or layers may represent depth view(s).
- Region-of-interest scalability (as described below).
- Interlaced-to-progressive scalability (also known as field-to-frame scalability): coded interlaced source content material of the base layer is enhanced with an enhancement layer to represent progressive source content. The coded interlaced source content in the base layer may comprise coded fields, coded frames representing field pairs, or a mixture of them. In the interlace-to-progressive scalability, the base-layer picture may be resampled so that it becomes a suitable reference picture for one or more enhancement-layer pictures.
- Hybrid codec scalability (also known as coding standard scalability): In hybrid codec scalability, the bitstream syntax, semantics and decoding process of the base layer and the enhancement layer are specified in different video coding standards. Thus, base layer pictures are coded according to a different coding standard or format than enhancement layer pictures. For example, the base layer may be coded with H.264/AVC and an enhancement layer may be coded with an HEVC multi-layer extension.

It should be understood that many of the scalability types may be combined and applied together. For example color gamut scalability and bit-depth scalability may be combined.

SHVC enables the use of weighted prediction or a color-mapping process based on a 3D lookup table (LUT) for color gamut scalability. The 3D LUT approach may be described as follows. The sample value range of each color components may be first split into two ranges, forming up to 2x2x2 octants, and then the luma ranges can be further split up to four parts, resulting into up to 8x2x2 octants. Within each octant, a cross color component linear model is applied to perform color mapping. For each octant, four vertices are encoded into and/or decoded from the bitstream to represent a linear model within the octant. The color-mapping table is encoded into and/or decoded from the bitstream separately for each color component. Color mapping may be considered to involve three steps: First, the octant to which a given reference-layer sample triplet (Y, Cb, Cr) belongs is determined. Second, the sample locations of luma and chroma may be aligned through applying a color component adjustment process. Third, the linear mapping specified for the determined octant is applied. The mapping may have cross-component nature, i.e. an input value of one color component may affect the mapped value of another color component. Additionally, if inter-layer resampling is also required, the input to the resampling process is the picture that has been color-mapped. The color-mapping may (but needs not to) map samples of a first bit-depth to samples of another bit-depth.

The term layer may be used in context of any type of scalability, including view scalability and depth enhancements. An enhancement layer may refer to any type of an enhancement, such as SNR, spatial, multiview, depth, bit-depth, chroma format, and/or color gamut enhancement. A base layer may refer to any type of a base video sequence, such as a base view, a base layer for SNR/spatial scalability, or a texture base view for depth-enhanced video coding.

Various technologies for providing three-dimensional (3D) video content are currently investigated and developed. It may be considered that in stereoscopic or two-view video, one video sequence or view is presented for the left eye while a parallel view is presented for the right eye. More than two parallel views may be needed for applications which enable viewpoint switching or for autostereoscopic displays which may present a large number of views simultaneously and let the viewers to observe the content from different viewpoints.

A view may be defined as a sequence of pictures representing one camera or viewpoint. The pictures representing a view may also be called view components. In other words, a view component may be defined as a coded representation of a view in a single access unit. In multiview video coding, more than one view is coded in a bitstream. Since views are typically intended to be displayed on stereoscopic or multiview autostrereoscopic display or to be used for other 3D arrangements, they typically represent the same scene and are content-wise partly overlapping although representing different viewpoints to the content. Hence, inter-view prediction may be utilized in multiview video coding to take advantage of inter-view correlation and improve compression efficiency. One way to realize inter-view prediction is to include one or more decoded pictures of one or more other views in the reference picture list(s) of a picture being coded or decoded residing within a first view. View scalability may refer to such multiview video coding or multiview video bitstreams, which enable removal or omission of one or more coded views, while the resulting bitstream remains conforming and represents video with a smaller number of views than originally.

Some scalable video coding schemes may require IRAP pictures to be aligned across layers in a manner that either all pictures in an access unit are IRAP pictures or no picture in an access unit is an IRAP picture. Other scalable video coding schemes, such as the multi-layer extensions of HEVC, may allow IRAP pictures that are not aligned, i.e. that one or more pictures in an access unit are IRAP pictures, while one or more other pictures in an access unit are not IRAP pictures. Scalable bitstreams with IRAP pictures or similar that are not aligned across layers may be used for example for providing more frequent IRAP pictures in the base layer, where they may have a smaller coded size due to e.g. a smaller spatial resolution. A process or mechanism for layer-wise start-up of the decoding may be included in a video decoding scheme. Decoders may hence start decoding of a bitstream when a base layer contains an IRAP picture and step-wise start decoding other layers when they contain IRAP pictures. In other words, in a layer-wise start-up of the decoding mechanism or process, decoders progressively increase the number of decoded layers (where layers may represent an enhancement in spatial resolution, quality level, views, additional components such as depth, or a combination) as subsequent pictures from additional enhancement layers are decoded in the decoding process. The progressive increase of the number of decoded layers may be perceived for example as a progressive improvement of picture quality (in case of quality and spatial scalability).

A layer-wise start-up mechanism may generate unavailable pictures for the reference pictures of the first picture in decoding order in a particular enhancement layer. Alternatively, a decoder may omit the decoding of pictures preceding, in decoding order, the IRAP picture from which the decoding of a layer can be started. These pictures that may be omitted may be specifically labeled by the encoder or another entity within the bitstream. For example, one or more specific NAL unit types may be used for them. These pictures, regardless of whether they are specifically marked with a NAL unit type or inferred e.g. by the decoder, may be referred to as cross-layer random access skip (CL-RAS) pictures. The decoder may omit the output of the generated unavailable pictures and the decoded CL-RAS pictures.

A sender, a gateway, a client, or another entity may select the transmitted layers and/or sub-layers of a scalable video bitstream. Terms layer extraction, extraction of layers, or layer down-switching may refer to transmitting fewer layers than what is available in the bitstream received by the sender, the gateway, the client, or another entity. Layer up-switching may refer to transmitting additional layer(s) compared to those transmitted prior to the layer up-switching by the sender, the gateway, the client, or another entity, i.e. restarting the transmission of one or more layers whose transmission was ceased earlier in layer down-switching. Similarly to layer down-switching and/or up-switching, the sender, the gateway, the client, or another entity may perform down- and/or up-switching of temporal sub-layers. The sender, the gateway, the client, or another entity may also perform both layer and sub-layer down-switching and/or up-switching. Layer and sub-layer down-switching and/or up-switching may be carried out in the same access unit or alike (i.e. virtually simultaneously) or may be carried out in different access units or alike (i.e. virtually at distinct times).

Scalability may be enabled in two basic ways. Either by introducing new coding modes for performing prediction of pixel values or syntax from lower layers of the scalable representation or by placing the lower layer pictures to a reference picture buffer (e.g. a decoded picture buffer, DPB) of the higher layer. The first approach may be more flexible and thus may provide better coding efficiency in most cases. However, the second, reference frame based scalability, approach may be implemented efficiently with minimal changes to single layer codecs while still achieving majority of the coding efficiency gains available. Essentially a reference frame based scalability codec may be implemented by utilizing the same hardware or software implementation for all the layers, just taking care of the DPB management by external means.

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit-depth of the enhancement layer and/or the sample values may undergo a mapping from the color space of the reference layer to the color space of the enhancement layer.

A scalable video coding and/or decoding scheme may use multi-loop coding and/or decoding, which may be characterized as follows. In the encoding/decoding, a base layer picture may be reconstructed/decoded to be used as a motion-compensation reference picture for subsequent pictures, in coding/decoding order, within the same layer or as a reference for inter-layer (or inter-view or inter-component) prediction. The reconstructed/decoded base layer picture may be stored in the DPB. An enhancement layer picture may likewise be reconstructed/decoded to be used as a motion-compensation reference picture for subsequent pictures, in coding/decoding order, within the same layer or as reference for inter-layer (or inter-view or inter-component) prediction for higher enhancement layers, if any. In addition to reconstructed/decoded sample values, syntax element values of the base/reference layer or variables derived from the syntax element values of the base/reference layer may be used in the inter-layer/inter-component/inter-view prediction.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

In some cases, data in an enhancement layer can be truncated after a certain location, or even at arbitrary positions, where each truncation position may include additional data representing increasingly enhanced visual quality. Such scalability is referred to as fine-grained (granularity) scalability (FGS).

Similarly to MVC, in MV-HEVC, inter-view reference pictures can be included in the reference picture list(s) of the current picture being coded or decoded. SHVC uses multi-loop decoding operation (unlike the SVC extension of H.264/AVC). SHVC may be considered to use a reference index based approach, i.e. an inter-layer reference picture can be included in a one or more reference picture lists of the current picture being coded or decoded (as described above).

For the enhancement layer coding, the concepts and coding tools of HEVC base layer may be used in SHVC, MV-HEVC, and/or alike. However, the additional inter-layer prediction tools, which employ already coded data (including reconstructed picture samples and motion parameters a.k.a motion information) in reference layer for efficiently coding an enhancement layer, may be integrated to SHVC, MV-HEVC, and/or alike codec.

A texture view refers to a view that represents ordinary video content, for example has been captured using an ordinary camera, and is usually suitable for rendering on a display. A texture view typically comprises pictures having three components, one luma component and two chroma components. In the following, a texture picture typically comprises all its component pictures or color components unless otherwise indicated for example with terms luma texture picture and chroma texture picture.

A depth view refers to a view that represents distance information of a texture sample from the camera sensor, disparity or parallax information between a texture sample and a respective texture sample in another view, or similar information. A depth view may comprise depth pictures (a.k.a. depth maps) having one component, similar to the luma component of texture views. In some cases, chroma components or sample arrays may also be present, although decoded chroma sample arrays may be required to have a certain sample value and decoding of the chroma sample arrays may be ignored. A depth map is an image with per-pixel depth information, disparity of respectively pixels in two views, or similar. For example, each sample in a depth map represents the distance of the respective texture sample or samples from the plane on which the camera lies. In other words, if the z axis is along the shooting axis of the cameras (and hence orthogonal to the plane on which the cameras lie), a sample in a depth map represents the value on the z axis.

Depth-enhanced video refers to texture video having one or more views associated with depth video having one or more depth views. A number of approaches may be used for representing of depth-enhanced video, including the use of video plus depth (V+D), and multiview video plus depth (MVD). In the video plus depth (V+D) representation, a single view of texture and the respective view of depth are represented as sequences of texture picture and depth pictures, respectively. The MVD representation contains a number of texture views and respective depth views. The depth information may be used in so-called depth-image-based rendering to synthesize texture views at viewpoints not represented by any of the coded texture views.

A texture view component may be defined as a coded representation of the texture of a view in a single access unit. A texture view component in depth-enhanced video bitstream may be coded in a manner that is compatible with a single-view texture bitstream or a multi-view texture bitstream so that a single-view or multi-view decoder can decode the texture views even if it has no capability to decode depth views. For example, an H.264/AVC decoder may decode a single texture view from a depth-enhanced H.264/AVC bitstream. A texture view component may alternatively be coded in a manner that a decoder capable of single-view or multi-view texture decoding, such H.264/AVC or MVC decoder, is not able to decode the texture view component for example because it uses depth-based coding tools. A depth view component may be defined as a coded representation of the depth of a view in a single access unit. A view component pair may be defined as a texture view component and a depth view component of the same view within the same access unit. A texture view component may also be called a texture picture or a picture of a texture view or layer, and a depth view component may also be called a depth picture or a picture of a depth view or layer.

Depth-enhanced video may be coded in a manner where texture and depth are coded independently of each other. For example, texture views may be coded as one MVC bitstream and depth views may be coded as another MVC bitstream. Depth-enhanced video may also be coded in a manner where texture and depth are jointly coded. In a form of a joint coding of texture and depth views, some decoded samples of a texture picture or data elements for decoding of a texture picture are predicted or derived from some decoded samples of a depth picture or data elements obtained in the decoding process of a depth picture. Alternatively or in addition, some decoded samples of a depth picture or data elements for decoding of a depth picture are predicted or derived from some decoded samples of a texture picture or data elements obtained in the decoding process of a texture picture. In another option, coded video data of texture and coded video data of depth are not predicted from each other or one is not coded/decoded on the basis of the other one, but coded texture and depth view may be multiplexed into the same bitstream in the encoding and demultiplexed from the bitstream in the decoding. In yet another option, while coded video data of texture is not predicted from coded video data of depth in e.g. below slice layer, some of the high-level coding structures of texture views and depth views may be shared or predicted from each other. For example, a slice header of coded depth slice may be predicted from a slice header of a coded texture slice. Moreover, some of the parameter sets may be used by both coded texture views and coded depth views.

Depth-enhanced video formats enable generation of virtual views or pictures at camera positions that are not represented by any of the coded views. Generally, any depth-image-based rendering (DIBR) algorithm may be used for synthesizing views.

The input of a 3D video codec may comprise for example a stereoscopic video and corresponding depth information with stereoscopic baseline b0. Then the 3D video codec synthesizes a number of virtual views between two input views with baseline (bi < b0). DIBR algorithms may also enable extrapolation of views that are outside the two input views and not in between them. Similarly, DIBR algorithms may enable view synthesis from a single view of texture and the respective depth view. However, in order to enable DIBR-based multiview rendering, texture data should be available at the decoder side along with the corresponding depth data.

In such 3DV system, depth information is produced at the encoder side in a form of depth pictures (also known as depth maps) for texture views.

Depth information can be obtained by various means. For example, depth of the 3D scene may be computed from the disparity registered by capturing cameras or color image sensors. A depth estimation approach, which may also be referred to as stereo matching, takes a stereoscopic view as an input and computes local disparities between the two offset images of the view. Since the two input views represent different viewpoints or perspectives, the parallax creates a disparity between the relative positions of scene points on the imaging planes depending on the distance of the points. A target of stereo matching is to extract those disparities by finding or detecting the corresponding points between the images. Several approaches for stereo matching exist. For example, in a block or template matching approach each image is processed pixel by pixel in overlapping blocks, and for each block of pixels a horizontally localized search for a matching block in the offset image is performed. Once a pixel-wise disparity is computed, the corresponding depth value z can be calculated e.g. by equation (1):

$$z = \frac{f \cdot b}{d + \Delta d} \qquad (1),$$

where f is the focal length of the camera and b is the baseline distance between cameras. Further, d may be considered to refer to the disparity observed between the two cameras or the disparity estimated between corresponding pixels in the two cameras. The camera offset $\Delta d$ may be considered to reflect a possible horizontal misplacement of the optical centers of the two cameras or a possible horizontal cropping in the camera frames due to pre-processing. However, since the algorithm is based on block matching, the quality of a depth-through-disparity estimation is content dependent and very often not accurate. For example, no straightforward solution for depth estimation is possible for image fragments that are featuring very smooth areas with no textures or large level of noise.

Alternatively or in addition to the above-described stereo view depth estimation, the depth value may be obtained using the time-of-flight (TOF) principle for example by using a camera which may be provided with a light source, for example an infrared emitter, for illuminating the scene. Such an illuminator may be arranged to produce an intensity modulated electromagnetic emission for a frequency between e.g. 10-100 MHz, which may require LEDs or laser diodes to be used. Infrared light may be used to make the illumination unobtrusive. The light reflected from objects in the scene is detected by an image sensor, which may be modulated synchronously at the same frequency as the illuminator. The image sensor may be provided with optics; a lens gathering the reflected light and an optical bandpass filter for passing only the light with the same wavelength as the illuminator, thus helping to suppress background light. The image sensor may measure for each pixel the time the light has taken to travel from the illuminator to the object and back. The distance to the object may be represented as a phase shift in the illumination modulation, which can be determined from the sampled data simultaneously for each pixel in the scene.

Alternatively or in addition to the above-described stereo view depth estimation and/or TOF-principle depth sensing, depth values may be obtained using a structured light approach which may operate for example approximately as follows. A light emitter, such as an infrared laser emitter or an infrared LED emitter, may emit light that may have a certain direction in a 3D space (e.g. follow a raster-scan or a pseudo-random scanning order) and/or position within an array of light emitters as well as a certain pattern, e.g. a certain wavelength and/or amplitude pattern. The emitted light is reflected back from objects and may be captured using a sensor, such as an infrared image sensor. The image/signals obtained by the sensor may be processed in relation to the direction of the emitted light as well as the pattern of the emitted light to detect a correspondence between the received signal and the direction/position of the emitted lighted as well as the pattern of the emitted light for example using a triangulation principle. From this correspondence a distance and a position of a pixel may be concluded.

It is to be understood that the above-described depth estimation and sensing methods are provided as non-limiting examples and embodiments may be realized with the described or any other depth estimation and sensing methods and apparatuses.

Disparity or parallax maps, such as parallax maps specified in ISO/IEC International Standard 23002-3, may be processed similarly to depth maps. Depth and disparity have a straightforward correspondence and they can be computed from each other through mathematical equation.

Texture views and depth views may be coded into a single bitstream where some of the texture views may be compatible with one or more video standards such as H.264/AVC and/or MVC. In other words, a decoder may be able to decode some of the texture views of such a bitstream and can omit the remaining texture views and depth views.

An amendment has been specified for the H.264/AVC for depth map coding. The amendment is called MVC extension for inclusion of depth maps and may be referred to as MVC+D. The MVC+D amendment specifies the encapsulation of texture views and depth views into the same bitstream in a manner that the texture views remain compatible with H.264/AVC and MVC so that an MVC decoder is able to decode all texture views of an MVC+D bitstream and an H.264/AVC decoder is able to decode the base texture view of an MVC+D bitstream. Furthermore, the VCL NAL units of the depth view use identical syntax, semantics, and decoding process to those of texture views below the NAL unit header.

Another amendment has been specified for the H.264/AVC for enhanced texture and depth map coding, which may be referred to as 3D-AVC. The 3D-AVC amendment comprises specific 3D video coding tools, such as view synthesis prediction. Encoders may choose to encode non-base depth views in a way conforming to MVC+D or to 3D-AVC. Likewise, encoders may choose to encode non-base texture views in a way conforming to MVC (and hence also to MVC+D) or to 3D-AVC.

Free-viewpoint navigation may refer to applications or services where an end-user has the ability to freely navigate around and through the scene which was acquired or captured by a set of cameras. The cameras may but need not form a systematical camera array, such as a parallel 1D camera array. Moreover, the cameras may but need not be located in a manner that suits content generation for stereoscopic or multiview autostereoscopic displays. For example, the cameras may form a sparse set of more than 10 cameras, arbitrarily arranged, with a wider baseline than typically used for stereoscopic video content generation for stereoscopic displays.

Specific end-user equipment may be used for the free-viewpoint navigation application or service. For example, Oculus Rift or similar virtual reality headset may be used. The headset may track head and/or eye movement and display a viewpoint accordingly. The headset may be capable of stereoscopic content viewing. However, free-viewpoint navigation may be realized with conventional end-user equipment too, such as desktop or laptop computers, tablets, or smartphones.

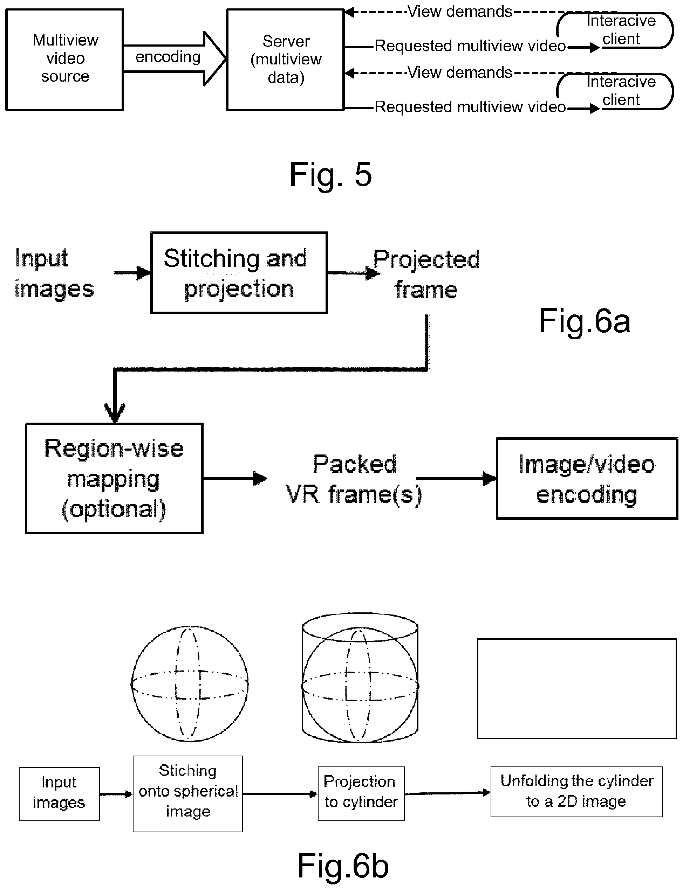

Figure 5 shows an example of a system for free-viewpoint streaming. Multiview video data are encoded, stored at a server, and provided for the consumption of client devices, which allow users to select interactively which view or views are rendered. Each client requests one or more views from the server depending on the rendering capabilities of its display. For example, one set of clients uses conventional 2D displays, a second set of clients is equipped with stereoscopic displays, while a third set of users can display more than two views at a time on a multiview autostereoscopic display. In order to save transmission bandwidth, the transmitted multiview bitstream is thinned in a manner that it just includes only the requested views and the views required for decoding the requested views. When a user changes viewpoints, the transmitted bitstream is adapted correspondingly.

Terms 360-degree video or virtual reality (VR) video may be used interchangeably. They may generally refer to video content that provides such a large field of view that only a part of the video is displayed at a single point of time in typical displaying arrangements. For example, VR video may be viewed on a head-mounted display (HMD) that may be capable of displaying e.g. about 100-degree field of view. The spatial subset of the VR video content to be displayed may be selected based on the orientation of the HMD. In another example, a typical flat-panel viewing environment is assumed, wherein e.g. up to 40-degree field-of-view may be displayed. When displaying wide-FOV content (e.g. fisheye) on such a display, it may be preferred to display a spatial subset rather than the entire picture.

360-degree image or video content may be acquired and prepared for example as follows. Images or video can be captured by a set of cameras or a camera device with multiple lenses and sensors. The acquisition results in a set of digital image/video signals. The cameras/lenses typically cover all directions around the center point of the camera set or camera device. The images of the same time instance are stitched, projected, and mapped onto a packed VR frame. The breakdown of image stitching, projection, and mapping process is illustrated with Figure 6a and described as follows. Input images are stitched and projected onto a three-dimensional projection structure, such as a sphere or a cube. The projection structure may be considered to comprise one or more surfaces, such as plane(s) or part(s) thereof. A projection structure may be defined as three-dimensional structure consisting of one or more surface(s) on which the captured VR image/video content is projected, and from which a respective projected frame can be formed. The image data on the projection structure is further arranged onto a two-dimensional projected frame. The term projection may be defined as a process by which a set of input images are projected onto a projected frame. There may be a pre-defined set of representation formats of the projected frame, including for example an equirectangular panorama and a cube map representation format.

Region-wise mapping may be applied to map projected frame onto one or more packed VR frames. In some cases, region-wise mapping may be understood to be equivalent to extracting two or more regions from the projected frame, optionally applying a geometric transformation (such as rotating, mirroring, and/or resampling) to the regions, and placing the transformed regions in spatially non-overlapping areas, a.k.a. constituent frame partitions, within the packed VR frame. If the region-wise mapping is not applied, the packed VR frame is identical to the projected frame. Otherwise, regions of the projected frame are mapped onto a packed VR frame by indicating the location, shape, and size of each region in the packed VR frame. The term mapping may be defined as a process by which a projected frame is mapped to a packed VR frame. The term packed VR frame may be defined as a frame that results from a mapping of a projected frame. In practice, the input images may be converted to a packed VR frame in one process without intermediate steps.

360-degree panoramic content (i.e., images and video) cover horizontally the full 360-degree field-of-view around the capturing position of an imaging device. The vertical field-of-view may vary and can be e.g. 180 degrees. Panoramic image covering 360-degree field-of-view horizontally and 180-degree field-of-view vertically can be represented by a sphere that can be mapped to a bounding cylinder that can be cut vertically to form a 2D picture (this type of projection is known as equirectangular projection). The process of forming a monoscopic equirectangular panorama picture is illustrated in Figure 6b. A set of input images, such as fisheye images of a camera array or a camera device with multiple lenses and sensors, is stitched onto a spherical image. The spherical image is further projected onto a cylinder (without the top and bottom faces). The cylinder is unfolded to form a two-dimensional projected frame. In practice one or more of the presented steps may be merged; for example, the input images may be directly projected onto a cylinder without an intermediate projection onto a sphere. The projection structure for equirectangular panorama may be considered to be a cylinder that comprises a single surface.

In general, 360-degree content can be mapped onto different types of solid geometrical structures, such as polyhedron (i.e. a three-dimensional solid object containing flat polygonal faces, straight edges and sharp corners or vertices, e.g., a cube or a pyramid), cylinder (by projecting a spherical image onto the cylinder, as described above with the equirectangular projection), cylinder (directly without projecting onto a sphere first), cone, etc. and then unwrapped to a two-dimensional image plane.

In some cases panoramic content with 360-degree horizontal field-of-view but with less than 180-degree vertical field-of-view may be considered special cases of panoramic projection, where the polar areas of the sphere have not been mapped onto the two-dimensional image plane. In some cases a panoramic image may have less than 360-degree horizontal field-of-view and up to 180-degree vertical field-of-view, while otherwise has the characteristics of panoramic projection format.

The human eyes are not capable of viewing the whole 360 degrees space, but are limited to a maximum horizontal and vertical FoVs (HHFoV, HVFoV). Also, a HMD device has technical limitations that allow only viewing a subset of the whole 360 degrees space in horizontal and vertical directions (DHFoV, DVFoV)).

At any point of time, a video rendered by an application on a HMD renders a portion of the 360-degrees video. Viewport may be defined as this portion of the 360-degree video. A viewport may be understood as a window on the 360 world represented in the omnidirectional video displayed via a rendering display. According to another definition, a viewport may defined as a part of the spherical video that is currently displayed. A viewport may be characterized by horizontal and vertical FoVs (VHFoV, VVFoV). In the following, VHFoV and VVFoV will be simply abbreviated with HFoV and VFoV.

A viewport size may correspond to the HMD FoV or may have a smaller size, depending on the application. For the sake of clarity, we define as primary viewport the part of the 360 degrees space viewed by a user at any given point of time.

When a multi-layer bitstream, such as a layered HEVC bitstream, is stored in a file, such as an ISOBMFF file, it may be allowed to store of one or more layers into a track. For example, when a content provider wants to provide a multi-layer bitstream that is not intended for subsetting, or when the bitstream has been created for a few pre-defined sets of output layers where each layer corresponds to a view (such as 1, 2, 5, or 9 views), tracks can be created accordingly.

When a bitstream with multiple sub-layers (a.k.a. multi-sub-layer bitstream), such as an HEVC bitstream with multiple sub-layers, is stored in a file, such as an ISOBMFF file, it may be allowed to store of one or more sub-layers into a track and more than one track may be used to contain the bitstream. For example, a track may contain only certain sub-layers and need not contain the lowest sub-layer (e.g. the sub-layer with TemporalId equal to 0 in HEVC).

An operating point may be defined as an independently decodable subset of a layered bitstream, which may be further constrained to comprise one or more layers that are indicated to be output layers. When a multi-layer and/or a multi-sub-layer bitstream is represented by multiple tracks and a player uses an operating point for which accessing layers and/or sub-layers from multiple tracks is needed, the player may need to reconstruct access units before passing them to the decoder. An operating point may be explicitly represented by a track, i.e., each sample in the track contains an access unit suitable for the operating point, i.e. data, such as NAL units, of the access unit may be contained in or referred to by extractors and aggregators. Furthermore, the sequence of samples comprises a valid bitstream for the operating point. If the number of operating points is large, it may be space-consuming and impractical to create a track for each operating point. In such a case, tracks may comprise data for certain layers and/or sub-layers only and might not represent entire access units and the sequence of samples might not comprise a valid bitstream for an operating point. A player may use an implicit access unit reconstruction process to reconstruct access units.

Extractors specified in ISO/IEC 14496-15 for H.264/AVC and HEVC enable compact formation of tracks that extract NAL unit data by reference. An extractor is a NAL-unit-like structure. A NAL-unit-like structure may be specified to comprise a NAL unit header and NAL unit payload like any NAL units, but start code emulation prevention (that is required for a NAL unit) might not be followed in a NAL-unit-like structure. For HEVC, an extractor contains one or more constructors. A sample constructor extracts, by reference, NAL unit data from a sample of another track. An in-line constructor includes NAL unit data. When an extractor is processed by a file reader that requires it, the extractor is logically replaced by the bytes resulting when resolving the contained constructors in their appearance order. Nested extraction may be disallowed, e.g. the bytes referred to by a sample constructor shall not contain extractors; an extractor shall not reference, directly or indirectly, another extractor. An extractor may contain one or more constructors for extracting data from the current track or from another track that is linked to the track in which the extractor resides by means of a track reference of type 'scal'. The bytes of a resolved extractor may represent one or more entire NAL units. A resolved extractor starts with a valid length field and a NAL unit header. The bytes of a sample constructor are copied only from the single identified sample in the track referenced through the indicated 'scal' track reference. The alignment is on decoding time, i.e. using the time-to-sample table only, followed by a counted offset in sample number. Extractors are a media-level concept and hence apply to the destination track before any edit list is considered. (However, one would normally expect that the edit lists in the two tracks would be identical).

The following syntax may be used:

```
class aligned(8) Extractor () {
    NALUnitHeader();
    do {
        unsigned int(8) constructor_type;
        if(constructor_type == 0)
            SampleConstructor();
        else if(constructor_type == 2)
            InlineConstructor();
    } while(!EndOfNALUnit())
}
```

The semantics may be defined as follows:

- NALUnitHeader(): The first two bytes of HEVC NAL units. A particular nal_unit_type value indicates an extractor, e.g. nal_unit_type equal to 49.
- constructor_type specifies the constructor being used.
- EndOfNALUnit() is a function that returns 0 (false) when more data follows in this extractor; otherwise it returns 1 (true).

The sample constructor (SampleConstructor) may have the following syntax:

```
class aligned(8) SampleConstructor () {
    unsigned int(8) track_ref_index;
    signed int(8) sample_offset;
    unsigned int((lengthSizeMinusOne+1)*8)
        data_offset;
    unsigned int((lengthSizeMinusOne+1)*8)
        data_length;
}
```

track_ref_index identifies the source track from which data is extracted. track_ref_index is the index of the track reference of type 'scal'. The first track reference has the index value 1; the value 0 is reserved.

The sample in that track from which data is extracted is temporally aligned or nearest preceding in the media decoding timeline, i.e. using the time-to-sample table only, adjusted by an offset specified by sample_offset with the sample containing the extractor. sample_offset gives the relative index of the sample in the linked track that shall be used as the source of information. Sample 0 (zero) is the sample with the same, or the closest preceding, decoding time compared to the decoding time of the sample containing the extractor; sample 1 (one) is the next sample, sample -1 (minus 1) is the previous sample, and so on.

data_offset: The offset of the first byte within the reference sample to copy. If the extraction starts with the first byte of data in that sample, the offset takes the value 0.

data_length: The number of bytes to copy.

The syntax of the in-line constructor may be specified as follows:

```
class aligned(8) InlineConstructor () {
    unsigned int(8) length;
    unsigned int(8) inline_data[length];
}
```

length: the number of bytes that belong to the InlineConstructor following this field.

inline_data: the data bytes to be returned when resolving the in-line constructor.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

In many video communication or transmission systems, transport mechanisms, and multimedia container file formats, there are mechanisms to transmit or store a scalability layer separately from another scalability layer of the same bitstream, e.g. to transmit or store the base layer separately from the enhancement layer(s). It may be considered that layers are stored in or transmitted through separate logical channels. Examples are provided in the following:

- ISO Base Media File Format (ISOBMFF, ISO/IEC International Standard 14496-12): Base layer can be stored as a track and each enhancement layer can be stored in another track. Similarly, in a hybrid codec scalability case, a non-HEVC-coded base layer can be stored as a track (e.g. of sample entry type 'avc1'), while the enhancement layer(s) can be stored as another track which is linked to the base-layer track using so-called track references.
- Real-time Transport Protocol (RTP): an RTP stream can be used to convey one ore more layers, and hence RTP streams of the same RTP session can logically separate different layers.
- MPEG-2 transport stream (TS): Each layer can have a different packet identifier (PID) value.

Many video communication or transmission systems, transport mechanisms, and multimedia container file formats provide means to associate coded data of separate logical channels, such as of different tracks or sessions, with each other. For example, there are mechanisms to associate coded data of the same access unit together. For example, decoding or output times may be provided in the container file format or transport mechanism, and coded data with the same decoding or output time may be considered to form an access unit.

Recently, Hypertext Transfer Protocol (HTTP) has been widely used for the delivery of real-time multimedia content over the Internet, such as in video streaming applications. Unlike the use of the Real-time Transport Protocol (RTP) over the User Datagram Protocol (UDP), HTTP is easy to configure and is typically granted traversal of firewalls and network address translators (NAT), which makes it attractive for multimedia streaming applications.

Several commercial solutions for adaptive streaming over HTTP, such as Microsoft® Smooth Streaming, Apple® Adaptive HTTP Live Streaming and Adobe® Dynamic Streaming, have been launched as well as standardization projects have been carried out. Adaptive HTTP streaming (AHS) was first standardized in Release 9 of 3rd Generation Partnership Project (3GPP) packet-switched streaming (PSS) service (3GPP TS 26.234 Release 9: "Transparent end-to-end packet-switched streaming service (PSS); protocols and codecs"). MPEG took 3GPP AHS Release 9 as a starting point for the MPEG DASH standard (ISO/IEC 23009-1: "Dynamic adaptive streaming over HTTP (DASH)-Part 1: Media presentation description and segment formats," International Standard, 2nd Edition, , 2014). 3GPP continued to work on adaptive HTTP streaming in communication with MPEG and published 3GP-DASH (Dynamic Adaptive Streaming over HTTP; 3GPP TS 26.247: "Transparent end-to-end packet-switched streaming Service (PSS); Progressive download and dynamic adaptive Streaming over HTTP (3GP-DASH)". MPEG DASH and 3GP-DASH are technically close to each other and may therefore be collectively referred to as DASH. Some concepts, formats, and operations of DASH are described below as an example of a video streaming system, wherein the embodiments may be implemented. The aspects of the invention are not limited to DASH, but rather the description is given for one possible basis on top of which the invention may be partly or fully realized.

In DASH, the multimedia content may be stored on an HTTP server and may be delivered using HTTP. The content may be stored on the server in two parts: Media Presentation Description (MPD), which describes a manifest of the available content, its various alternatives, their URL addresses, and other characteristics; and segments, which contain the actual multimedia bitstreams in the form of chunks, in a single or multiple files. The MDP provides the necessary information for clients to establish a dynamic adaptive streaming over HTTP. The MPD contains information describing media presentation, such as an HTTP- uniform resource locator (URL) of each Segment to make GET Segment request. To play the content, the DASH client may obtain the MPD e.g. by using HTTP, email, thumb drive, broadcast, or other transport methods. By parsing the MPD, the DASH client may become aware of the program timing, media-content availability, media types, resolutions, minimum and maximum bandwidths, and the existence of various encoded alternatives of multimedia components, accessibility features and required digital rights management (DRM), media-component locations on the network, and other content characteristics. Using this information, the DASH client may select the appropriate encoded alternative and start streaming the content by fetching the segments using e.g. HTTP GET requests. After appropriate buffering to allow for network throughput variations, the client may continue fetching the subsequent segments and also monitor the network bandwidth fluctuations. The client may decide how to adapt to the available bandwidth by fetching segments of different alternatives (with lower or higher bitrates) to maintain an adequate buffer.

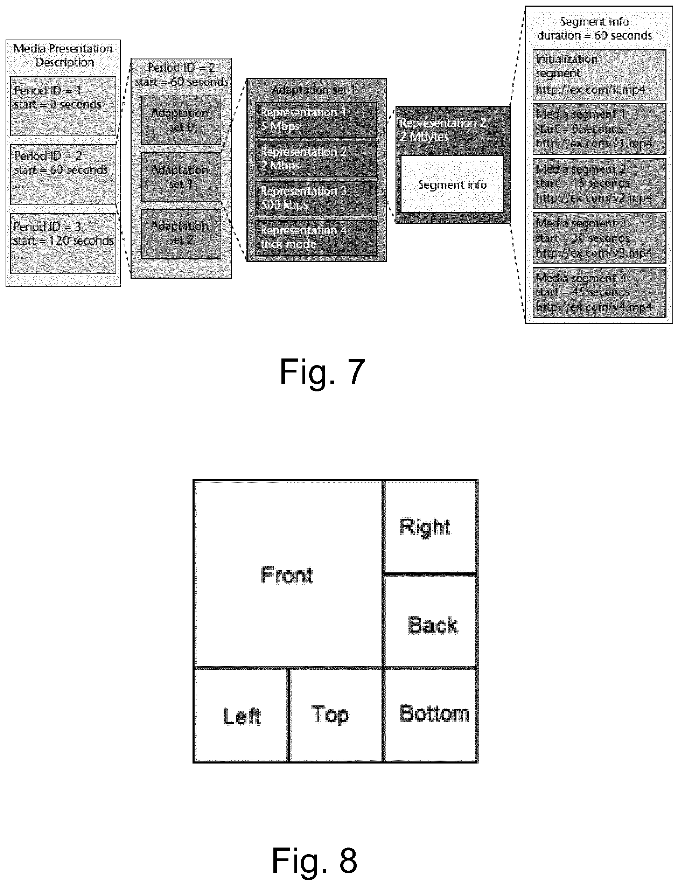

In DASH, hierarchical data model is used to structure media presentation as shown in Figure 7. A media presentation consists of a sequence of one or more Periods, each Period contains one or more Groups, each Group contains one or more Adaptation Sets, each Adaptation Sets contains one or more Representations, each Representation consists of one or more Segments. A Representation is one of the alternative choices of the media content or a subset thereof typically differing by the encoding choice, e.g. by bitrate, resolution, language, codec, etc. The Segment contains certain duration of media data, and metadata to decode and present the included media content. A Segment is identified by a URI and can typically be requested by a HTTP GET request. A Segment may be defined as a unit of data associated with an HTTP-URL and optionally a byte range that are specified by an MPD.

The DASH MPD complies with Extensible Markup Language (XML) and is therefore specified through elements and attribute as defined in XML. The MPD may be specified using the following conventions: Elements in an XML document may be identified by an upper-case first letter and may appear in bold face as **Element.** To express that an element **Element1** is contained in another element **Element2,** one may write **Element2.Elementl.** If an element's name consists of two or more combined words, camel-casing may be used, e.g. **ImportantElement.** Elements may be present either exactly once, or the minimum and maximum occurrence may be defined by <minOccurs> ... <maxOccurs>. Attributes in an XML document may be identified by a lower-case first letter as well as they may be preceded by a '@'-sign, e.g. @attribute. To point to a specific attribute @attribute contained in an element **Element,** one may write **Element**@attribute. If an attribute's name consists of two or more combined words, camel-casing may be used after the first word, e.g. @veryImportantAttribute. Attributes may have assigned a status in the XML as mandatory (M), optional (O), optional with default value (OD) and conditionally mandatory (CM).

In DASH, all descriptor elements are structured in the same way, namely they contain a @schemeIdUri attribute that provides a URI to identify the scheme and an optional attribute @value and an optional attribute @id. The semantics of the element are specific to the scheme employed. The URI identifying the scheme may be a URN or a URL. Some descriptors are specified in MPEG-DASH (ISO/IEC 23009-1), while descriptors can additionally or alternatively be specified in other specifications. When specified in specifications other than MPEG-DASH, the MPD does not provide any specific information on how to use descriptor elements. It is up to the application or specification that employs DASH formats to instantiate the description elements with appropriate scheme information. Applications or specifications that use one of these elements define a Scheme Identifier in the form of a URI and the value space for the element when that Scheme Identifier is used. The Scheme Identifier appears in the @schemeIdUri attribute. In the case that a simple set of enumerated values are required, a text string may be defined for each value and this string may be included in the @value attribute. If structured data is required then any extension element or attribute may be defined in a separate namespace. The @id value may be used to refer to a unique descriptor or to a group of descriptors. In the latter case, descriptors with identical values for the attribute @id may be required to be synonymous, i.e. the processing of one of the descriptors with an identical value for @id is sufficient. Two elements of type DescriptorType are *equivalent*, if the element name, the value of the @schemeIdUri and the value of the @value attribute are equivalent. If the @schemeIdUri is a URN, then equivalence may refer to lexical equivalence as defined in clause 5 of RFC 2141. If the @schemeIdUri is a URL, then equivalence may refer to equality on a character-for-character basis as defined in clause 6.2.1 of RFC3986. If the @value attribute is not present, equivalence may be determined by the equivalence for @schemeIdUri only. Attributes and element in extension namespaces might not be used for determining equivalence. The @id attribute may be ignored for equivalence determination.

MPEG-DASH specifies descriptors EssentialProperty and SupplementalProperty. For the element EssentialProperty the Media Presentation author expresses that the successful processing of the descriptor is essential to properly use the information in the parent element that contains this descriptor unless the element shares the same @id with another EssentialProperty element. If EssentialProperty elements share the same @id, then processing one of the EssentialProperty elements with the same value for @id is sufficient. At least one EssentialProperty element of each distinct @id value is expected to be processed. If the scheme or the value for an EssentialProperty descriptor is not recognized the DASH client is expected to ignore the parent element that contains the descriptor. Multiple EssentialProperty elements with the same value for @id and with different values for @id may be present in an MPD.

For the element SupplementalProperty the Media Presentation author expresses that the descriptor contains supplemental information that may be used by the DASH client for optimized processing. If the scheme or the value for a SupplementalProperty descriptor is not recognized the DASH client is expected to ignore the descriptor. Multiple SupplementalProperty elements may be present in an MPD.

In DASH, an independent representation may be defined as a representation that can be processed independently of any other representations. An independent representation may be understood to comprise an independent bitstream or an independent layer of a bitstream. A dependent representation may be defined as a representation for which Segments from its complementary representations are necessary for presentation and/or decoding of the contained media content components. A dependent representation may be understood to comprise e.g. a predicted layer of a scalable bitstream. A complementary representation may be defined as a representation which complements at least one dependent representation. A complementary representation may be an independent representation or a dependent representation. Dependent Representations may be described by a **Representation** element that contains a @dependencyId attribute. Dependent Representations can be regarded as regular Representations except that they depend on a set of complementary Representations for decoding and/or presentation. The @dependencyId contains the values of the @id attribute of all the complementary Representations, i.e. Representations that are necessary to present and/or decode the media content components contained in this dependent Representation.

Track references of ISOBMFF can be reflected in the list of four-character codes in the @associationType attribute of DASH MPD that is mapped to the list of Representation@id values given in the @associationId in a one to one manner. These attributes may be used for linking media Representations with metadata Representations.

A DASH service may be provided as on-demand service or live service. In the former, the MPD is a static and all Segments of a Media Presentation are already available when a content provider publishes an MPD. In the latter, however, the MPD may be static or dynamic depending on the Segment URLs construction method employed by a MPD and Segments are created continuously as the content is produced and published to DASH clients by a content provider. Segment URLs construction method may be either template-based Segment URLs construction method or the Segment list generation method. In the former, a DASH client is able to construct Segment URLs without updating an MPD before requesting a Segment. In the latter, a DASH client has to periodically download the updated MPDs to get Segment URLs. For live service, hence, the template-based Segment URLs construction method is superior to the Segment list generation method.

In the context of DASH, the following definitions may be used: A media content component or a media component may be defined as one continuous component of the media content with an assigned media component type that can be encoded individually into a media stream. Media content may be defined as one media content period or a contiguous sequence of media content periods. Media content component type may be defined as a single type of media content such as audio, video, or text. A media stream may be defined as an encoded version of a media content component.

An Initialization Segment may be defined as a Segment containing metadata that is necessary to present the media streams encapsulated in Media Segments. In ISOBMFF based segment formats, an Initialization Segment may comprise the Movie Box ('moov') which might not include metadata for any samples, i.e. any metadata for samples is provided in 'moof' boxes.

A Media Segment contains certain duration of media data for playback at a normal speed, such duration is referred as Media Segment duration or Segment duration. The content producer or service provider may select the Segment duration according to the desired characteristics of the service. For example, a relatively short Segment duration may be used in a live service to achieve a short end-to-end latency. The reason is that Segment duration is typically a lower bound on the end-to-end latency perceived by a DASH client since a Segment is a discrete unit of generating media data for DASH. Content generation is typically done such a manner that a whole Segment of media data is made available for a server. Furthermore, many client implementations use a Segment as the unit for GET requests. Thus, in typical arrangements for live services a Segment can be requested by a DASH client only when the whole duration of Media Segment is available as well as encoded and encapsulated into a Segment. For on-demand service, different strategies of selecting Segment duration may be used.

A Segment may be further partitioned into Subsegments e.g. to enable downloading segments in multiple parts. Subsegments may be required to contain complete access units. Subsegments may be indexed by Segment Index box, which contains information to map presentation time range and byte range for each Subsegment. The Segment Index box may also describe subsegments and stream access points in the segment by signaling their durations and byte offsets. A DASH client may use the information obtained from Segment Index box(es) to make a HTTP GET request for a specific Subsegment using byte range HTTP request. If relatively long Segment duration is used, then Subsegments may be used to keep the size of HTTP responses reasonable and flexible for bitrate adaptation. The indexing information of a segment may be put in the single box at the beginning of that segment, or spread among many indexing boxes in the segment. Different methods of spreading are possible, such as hierarchical, daisy chain, and hybrid. This technique may avoid adding a large box at the beginning of the segment and therefore may prevent a possible initial download delay.

The notation (Sub)segment refers to either a Segment or a Subsegment. If Segment Index boxes are not present, the notation (Sub)segment refers to a Segment. If Segment Index boxes are present, the notation (Sub)segment may refer to a Segment or a Subsegment, e.g. depending on whether the client issues requests on Segment or Subsegment basis.

Segments (or respectively Subsegments) may be defined to be non-overlapping as follows: Let $T_E(S,i)$ be the earliest presentation time of any access unit in stream $i$ of a Segment or Subsegment $S$, and let $T_L(S,i)$ be the latest presentation time of any access unit in stream $i$ of a Segment or Subsegment $S$. Two segments (respectively Subsegments), $A$ and $B$, which may or may not be of different Representations, may be defined to be non-overlapping, when $T_L(A,i) < T_E(B,i)$ for all media streams $i$ in A and B or if $T_L(B,i) < T_E(A,i)$ for all streams $i$ in A and B where $i$ refers to the same media component.

It may be required that for any dependent Representation X that depends on complementary Representation Y, the $m$-th Subsegment of X and the $n$-th Subsegment of Y shall be non-overlapping whenever $m$ is not equal to $n$. It may be required that for dependent Representations the concatenation of the Initialization Segment with the sequence of Subsegments of the dependent Representations, each being preceded by the corresponding Subsegment of each of the complementary Representations in order as provided in the @dependencyId attribute shall represent a conforming Subsegment sequence conforming to the media format as specified in the @mimeType attribute for this dependent Representation.

MPEG-DASH defines segment-container formats for both ISO Base Media File Format and MPEG-2 Transport Streams. Other specifications may specify segment formats based on other container formats. For example, a segment format based on Matroska container file format has been proposed and may be summarized as follows. When Matroska files are carried as DASH segments or alike, the association of DASH units and Matroska units may be specified as follows. A subsegment (of DASH) may be are defined as one or more consecutive Clusters of Matroska-encapsulated content. An Initialization Segment of DASH may be required to comprise the EBML header, Segment header (of Matroska), Segment Information (of Matroska) and Tracks, and may optionally comprise other level1 elements and padding. A Segment Index of DASH may comprise a Cues Element of Matroska.

DASH specifies different timelines including Media Presentation timeline and Segment availability times. The former indicates the presentation time of access unit with a media content which is mapped to the global common presentation timeline. Media Presentation timeline enables DASH to seamlessly synchronize different media components which is encoded with different coding techniques and shares a common timeline. The latter indicates a wall-clock time and is used to signal clients the availability time of Segments which is identified by HTTP URLs. A DASH client is able to identify an availability time of a certain Segment by comparing the wall-clock time to the Segment availability time assigned to that Segment. Segment availability time plays a key role in live delivery of media Segments, referred as live service. For live service, the Segment availability time is different from Segment to Segment and a certain Segment's availability time depends on the position of the Segment in the Media Presentation timeline. For on-demand service, the Segment availability time is typically the same for all Segments.

DASH supports rate adaptation by dynamically requesting Media Segments from different Representations within an Adaptation Set to match varying network bandwidth. When a DASH client switches up/down Representation, coding dependencies within Representation have to be taken into account. A Representation switch may only happen at a random access point (RAP), which is typically used in video coding techniques such as H.264/AVC. In DASH, a more general concept named Stream Access Point (SAP) is introduced to provide a codec-independent solution for accessing a Representation and switching between Representations. In DASH, a SAP is specified as a position in a Representation that enables playback of a media stream to be started using only the information contained in Representation data starting from that position onwards (preceded by initialising data in the Initialisation Segment, if any). Hence, Representation switching can be performed in SAP.

Several types of SAP have been specified, including the following. SAP Type 1 corresponds to what is known in some coding schemes as a "Closed GOP random access point" (in which all pictures, in decoding order, can be correctly decoded, resulting in a continuous time sequence of correctly decoded pictures with no gaps) and in addition the first picture in decoding order is also the first picture in presentation order. SAP Type 2 corresponds to what is known in some coding schemes as a "Closed GOP random access point" (in which all pictures, in decoding order, can be correctly decoded, resulting in a continuous time sequence of correctly decoded pictures with no gaps), for which the first picture in decoding order may not be the first picture in presentation order. SAP Type 3 corresponds to what is known in some coding schemes as an "Open GOP random access point", in which there may be some pictures in decoding order that cannot be correctly decoded and have presentation times less than intra-coded picture associated with the SAP.

Stream access points (which may also or alternatively be referred to as layer access point) for layered coding may be defined similarly in a layer-wise manner. A SAP for layer may be defined as a position in a layer (or alike) that enables playback of the layer to be started using only the information from that position onwards assuming that the reference layers of the layer have already been decoded earlier.

A stream access point (SAP) sample group as specified in ISOBMFF identifies samples as being of the indicated SAP type. The grouping_type_parameter for the SAP sample group comprises the fields target layers and layer_id_method_idc. target layers specifies the target layers for the indicated SAPs. The semantics of target_layers may depend on the value of layer_id_method_idc. layer_id_method_idc specifies the semantics of target_layers. layer_id_method_idc equal to 0 specifies that the target layers consist of all the layers represented by the track. The sample group description entry for the SAP sample group comprises the fields dependent_flag and SAP_type. dependent_flag may be required to be 0 for non-layered media. dependent_flag equal to 1 specifies that the reference layers, if any, for predicting the target layers may have to be decoded for accessing a sample of this sample group. dependent_flag equal to 0 specifies that the reference layers, if any, for predicting the target layers need not be decoded for accessing any SAP of this sample group. sap_type values in the range of 1 to 6, inclusive, specify the SAP type, of the associated samples.

The Subsegment Index box ('ssix') provides a mapping from levels (as specified by the Level Assignment box) to byte ranges of the indexed subsegment. In other words, this box provides a compact index for how the data in a subsegment is ordered according to levels into partial subsegments. It enables a client to easily access data for partial subsegments by downloading ranges of data in the subsegment. When the Subsegment Index box is present, each byte in the subsegment is assigned to a level. If the range is not associated with any information in the level assignment, then any level that is not included in the level assignment may be used. There is 0 or 1 Subsegment Index boxes present per each Segment Index box that indexes only leaf subsegments, i.e. that only indexes subsegments but no segment indexes. A Subsegment Index box, if any, is the next box after the associated Segment Index box. A Subsegment Index box documents the subsegment that is indicated in the immediately preceding Segment Index box. Each level may be assigned to exactly one partial subsegment, i.e. byte ranges for one level are contiguous. Levels of partial subsegments are assigned by increasing numbers within a subsegment, i.e., samples of a partial subsegment may depend on any samples of preceding partial subsegments in the same subsegment, but not the other way around. For example, each partial subsegment contains samples having an identical temporal sub-layer and partial subsegments appear in increasing temporal sub-layer order within the subsegment. When a partial subsegment is accessed in this way, the final Media Data box may be incomplete, that is, less data is accessed than the length indication of the Media Data Box indicates is present. The length of the Media Data box may need adjusting, or padding may be used. The padding_flag in the Level Assignment Box indicates whether this missing data can be replaced by zeros. If not, the sample data for samples assigned to levels that are not accessed is not present, and care should be taken not to attempt to process such samples.

A content provider may create Segment and Subsegment of multiple Representations in a way that makes switching simpler. In a simple case, each Segment and Subsegment starts with a SAP and the boundaries of Segment and Subsegment are aligned across the Representation of an Adaptation Set. In such a case a DASH client is able to switch Representations without error drift by requesting Segments or Subsegments from an original Representation to a new Representation. In DASH, restrictions to construct Segment and Subsegment are specified in MPD and Segment Index in order to facilitate a DASH client to switch Representations without introducing an error drift. One of the usages of profile specified in DASH is to provide different levels of restrictions to construct Segments and Subsegments.

The draft MPEG-DASH specification includes that feature of Segment Independent SAP Signaling (SISSI), which enables signaling of Segments starting with SAP having uneven durations. The draft MPEG-DASH specification defines SISSI signaling for switching within an Adaptation Set and across Adaptation Sets.

In switching within an Adaptation Set, the switching refers to the presentation of decoded data from one Representation up to a certain time t, and presentation of decoded data of another Representation from time t onwards. If Representations are included in one Adaptation Set, and the client switches properly, the Media Presentation is expected to be perceived seamless across the switch. Clients may ignore Representations that rely on codecs or other rendering technologies they do not support or that are otherwise unsuitable.

The **Switching** element as defined in Table 1 provides instructions of switch points within an Adaptation Set and the permitted switching options as defined in Table 2. This element may be used instead of the attributes @segmentAlignment or @bitstreamSwitching.

**Table 1 - Switch Point Signalling**

| Element or Attribute Name | Use | Description |
|---|---|---|
| **Switching** | | Switching logic description for the associated Representation |
| @interval | M | specifies the interval between two switching points in the scale of the @timescale on Representation level. Any Segment for which the earliest presentation time minus the @t value of the **S** element describing the segment is an integer multiple of the product of @timescale and @interval is a switch-to opportunity, i.e. it enables to switch to this Representation with the switching strategy as defined by the @type value.<br>The value may be such that it is aligned with the values in the Segment Timeline, i.e. a multiple of the value of the @d attribute. |
| @type | OD default: 'media' | specifies the switching strategy for the switch points identified in by the @interval attribute. Switching strategies are defined in Table 2. |

Table 2 defines different switching strategies that provide instructions to the client on the procedures to switch appropriately within an Adaptation Set.

**Table 2 - Switching Strategies**

| Type | Description |
|---|---|
| media | Media level switching: In this case switching is possible at the switch point by decoding and presenting switch-from Representation up to switch point t, initializing the switch-to Representation with the associated Initialization Segment and continue decoding and presenting the switch-to Representation from time t onwards. |
| bitstream | Bitstream switching: In this case switching is possible at the switch point by decoding and presenting switch-from Representation up to switch point t, and continue decoding and presenting the switch-to Representation from time t onwards. Initialization of the switch-to Representation is not necessary and is not recommended. |

The XML schema snippet is as follows:

```
<!-- Switching -->
<xs:complexType name="SwitchingType">
  <xs:attribute name="interval" type="xs:unsignedlnt" use="required"/>
  <xs:attribute name="type" type="SwitchingTypeType"/>
  <xs:anyAttribute namespace="##other" processContents="lax"/>
</xs:complexType>
<!-Switching Type type enumeration -->
<xs:simpleType name="SwitchingTypeType">
  <xs:restriction base="xs:string">
   <xs:enumeration value="media"/>
   <xs: enumeration value="bitstream"/>
  </xs :restriction>
</xs:simpleType>
```

In switching across Adaptation Sets, Representations in two or more Adaptation Sets may provide the same content. In addition, the content may be time-aligned and may be offered such that seamless switching across Representations in different Adaptation Sets is possible. Typical examples are the offering of the same content with different codecs, for example H.264/AVC and H.265/HEVC and the content author wants to provide such information to the receiver in order to seamlessly switch Representations across different Adaptation Sets. Such switching permission may be used by advanced clients.

A content author may signal such seamless switching property across Adaptation Sets by providing a Supplemental Descriptor along with an Adaptation Set with @schemeIdURI set to urn:mpeg:dash:adaptation-set-switching:2016 and the @value is a comma-separated list of Adaptation Set IDs that may be seamlessly switched to from this Adaptation Set.

If the content author signals the ability of Adaptation Set switching and as @segmentAlignment or @subsegmentAlignment are set to TRUE or the **Switching** element is provided for one Adaptation Set, the (Sub)Segment alignment or **Switching** element is valid for *all* Representations in *all* Adaptation Sets for which the @id value is included in the @value attribute of the Supplemental descriptor.

As an example, a content author may signal that seamless switching across an H.264/AVC Adaptation Set with **AdaptationSet**@id="h264" and an HEVC Adaptation Set with **AdaptationSet**@id="h265" is possible by adding a Supplemental Descriptor to the H.264/AVC Adaptation Set with @schemeIdURI set to urn:mpeg:dash:adaptation-set-switching:2016 and the @value="h265" and by adding a Supplemental Descriptor to the HEVC Adaptation Set with @schemeIdURI set to urn:mpeg:dash:adaptation-set-switching:2016 and the @value="h264".

In addition, if the content author signals the ability of Adaptation Set switching for any Adaptation Sets then the parameters as defined for an Adaption Set also holds for all Adaptation Sets that are included in the @value attribute. Note that this constraint may result that the switching may only be signaled with one Adaptation Set, but not with both as for example one Adaptation Set signaling may include all spatial resolutions of another one, whereas it is not the case the other way round.

Random Access may refer to start processing, decoding and presenting the Representation from the random access point at time t onwards by initializing the Representation with the Initialization Segment, if present and decoding and presenting the Representation from the signaled Segment onwards, i.e. from the earliest presentation time of the signaled Segment. Random Access point may be signaled with the **RandomAccess** element as defined in Table 3.

**Table 3 - Random Access Point Signalling**

| Element or Attribute Name | Use | Description |
|---|---|---|
| **RandomAccess** | | Random Access Information |
| @interval | M | specifies the position of the random access points in the Representations. The information is specified in the scale of the @timescale on Representation level. Any Segment for which the earliest presentation time minus the @t value of the S element describing the segment is an integer multiple of the product of @timescale and @interval is a random access opportunity, i.e. it enables randomly access to this Representation with the random access strategy as defined by the @type value.<br>The value should be such that it is aligned with the values in the Segment Timeline, i.e. a multiple of the value of the @d attribute. |
| @type | OD<br><br>default: "closed" | specifies the random access strategy for the random access points in by the @interval attribute.<br>The value uses a type present in Table 4.<br><br>If the value of the type is unknown, the DASH client is expected to ignore the containing Random Access element. |
| @minBufferTime | O | specifies a common duration used in the definition of the Representation data rate (using the @bandwidth attribute).<br>If not present, then the value of the MPD level is inherited. |
| @bandwidth | O | Consider a hypothetical constant bitrate channel of bandwidth with the value of this attribute in bits per second (bps). Then, if the Representation is continuously delivered at this bitrate, starting at any RAP indicated in this element a client can be assured of having enough data for continuous playout providing playout begins after @minBufferTime * @bandwidth bits have been received (i.e. at time @minBufferTime after the first bit is received).<br>For dependent Representations this value specifies the bandwidth according to the above definition for the aggregation of this Representation and all complementary Representations.<br>If not present, the value of the Representation is inherited. |

**Table 4 - Random Access Type Values**

| Type | Informative description |
|---|---|
| closed | Closed GOP random access. This implies that the segment is a Random Access Segment as well as the segment starts with a SAP type of 1 or 2. Note that SAP type 1 or 2 is a necessary condition, but not sufficient. In addition, all requirements of a Random Access Segment need to be fulfilled. |
| open | Open GOP random access. This implies that the segment is a Random Access Segment as well as the segment starts with a SAP type of 1, 2 or 3. Note that SAP type 1, 2 or 3 is a necessary condition, but not sufficient. In addition, all requirements of a Random Access Segment need to be fulfilled. |
| gradual | Gradual decoder refresh random. This implies that the segment is a Random Access Segment as well as the segment starts with a SAP type of 1, 2, 3 or 4. Note that SAP type 1 2, 3 or 4 is a necessary condition, but not sufficient. In addition, all requirements of a Random Access Segment need to be fulfilled. |

The DASH standard includes mechanisms to enable fast start-up of a media session. For example, the MPD may announce more than one representation, with different bitrates, in an Adaptation Set. Moreover, each segment and/or subsegment could start with a stream access point, where the pictures within the segment and/or subsegment are coded without referencing to any other picture from a different segment. This way a DASH client may start with a lower bitrate representation in order to increase the buffer occupancy level quickly. Then the client may then switch to requesting segment(s) and/or subsegment(s) of a higher bit rate representation (which may have e.g. a higher spatial resolution than the representation received earlier). The client may target to reach a certain buffer occupancy level, e.g. in terms of media duration, during the fast start-up and may target to keep the same or similar buffer occupancy level during the operation after a fast start-up phase. The client may start media playback after initiating a media streaming session and/or after a random access operation only after a certain amount of media has been buffered. This amount of media may be equal to but need not relate to the buffer occupancy level that is targeted to be reached at fast start-up. In all cases, the fast start-up may enable the client to start the media playback faster than would be possible if only a higher bitrate representation would be consistently received after initiating a media streaming session and/or after a random access operation.

As described above, the client or player may request Segments or Subsegments to be transmitted from different representations similarly to how the transmitted layers and/or sub-layers of a scalable video bitstream may be determined. Terms representation down-switching or bitstream down-switching may refer to requesting or transmitting a lower bitrate representation than what was requested or transmitted (respectively) previously. Terms representation up-switching or bitstream up-switching may refer to requesting or transmitting a higher bitrate representation than what was requested or transmitted (respectively) previously. Terms representation switching or bitstream switching may refer collectively to representation or bitstream up- and down-switching and may also or alternatively cover switching of representations or bitstreams of different viewpoints.

Streaming systems similar to MPEG-DASH include for example HTTP Live Streaming (a.k.a. HLS), specified in the IETF Internet Draft draft-pantos-http-live-streaming-13 (and other versions of the same Internet Draft). As a manifest format corresponding to the MPD, HLS uses an extended M3U format. M3U is a file format for multimedia playlists, originally developed for audio files. An M3U Playlist is a text file that consists of individual lines, and each line is a URI, blank, or starts with the character '#' indicating a tag or a comment. A URI line identifies a media segment or a Playlist file. Tags begin with #EXT. The HLS specification specifies a number of tags, which may be regarded as key-value pairs. The value part of tags may comprise an attribute list, which is a comma-separated list of attribute-value pairs, where an attribute-value pair may be considered to have the syntax AttributeName=AttributeValue. Hence, tags of HLS M3U8 files may be considered similar to Elements in MPD or XML, and attributes of HLS M3U8 files may be considered similar to Attributes in MPD or XML. Media segments in HLS are formatted according to the MPEG-2 Transport Stream and contain a single MPEG-2 Program. Each media segment is recommended to start with a Program Association Table (PAT) and a Program Map Table (PMT).

As explained above, DASH and other similar streaming systems provide an attractive protocol and/or formats for multimedia streaming applications, especially for multiview coded video bistreams. A recent trend in streaming in order to reduce the streaming bitrate of VR video is the following: a subset of 360-degree video content covering the primary viewport (i.e., the current view orientation) is transmitted at the best quality/resolution, while the remaining of 360-degree video is transmitted at a lower quality/resolution. There are generally two approaches for viewport-adaptive streaming:

1. Viewport-specific encoding and streaming, a.k.a. viewport-dependent encoding and streaming, a.k.a. asymmetric projection, a.k.a. packed VR video.

In this approach, 360-degree image content is packed into the same frame with an emphasis (e.g. greater spatial area) on the primary viewport. The packed VR frames are encoded into a single bitstream.

For example, the front face of a cube map may be sampled with a higher resolution compared to other cube faces and the cube faces may be mapped to the same packed VR frame as shown in Figure 8, where the front cube face is sampled with twice the resolution compared to the other cube faces.

2. VR viewport video, a.k.a. tile-based encoding and streaming

In this approach, 360-degree content is encoded and made available in a manner that enables selective streaming of viewports from different encodings.

An approach of tile-based encoding and streaming, which may be referred to as tile rectangle based encoding and streaming, may be used with any video codec, even if tiles similar to HEVC were not available in the codec or even if motion-constrained tile sets or alike were not implemented in an encoder. In tile rectangle based encoding, the source content is split into tile rectangle sequences before encoding. Each tile rectangle sequence covers a subset of the spatial area of the source content, such as full panorama content, which may e.g. be of equirectangular projection format. Each tile rectangle sequence is then encoded independently from each other as a single-layer bitstream. Several bitstreams may be encoded from the same tile rectangle sequence, e.g. for different bitrates. Each tile rectangle bitstream may be encapsulated in a file as its own track (or alike) and made available for streaming. At the receiver side the tracks to be streamed may be selected based on the viewing orientation. The client may receive tracks covering the entire omnidirectional content. Better quality or higher resolution tracks may be received for the current viewport compared to the quality or resolution covering the remaining, currently non-visible viewports. In an example, each track may be decoded with a separate decoder instance.

In an example of tile rectangle based encoding and streaming, each cube face may be separately encoded and encapsulated in its own track (and Representation). More than one encoded bitstream for each cube face may be provided, e.g. each with different spatial resolution. Players can choose tracks (or Representations) to be decoded and played based on the current viewing orientation. High-resolution tracks (or Representations) may be selected for the cube faces used for rendering for the present viewing orientation, while the remaining cube faces may be obtained from their low-resolution tracks (or Representations).

A tile track specified in ISO/IEC 14496-15 enables storage of one or more temporal motion-constrained tile set as a track. When a tile track contains tiles of an HEVC base layer, the sample entry type 'hvt1' is used. When a tile track contains tiles of a non-base layer, the sample entry type 'lht1' is used. A sample of a tile track consists of one or more complete tiles in one or more complete slice segments. A tile track is independent from any other tile track that includes VCL NAL units of the same layer as this tile track. A tile track has a 'tbas' track reference to a tile base track. The tile base track does not include VCL NAL units. A tile base track indicates the tile ordering using a 'sabt' track reference to the tile tracks. An HEVC coded picture corresponding to a sample in the tile base track can be reconstructed by collecting the coded data from the tile-aligned samples of the tracks indicated by the 'sabt' track reference in the order of the track references.

A full-picture-compliant tile set {track | bitstream} is a tile set {track | bitstream} that conforms to the full-picture {track | bitstream} format. Here, the notation {optionA | optionB} illustrates alternatives, i.e. either optionA or optionB, which is selected consistently in all selections. A full-picture-compliant tile set track can be played as with any full-picture track using the parsing and decoding process of full-picture tracks. A full-picture-compliant bitstream can be decoded as with any full-picture bitstream using the decoding process of full-picture bitstreams. A full-picture track is a track representing an original bitstream (including all its tiles). A tile set bitstream is a bitstream that contains a tile set of an original bitstream but not representing the entire original bitstream. A tile set track is a track representing a tile set of an original bitstream but not representing the entire original bitstream.

A full-picture-compliant tile set track may comprise extractors as defined for HEVC. An extractor may for example an in-line constructor including a slice segment header and a sample constructor extracting coded video data for a tile set from a referenced full-picture track.

In an approach of tile-based encoding and streaming, encoding is performed in a manner that the resulting bitstream comprises motion-constrained tile sets. Several bitstreams of the same source content are encoded using motion-constrained tile sets.

In an approach, one or more motion-constrained tile set sequences are extracted from a bitstream, and each extracted motion-constrained tile set sequence is stored as a tile set track (e.g. an HEVC tile track or a full-picture-compliant tile set track) in a file. A tile base track (e.g. an HEVC tile base track or a full picture track comprising extractors to extract data from the tile set stracks) may be generated and stored in a file. The tile base track represents the bitstream by implicitly collecting motion-constrained tile sets from the tile set tracks or by explicitly extracting (e.g. by HEVC extractors) motion-constrained tile sets from the tile set tracks. Tile set tracks and the tile base track of each bitstream may be encapsulated in an own file, and the same track identifiers may be used in all files. At the receiver side the tile set tracks to be streamed may be selected based on the viewing orientation. The client may receive tile set tracks covering the entire omnidirectional content. Better quality or higher resolution tile set tracks may be received for the current viewport compared to the quality or resolution covering the remaining, currently non-visible viewports.

In an example, equirectangular panorama content is encoded using motion-constrained tile sets. More than one encoded bitstream may be provided, e.g. with different spatial resolution and/or picture quality. Each motion-constrained tile set is made available in its own track (and Representation). Players can choose tracks (or Representations) to be decoded and played based on the current viewing orientation. High-resolution or high-quality tracks (or Representations) may be selected for tile sets covering the present primary viewport, while the remaining area of the 360-degree content may be obtained from low-resolution or low-quality tracks (or Representations).

In an approach, each received tile set track is decoded with a separate decoder or decoder instance.

In another approach, a tile base track is utilized in decoding as follows. If all the received tile tracks originate from bitstreams of the same resolution (or more generally if the tile base tracks of the bitstreams are identical or equivalent, or if the initialization segments or other initialization data, such as parameter sets, of all the bitstreams is the same), a tile base track may be received and used to construct a bitstream. The constructed bitstream may be decoded with a single decoder.

In yet another approach, a first set of tile rectangle tracks and/or tile set tracks may be merged into a first full-picture-compliant bitstream, and a second set of tile rectangle tracks and/or tile set tracks may be merged into a second full-picture-compliant bitstream. The first full-picture-compliant bitstream may be decoded with a first decoder or decoder instance, and the second full-picture-compliant bitstream may be decoded with a second decoder or decoder instance. In general, this approach is not limited to two sets of tile rectangle tracks and/or tile set tracks, two full-picture-compliant bitstreams, or two decoders or decoder instances, but applies to any number of them. With this approach, the client can control the number of parallel decoders or decoder instances. Moreover, clients that are not capable of decoding tile tracks (e.g. HEVC tile tracks) but only full-picture-compliant bitstreams can perform the merging in a manner that full-picture-compliant bitstreams are obtained. The merging may be solely performed in the client or full-picture-compliant tile set tracks may be generated to assist in the merging performed by the client as explained in the next paragraph.

A full-picture-compliant tile set track may be formed for each expected viewing orientation. A full-picture-compliant tile set track may be considered to correspond to a dependent Representation in the DASH MPD, with @dependencyId including the Representation identifiers of the tile rectangle tracks or the tile set tracks from which coded video data is extracted.

A client may select a full-picture-compliant tile set track based on the viewing orientation and the respective tile rectangle tracks or tile set tracks based on the dependency information in the DASH MPD or alike. Alternatively, a client may select tile rectangle tracks or tile set tracks based on the viewing orientation and a full-picture-complinat tile set track based on the dependency information in the DASH MPD or alike. The client may receive tile rectangle tracks and/or tile set tracks covering the entire omnidirectional content, and may receive one or more full-picture-compliant tile set tracks for the received tile rectangle tracks and/or tile set tracks. Better quality or higher resolution tile rectangle tracks and/or tile set tracks may be received for the current viewport compared to the quality or resolution covering the remaining, currently non-visible viewports. The client may process a full-picture-compliant tile set track, e.g. by resolving extractors, and create a respective full-picture-compliant bitstream. The client may decode each full-picture-compliant bitstream with a separate decoder or decoder instance.

It is also possible to combine the approaches 1. (viewport-specific encoding and streaming) and 2. (tile-based encoding and streaming) above.

It needs to be understood that tile-based encoding and streaming may be realized by splitting a source picture in tile rectangle sequences that are partly overlapping. Alternatively or additionally, bitstreams with motion-constrained tile sets may be generated from the same source content with different tile grids or tile set grids. We could then imagine the 360 degrees space divided into a discrete set of viewports, each separate by a given distance (e.g., expressed in degrees), so that the omnidirectional space can be imagined as a map of overlapping viewports, and the primary viewport is switched discretely as the user changes his/her orientation while watching content with a HMD. When the overlapping between viewports is reduced to zero, the viewports could be imagined as adjacent non-overlapping tiles within the 360 degrees space.

As explained above, in viewport-adaptive streaming the primary viewport (i.e., the current viewing orientation) is transmitted at a good quality/resolution, while the remaining of 360-degree video is transmitted at a lower quality/resolution. When the viewing orientation changes, e.g. when the user turns his/her head when viewing the content with a head-mounted display, another version of the content needs to be streamed, matching the new viewing orientation. In general, the new version can be requested starting from a stream access point (SAP), which are typically aligned with (Sub)segments. In single-layer video bitstreams, SAPs are intra-coded and hence costly in terms of rate-distortion performance. Conventionally, relatively long SAP intervals and consequently relatively long (Sub)segment durations in the order of seconds are hence typically used. Thus, the delay (here referred to as the viewport quality update delay) in upgrading the quality after a viewing orientation change (e.g. a head turn) is conventionally in the order of seconds and is therefore clearly noticeable and annoying.

Representations of more frequent SAPs can be additionally made available to reduce the switching delay related to the viewing orientation change. In tile-based encoding and streaming, when tile rectangles or tile sets are made available as individual Representations, clients can select whether to request Segments from Representations with "conventional" SAP interval or from Representations with more frequent SAPs (and hence often shorter Segment duration too).

Some client environments are limited to running a single decoder instance or a limited number of decoder instances in parallel. A single decoder instance also avoids the post-decoder synchronization needs between difference decoder instances and consequently may reduce delay, since post-decoder buffering need not account for such synchronization. Assuming that the client is able to run only up to M decoder instances in parallel, viewport dependent delivery can either be achieved either by viewport-dependent encoding and streaming or by tile-based encoding and streaming, where tiles are combined to form less than or equal to M bitstreams. For tile-based encoding and streaming, it would be desirable to enable tile rectangle or tile set based encoding and streaming in a manner where the number of decoder instances can be tuned, based on client capabilities, even down to one decoder instance.

For the same reason and also for reducing the viewport quality update delay, it would be desirable to enable merging of the coded tile rectangles or tile sets from a first Representation having relatively long SAP intervals and from one or more second Representations having more frequent SAPs. However, all known methods for merging coded tile rectangles or tile sets from Representations having different SAP intervals typically increase the streaming bitrate significantly. Moreover, many times SAPs are coded as IDR (in HEVC and H.264/AVC) pictures that inherently cause no pictures to be available as reference pictures. It is generally not possible to merge tile rectangles coded as IDR pictures and tile rectangles having reference pictures. Likewise, it is generally not possible to merge tile sets of an IDR picture and tile sets of a non-IDR picture, which may be characterized by using reference pictures for prediction or maintaining earlier reference pictures, in decoding order, in a decoded picture buffer or reference picture set or alike to be potentially used as reference pictures for later pictures in decoding order.

Now in order to at least alleviate the above problems, an improved method for tile-based encoding and streaming is presented hereinafter. In the following, the phrase tile set and/or rectangle sequence is a short form of tile set sequence and/or tile rectangle sequence.

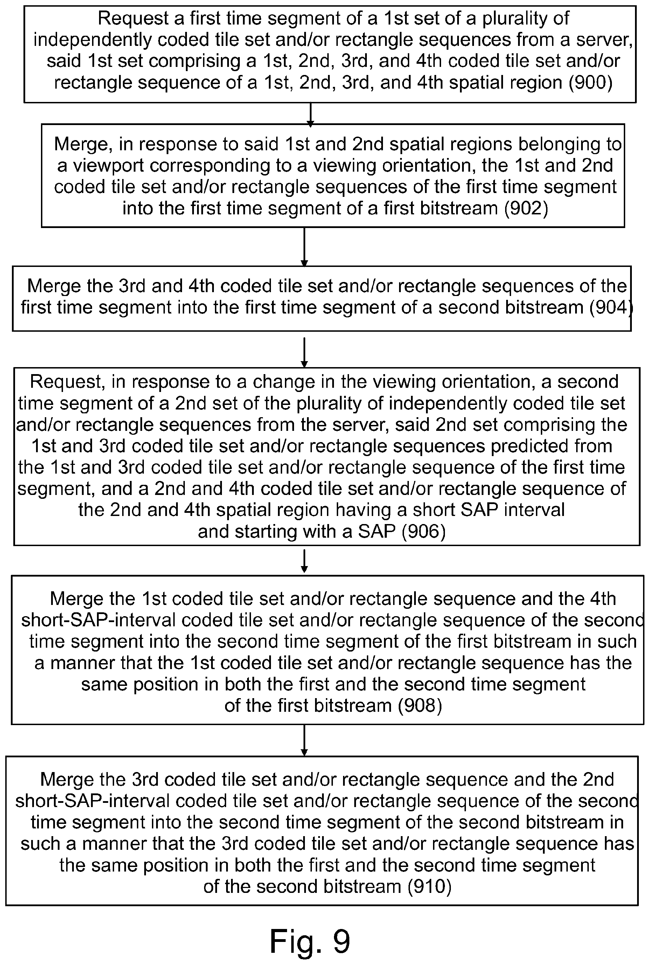

The method, which is disclosed in Figure 9, comprises:

- A client requests (900), with a first set of requests, a first time segment of a first set of a plurality of independently coded tile set and/or rectangle sequences from a server, said first set comprising a first, second, third, and fourth coded tile set and/or rectangle sequence of a first, second, third, and fourth spatial region, respectively.
- The first and second coded tile set and/or rectangle sequences of the first time segment are merged (902) into the first time segment of a first bitstream.
- The third and fourth coded tile set and/or rectangle sequences of the first time segment are merged (904) into the first time segment of a second bitstream.
- In response to a change in the viewing orientation, the client requests (906), with a second set of requests, a second time segment of a second set of the plurality of independently coded tile set and/or rectangle sequences from the server, said second set comprising the first and third coded tile set and/or rectangle sequences and a second and fourth short-SAP-interval coded tile set and/or rectangle sequence of the second and fourth spatial region, and said first and second time segments being contiguous. The second time segment of the second and fourth short-SAP-interval coded tile set and/or rectangle sequence starts with a stream access point (SAP), while the second time segment of the first and third coded tile set and/or rectangle sequence is predicted from the first time segment of the first and third coded tile set and/or rectangle sequence, respectively.
- The first coded tile set and/or rectangle sequence and the forth short-SAP-interval coded tile set and/or rectangle sequence of the second time segment are merged (908) into the second time segment of the first bitstream in such a manner that the first coded tile set and/or rectangle sequence has a first position in both the first and the second time segment of the first bitstream.
- The third coded tile set and/or rectangle sequence and the second short-SAP-interval coded tile set and/or rectangle sequence of the second time segment are merged (910) into the second time segment of the second bitstream in such a manner that the third coded tile set and/or rectangle sequence has a second position in both the first and the second time segment of the second bitstream.

The term position above, with reference to the first position and the second position, may be defined as a spatial position within a coded picture or the respective reconstructed picture. For example, the position may refer to a particular position within a tile grid. In another example, the position may refer to a particular partitioning of a picture into slices, and a particular slice position within the partitioning.

According to an embodiment, the first and second coded tile set and/or rectangle sequences of the first time segment are of a first picture quality, the third and fourth coded tile set and/or rectangle sequences of the first time segment are of a second picture quality, the first coded tile set and/or rectangle sequence and the forth short-SAP-interval coded tile set and/or rectangle sequence of the second time segment are of the first picture quality, and the third coded tile set and/or rectangle sequence and the second short-SAP-interval coded tile set and/or rectangle sequence of the second time segment are of the second picture quality.

According to an embodiment, the first picture quality is characterized by at least one of a first sampling density, a first chroma format, a first sample and/or transform coefficient quantization accuracy, a first bit-depth, a first dynamic range, and a first color gamut; the second picture quality is characterized by at least one of a second sampling density, a second chroma format, a second sample and/or transform coefficient quantization accuracy, a second bit-depth, a second dynamic range, and a second color gamut; and at least one of the first sampling density, the first chroma format, the first sample and/or transform coefficient quantization accuracy, the first bit-depth, the first dynamic range, and the first color gamut is greater than or provides an enhanced perceived picture quality or fidelity compared to, the second sampling density, the second chroma format, the second sample and/or transform coefficient quantization accuracy, the second bit-depth, the second dynamic range, and the second color gamut, respectively.

According to an embodiment, the client selects

- the first and second coded tile set and/or rectangle sequences of the first time segment to be requested on the basis them covering a first viewport of a first viewing orientation at a first time,

- the third and fourth coded tile set and/or rectangle sequences of the first time segment to be requested on the basis them falling outside of the first viewport,
- the first coded tile set and/or rectangle sequence and the forth short-SAP-interval coded tile set and/or rectangle sequence of the second time segment to be requested on the basis them covering a second viewport of a second viewing orientation at a second time, and
- the third coded tile set and/or rectangle sequence and the second short-SAP-interval coded tile set and/or rectangle sequence of the second time segment to be requested on the basis them falling outside of the second viewport.

According to an embodiment, the first time approximately or exactly matches the time of the first set of requests, and the second time approximately or exactly matches the time of the second set of requests.

According to an embodiment, said merging comprises for a time instance (e.g. an access unit) that the coded tile rectangles of different coded tile rectangle sequences and of the same time instance are vertically merged into a coded picture such that, for each coded tile rectangle, a coded slice is formed within the coded picture.

According to an embodiment, said merging comprises for a time instance (e.g. an access unit) that the coded tile sets of different coded tile set sequences and of the same time instance are vertically merged, such that for each coded tile set, a coded slice is formed within the coded picture, or coded tile sets are used also in the coded picture.

According to an embodiment, the method may be applied to 360-degree video streaming wherein coded tile set and/or rectangle sequences are made available as individual Representations and tile-based encoding and streaming is used. Moreover, additional Representations with more frequent SAPs are made available to reduce the switching delay related to the viewing orientation change, and coded tile set and/or rectangle sequences are merged e.g. to limit the number of required decoder instances.

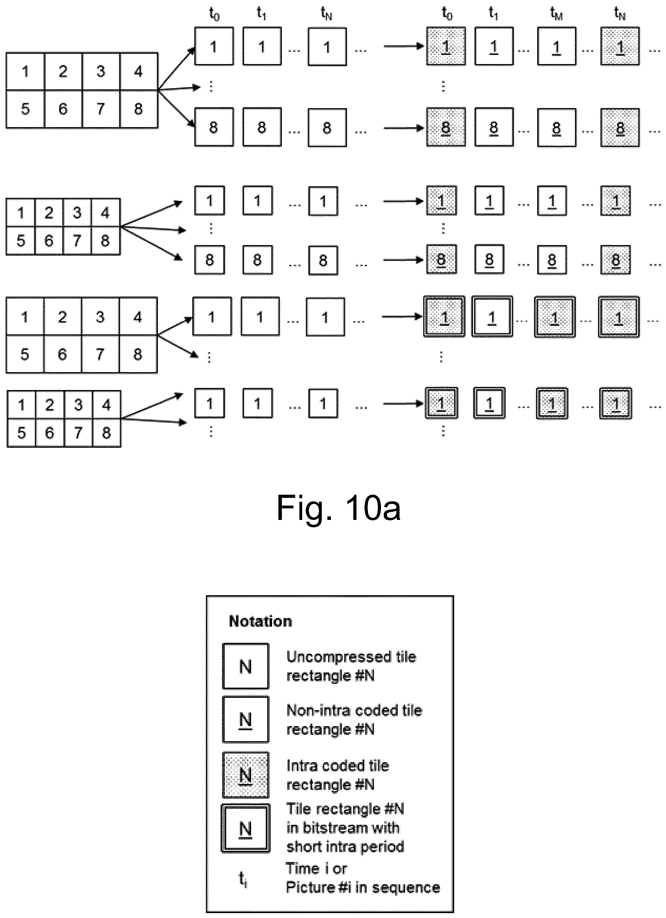

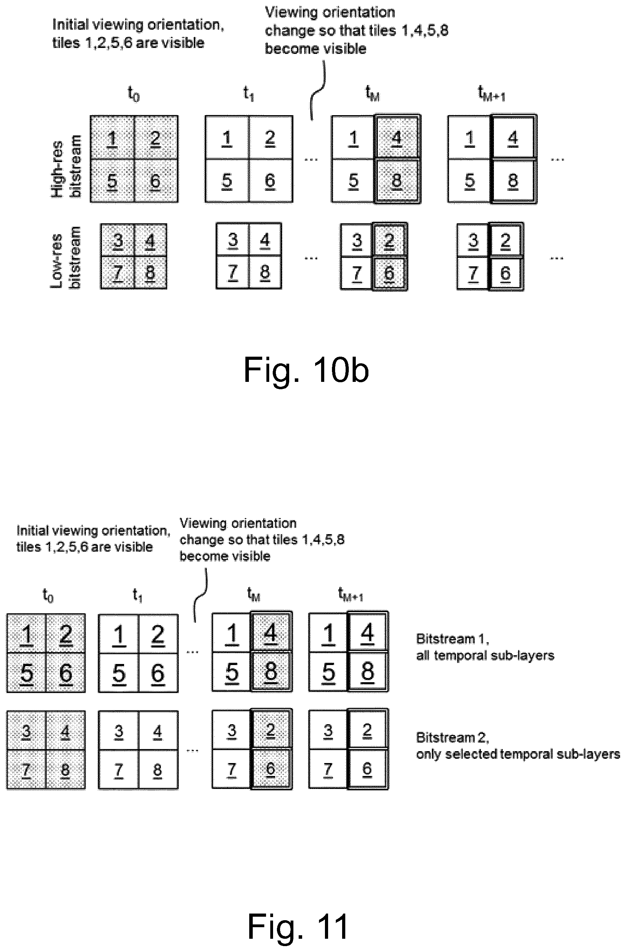

The method and embodiments related thereto may be illustrated by referring to Figures 10a and 10b using tile rectangles and tile rectangle sequences. It should be understood that similar example embodiments can be realized by using independently coded tile sets. Figure 10a shows an example of tile-based encoding first bitstreams having longer SAP intervals and second bitstreams having shorter SAP intervals. Both the first and the second bitstreams include a bitstream streamed at higher quality, such as higher resolution (quality 1, intended for primary viewport streaming) and a bitstream streamed at lower quality, such as lower resolution (quality 2). In Figure 10a, the two top-most bitstreams have the SAP period of N, and the two bottom-most bitstreams have the SAP period of M, M<N. The notation included in Figure 10a indicates the different markings for uncompressed tile rectangles, intra/non-intra tile rectangles and tile rectangles having the short SAP period of M.

The initial viewing orientation is such that tile rectangles 1, 2, 5 and 6 are streamed at quality 1 (higher quality), and the remaining tile rectangles 3, 4, 7 and 8 are streamed at quality 2 (lower quality). Now two bitstreams, shown in Figure 10b, can be merged from tile rectangles of different quality, such as different resolution, where the higher quality bitstream contains tile rectangles 1, 2, 5 and 6 and the lower quality bitstream contains tile rectangles 3, 4, 7 and 8. Content from the bitstreams having long SAP interval (i.e. the two top-most bitstreams) is initially streamed. At time instance to, the tile rectangles are encoded as intra tile rectangles and time instance $t_1$, the tile rectangles are encoded as non-intra tile rectangles, as shown in Figure 10b.

It is further considered that the viewing orientation changes before requesting or streaming pictures starting from $t_M$ so that different tile rectangles are merged into the same bitstream. As a result, tile rectangles 1, 4, 5, and 8 are streamed at quality 1 and the remaining tile rectangles 2, 3, 6 and 7 at quality 2. It is noted that the quality of tile rectangles 1, 3, 5 and 7 does not change as a response to the viewing orientation change. Consequently, they can be located in the same position within the merged frame as earlier and they need not to be streamed from the short SAP interval bitstreams, but temporal prediction is continued for the tile rectangles 1, 3, 5 and 7,thereby achieving a better streaming bitrate by continuing to stream tile rectangles 1, 3, 5 and 7 from the bitstreams having long SAP interval (i.e., the two top-most bitstreams). Tile rectangles whose resolution changes, i.e. tile rectangles 2, 4, 6 and 8, in response to the viewing orientation change are taken from the bitstreams with a short SAP interval (i.e., the two bottom-most bitstreams) and are located in available positions within the merged frame.

As a result, at time instances $t_M$ and $t_{M+1}$, the tile rectangles 1 and 5 are continued to streamed as higher quality non-intra tile rectangles, having an intra tile rectangle for temporal prediction at time instance $t_0$. Similarly, the tile rectangles 3 and 7 are continued to streamed at time instances $t_M$ and $t_{M+1}$ as lower quality non-intra tile rectangles, having an intra tile rectangle for temporal prediction at time instance $t_0$. The tile rectangles 4 and 8, in turn, are taken from the bitstreams with a short SAP interval and streamed as higher quality intra tile rectangles at time instance $t_M$ and as higher quality non-intra tile rectangles at time instance $t_{M+1}$, (i.e. predicted from the intra tile rectangles at time instance $t_M$). Similarly, tile rectangles 2 and 6 are taken from the bitstreams with a short SAP interval and streamed as lower quality intra tile rectangles at time instance $t_M$ and as lower quality non-intra tile rectangles at time instance $t_{M+1}$, (i.e. predicted from the intra tile rectangles at time instance $t_M$), as shown in Figure 10b.

As a result, significant streaming bitrate reduction, up to several tens of per cents compared to prior known tile-based encoding and streaming methods, may be achieved.

According to an embodiment, indications of region-wise packing are included in or along the merged bitstream. The region-wise mapping information is time-varying in a merged bitstream where the viewing orientation causes changes of quality and/or resolution of tiles. A dynamic metadata mechanism may be used to carry such time-varying region-wise mapping information, e.g. SEI message(s), timed metadata track, sample group(s) and/or sample auxiliary information.

More than one encoded bitstream may be provided, e.g. with different spatial resolution and/or picture quality. Players can choose tracks (or Representations) to be to be decoded and played based on the current viewing orientation. Herein, for example each motion-constrained tile set can be made available in its own track (and Representation) and temporal motion-constrained tile sets SEI message of HEVC can be used to indicate the presence of motion-constrained tile sets in the bitstream.

According to an embodiment, two decoder instances and two merged bitstreams may be used even in the case of tile rectangles having the same resolution. The usage of two decoder instances enables decoding complexity reduction as follows: the bitstream of the low-quality tiles may be pruned to contain only a temporal subset, e.g. temporal sub-layer 0 only. Therefore the bitstream of the low-quality tiles consumes less decoding resources.

Figure 11 illustrates the embodiment, where the bitstream of the lower quality tile rectangles has the same resolution as the bitstream of the higher quality tile rectangles (indicated as the same size of boxes in both bitstreams). Higher quality tile rectangles are indicated with tile numbers having a bigger font size than the font size of the tile numbers of the lower quality tile rectangles. The locations of the tile rectangles in the bitstreams are similar to that of Figure 10b. However, herein the higher quality bitstream contains all temporal sub-layers, whereas the lower quality bitstream contains only a subset of temporal sub-layers, possibly the temporal sub-layer 0 only. It is noted that the similar temporal pruning of the low-quality bitstream can be performed in the multi-resolution embodiment described in Figure 10b.

According to an embodiment, the coded tile rectangle sequences may be encoded with identical use of reference pictures to simplify their merging. For example, the same reference pictures included in reference picture sets in HEVC may be used for corresponding pictures in different bitstreams. Indications may be generated in or along the bitstreams for indicating the reference picture usage scheme or that the reference picture usage scheme is the same as in another indicated bitstream. Particularly, the use of IDR pictures may be avoided except when the SAPs are aligned in all bitstreams.

According to an embodiment, the merging process may comprise rewriting parameter sets and/or slice segment headers entirely or partially when compared to those in the full-picture track or bitstream from which the coded tile set sequences are extracted or compared to those in the coded tile rectangle sequences.

According to an embodiment, a file encapsulator or alike generates a tile set or rectangle collection track that may be utilized in carrying out the merging (a.k.a. rewriting). According to an embodiment, a file decapsulator or alike parses a tile set or rectangle collection track to carry out the rewriting.

A full-picture-compliant tile set or rectangle collection {track | bitstream} is a {track | bitstream} that conforms to the full-picture {track | bitstream} format and extracts coded video data from two or more tile set {tracks | bitstreams} and/or tile rectangle {tracks | bitstreams}. Here, the notation {optionA | optionB} illustrates alternatives, i.e. either optionA or optionB, which is selected consistently in all selections. A full-picture-compliant tile set or rectangle collection track can be played as any full-picture track using the parsing and decoding process of full-picture tracks. A full-picture-compliant bitstream can be decoded as with any full-picture bitstream using the decoding process of full-picture bitstreams.

According to an embodiment, indications of region-wise packing are included into or along and/or decoded from or along a tile set or rectangle collection track. Region-wise packing information may be for example included into and/or decoded from, e.g. SEI message(s), timed metadata track, sample group(s) and/or sample auxiliary information.

In an embodiment, parameter sets are included in the sample entry description of the tile set or rectangle collection track(s). In an embodiment, parameter sets are included in samples of the tile set or rectangle collection track(s) (alternatively or additionally to including parameter sets in sample entry description of the tile set or rectangle collection track(s)). In an embodiment, parameter sets are included in-line in samples. In an embodiment, parameter sets are, alternatively or additionally to including parameter sets in-line in samples, constructed in samples. For example, a part of a parameter set may be extracted from a sample of another track, and another part of a parameter set may be included using an in-line constructor.

In an embodiment, NAL unit header(s) of a tile set or rectangle collection track are included using an in-line constructor.

In an embodiment, slice headers or slice segment headers are included in samples of a tile set or rectangle collection track using an in-line constructor. In an embodiment, additionally or alternatively to including slice headers or slice segment headers with in-line constructor, slice headers or slice segment headers may be extracted from another track. For example, part of the slice headers or slice segment header may be extracted from a sample of another track, and another part of the slice headers or slice segment header may be included using an in-line constructor.

In an example, an extractor in a tile set or rectangle collection track may for example comprise an in-line constructor including a slice header and a sample constructor extracting coded video data for a slice from a referenced tile rectangle track.

In different embodiments, a tile set or rectangle collection track may comprise one or more extractors comprising one or more constructors capable of handling varying length data extraction described in the following.

According to a first embodiment for handling varying length data extraction, a client limits the data_length field of a sample constructor as follows when resolving the sample constructor: When data_offset + data_length is greater than the size of the sample, the bytes from the byte pointed to by data_offset until the end of the sample, inclusive, are copied. In other words, data_length is saturated by the client in a manner that it does not exceed a sample boundary.

According to a second embodiment for handling varying length data extraction, a client interprets data_length equal to 0 in a sample constructor as follows when resolving the sample contstructor: When data_length is equal to 0 and data_offset refers to the beginning of a NAL unit length field, the entire single referenced NAL unit without the NAL unit length field is copied. When data length is equal to 0 and data_offset does not refer to the beginning of a NAL unit length field, the copied data spans from the byte pointed to by data offset until the end of the referenced NAL unit, inclusive.

According to a third embodiment for handling varying length data extraction, a new constructor (e.g. NAL unit constructor) is specified for extractors, e.g. as follows:

```
class aligned(8) NALUnitConstructor () {
        unsigned int(8) track_ref_index;
        signed int(8) sample_offset;
        unsigned int((lengthSizeMinusOne+1)*8)
            nal_unit_offset;
        unsigned int((lengthSizeMinusOne+1)*8)
            data_offset;
        unsigned int((lengthSizeMinusOne+1)*8)
            data_length;
}
```

The semantics of track_ref_index and sample_offset are specified as described earlier. nal_unit_offset is an index of the NAL units of the referred sample. The first NAL unit in the sample may be defined to have index 1 and index 0 may be reserved. data_offset may be defined as the offset of the first byte within the NAL unit. If the extraction starts with the first byte of data in that NAL unit, the offset takes the value 0. data length gives the number of bytes to copy. If data_length is equal to 0, the bytes to copy are from data_offset to the end of the NAL unit.

NAL unit constructor may be used to refer to the slice data of different sizes assuming that the slice header of the respective NAL units and bitstreams is of equal length and the number of NAL units in different bitstreams is equal.

According to a fourth embodiment for handling varying length data extraction, a new constructor (e.g. slice data constructor) is specified for extractors, e.g. as follows:

```
 class aligned(8) SliceDataConstructor () {
        unsigned int(8) track_ref_index;
        signed int(8) sample_offset;
        unsigned int((lengthSizeMinusOne+1)*8)
            nal_unit_offset;
 }
```

The semantics of track_ref_index, sample_offset, and nal_unit_offset are specified as described earlier. SliceDataConstructor copies the slice data of the referred NAL unit.

SliceDataConstructor may be used to refer to the slice data of different sizes assuming that the number of NAL units in different bitstreams is equal.

According to an embodiment, a first coded tile set or rectangle sequence having a short SAP interval is encapsulated as a track with a first track identifier value into a first file and a second coded tile set or rectangle sequence (of the same tile set or tile rectangle. respectively) having a long SAP interval is encapsulated as a track with the first track identifier value into a second file. A track containing extractors for guided rewriting to merge tile sets or tile rectangles (i.e. a tile set or rectangle collection track) is constructed with a reference to the first track identifier value. Hence, an extractor refers to the first coded tile set or rectangle sequence or the second coded tile set or rectangle sequence, whichever is streamed and received. When the first embodiment for handling varying length data extraction is in use, the extractor may contain a data_length field that is larger than any sample size. When the second embodiment for handling varying length data extraction is in use, the extractor may contain a data length field equal to 0. When the third or fourth embodiment for handling varying length data extraction is in use, the extractor may be include a NALUnitConstructor or a SliceDataConstructor, respectively. This way, the same extractor track is sufficient for a single set of merged tile sets or tile rectangles, regardless of whether the tile sets or tile rectangles originate from the coded tile set or rectangle sequence of short or long SAP interval and regardless of the point in which the viewing orientation changes.

According to an embodiment, tile set or rectangle collection tracks are indicated as Representations in a DASH MPD. Tile set or rectangle collection Representations may be dependent Representations, and dependencies on particular tile set or rectangle Representations may be indicated by using the @dependencyId attribute.

According to an embodiment, availability of tile set or rectangle Representations and tile set or rectangle collection Representations is parsed from DASH MPD. A DASH client may determine which tile set or rectangle Representations best suit its purpose (e.g. current viewing orientation). For example, the DASH client may select which tile set or rectangle Representations are streamed at higher resolution, and which ones at lower resolution. The DASH client may select which tile set or rectangle collection Representation can be used for merging the selected which tile set or rectangle Representations, e.g. based on @dependencyId and/or region-wise packing information. For example, the DASH client may select a first tile set or rectangle collection Representation that refers to all tile set or rectangle Representations that are selected to be streamed at higher resolution, and a second tile set or rectangle collection Representation that refers to all tile set or rectangle Representations that are selected to be streamed at lower resolution. Accordingly, the DASH client may request (Sub)segment(s) of the selected tile set or rectangle collection Representation(s) and the selected tile set or rectangle Representations. When responding to a viewing orientation change by requesting (Sub)segments of a first set of tile set or rectangle Representations starting with a SAP and (Sub)segments of a second set of tile set or rectangle Representations predicted from the earlier (Sub)segment(s), the DASH client may decode region-wise packing information of tile set or rectangle collection Representations and select such a tile set or rectangle collection Representation that the position of the second set of tile set or rectangle Representations remains unchanged within the tile set or rectangle collection Representation.

In an embodiment, the tile set or tile rectangle order in the extractor track may depend on which was the previous extractor track that was assumed to be processed. In other words, the extractor track may be conditional on an earlier extractor track that was processed. A track reference of a particular type (e.g. 'swfr' - switch from) may be used for indicating which extractor track is required to be processed earlier. DASH MPD may include information equivalent to 'swfr', e.g. using the @associationId attribute.

According to an embodiment, the Switching element of DASH may be appended with new value(s) for @type that specifies the switching strategy. For example, @value equal to conditional_media may be specified to indicate media level switching on the condition that a Representation indicated by @associationId as described above was processed before the switching point. Similarly, @value equal to conditional_bitstream may be specified to indicate bitstream level switching on the condition that a Representation indicated by @associationId as described above was processed before the switching point

According to an embodiment, a property descriptor may be specified to include one or more of the fields of the Switching element. The property descriptor indicates switching points that are applicable under the condition that a Representation indicated by @associationId as described above was processed before the switching point.

It is noted that the merging process can be carried out in different entities in the end-to-end system, such as:

- Content authoring, i.e. merged bitstreams can be pre-constructed.
- Origin server, i.e. merged bitstreams may be formed in a server, e.g. as a response to client's request.
- A middle-box, such as an edge server. Merged bitstreams may be formed for example in a CDN edge server or a mobile edge cloud that receive all tile rectangle sequences and compose a merged bitstream e.g. as a response to client's request.
- A client (e.g. a player within the client). The coded tile rectangle sequences are received separately and merged at the client before decoding.

It needs to be understood that the embodiments are not limited to any particular splitting to tile sets or tile rectangles. Moreover, the embodiments are not limited to any particular shape or grid of tile sets or tile rectangles in the merged bitstream.

It needs to be understood that while some embodiments were described with reference to tile rectangles or tile rectangle sequences, embodiments similarly apply to tiles, tile sets, motion-constrained tiles, motion-constrained tile sets, isolated regions, slices, motion-constrained slices, or any similar spatial concepts and the sequences of such spatial units.

Regarding the options for transmission connections and protocols, the embodiments may be realized with various protocols enabling to request segments or sub-segments, including but not limited to different versions of HTTP, such as HTTP/1.1 and HTTP/2.0, WebSockets, QUIC and SPDY. Some embodiments have been described with reference to HTTP GET requests, but it needs to be understood that embodiments can be similarly realized with requests specified in other protocols.

The embodiments may be realized with various configurations to establish and use TCP connections, including but not limited to the following.

Separate TCP connections may be used for downloading different Representations. In the case that bandwidth rapidly decreases and there appears a danger of a pause in playback, this enables easier and faster termination of the reception of (Sub)segments from temporal-enhancement base-quality Representations and/or from temporal-enhancement predicted Representations and/or from temporal-base predicted Representations.

Alternatively or additionally, the same TCP connection may be used for different Representations. In that case, the HTTP GET requests may be pipelined. The client may select the order of HTTP GET requests in a manner that a greater duration of temporal-base segments gets buffered in the client (compared to the buffered duration of temporal-enhancement segments).

Embodiments may be realized with various types of access links and link layer protocols and their configurations for access links. For example, if QoS specified by 3GPP is in use, the TCP connection for temporal-enhancement segments could run on a best-effort QoS while the temporal-base segments could have a guaranteed QoS channel.

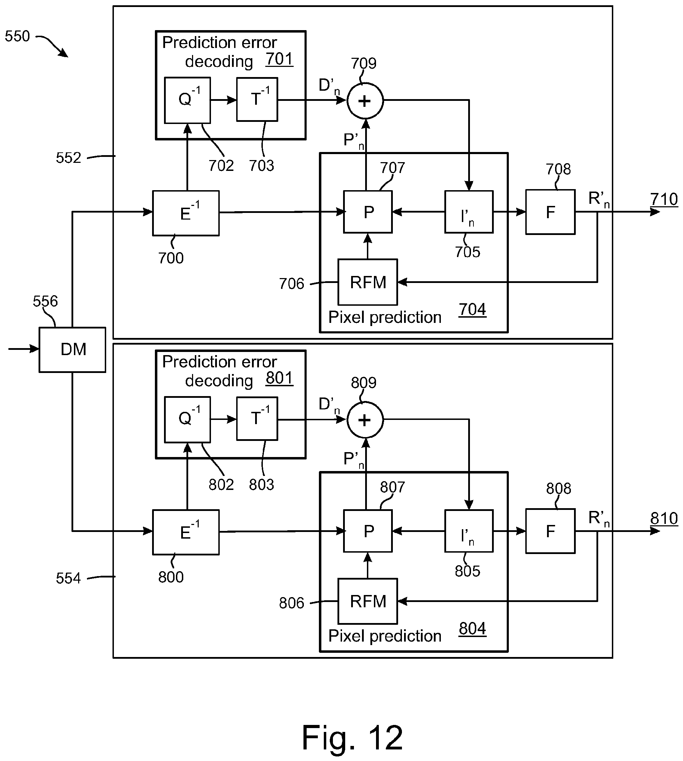

Figure 12 shows a block diagram of a video decoder suitable for employing embodiments of the invention. Figure 12 depicts a structure of a two-layer decoder, but it would be appreciated that the decoding operations may similarly be employed in a single-layer decoder.

The video decoder 550 comprises a first decoder section 552 for a base layer and a second decoder section 554 a predicted layer. Block 556 illustrates a demultiplexer for delivering information regarding base layer pictures to the first decoder section 552 and for delivering information regarding predicted layer pictures to the second decoder section 554. Reference P'n stands for a predicted representation of an image block. Reference D'n stands for a reconstructed prediction error signal. Blocks 704, 804 illustrate preliminary reconstructed images (I'n). Reference R'n stands for a final reconstructed image. Blocks 703, 803 illustrate inverse transform ($T^{-1}$). Blocks 702, 802 illustrate inverse quantization ($Q^{-1}$). Blocks 701, 801 illustrate entropy decoding ($E^{-1}$). Blocks 705, 805 illustrate a reference frame memory (RFM). Blocks 706, 806 illustrate prediction (P) (either inter prediction or intra prediction). Blocks 707, 807 illustrate filtering (F). Blocks 708, 808 may be used to combine decoded prediction error information with predicted base layer/predicted layer images to obtain the preliminary reconstructed images (I'n). Preliminary reconstructed and filtered base layer images may be output 709 from the first decoder section 552 and preliminary reconstructed and filtered base layer images may be output 809 from the first decoder section 554.

Herein, the decoder should be interpreted to cover any operational unit capable to carry out the decoding operations, such as a player, a receiver, a gateway, a demultiplexer and/or a decoder.

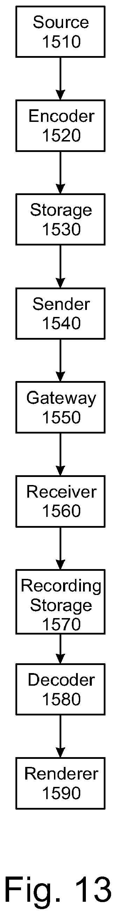

Figure 13 is a graphical representation of an example multimedia communication system within which various embodiments may be implemented. A data source 1510 provides a source signal in an analog, uncompressed digital, or compressed digital format, or any combination of these formats. An encoder 1520 may include or be connected with a preprocessing, such as data format conversion and/or filtering of the source signal. The encoder 1520 encodes the source signal into a coded media bitstream. It should be noted that a bitstream to be decoded may be received directly or indirectly from a remote device located within virtually any type of network. Additionally, the bitstream may be received from local hardware or software. The encoder 1520 may be capable of encoding more than one media type, such as audio and video, or more than one encoder 1520 may be required to code different media types of the source signal. The encoder 1520 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in the figure only one encoder 1520 is represented to simplify the description without a lack of generality. It should be further understood that, although text and examples contained herein may specifically describe an encoding process, one skilled in the art would understand that the same concepts and principles also apply to the corresponding decoding process and vice versa.

The coded media bitstream may be transferred to a storage 1530. The storage 1530 may comprise any type of mass memory to store the coded media bitstream. The format of the coded media bitstream in the storage 1530 may be an elementary self-contained bitstream format, or one or more coded media bitstreams may be encapsulated into a container file, or the coded media bitstream may be encapsulated into a Segment format suitable for DASH (or a similar streaming system) and stored as a sequence of Segments. If one or more media bitstreams are encapsulated in a container file, a file generator (not shown in the figure) may be used to store the one more media bitstreams in the file and create file format metadata, which may also be stored in the file. The encoder 1520 or the storage 1530 may comprise the file generator, or the file generator is operationally attached to either the encoder 1520 or the storage 1530. Some systems operate "live", i.e. omit storage and transfer coded media bitstream from the encoder 1520 directly to the sender 1540. The coded media bitstream may then be transferred to the sender 1540, also referred to as the server, on a need basis. The format used in the transmission may be an elementary self-contained bitstream format, a packet stream format, a Segment format suitable for DASH (or a similar streaming system), or one or more coded media bitstreams may be encapsulated into a container file. The encoder 1520, the storage 1530, and the server 1540 may reside in the same physical device or they may be included in separate devices. The encoder 1520 and server 1540 may operate with live real-time content, in which case the coded media bitstream is typically not stored permanently, but rather buffered for small periods of time in the content encoder 1520 and/or in the server 1540 to smooth out variations in processing delay, transfer delay, and coded media bitrate.

The server 1540 sends the coded media bitstream using a communication protocol stack. The stack may include but is not limited to one or more of Real-Time Transport Protocol (RTP), User Datagram Protocol (UDP), Hypertext Transfer Protocol (HTTP), Transmission Control Protocol (TCP), and Internet Protocol (IP). When the communication protocol stack is packet-oriented, the server 1540 encapsulates the coded media bitstream into packets. For example, when RTP is used, the server 1540 encapsulates the coded media bitstream into RTP packets according to an RTP payload format. Typically, each media type has a dedicated RTP payload format. It should be again noted that a system may contain more than one server 1540, but for the sake of simplicity, the following description only considers one server 1540.

If the media content is encapsulated in a container file for the storage 1530 or for inputting the data to the sender 1540, the sender 1540 may comprise or be operationally attached to a "sending file parser" (not shown in the figure). In particular, if the container file is not transmitted as such but at least one of the contained coded media bitstream is encapsulated for transport over a communication protocol, a sending file parser locates appropriate parts of the coded media bitstream to be conveyed over the communication protocol. The sending file parser may also help in creating the correct format for the communication protocol, such as packet headers and payloads. The multimedia container file may contain encapsulation instructions, such as hint tracks in the ISOBMFF, for encapsulation of the at least one of the contained media bitstream on the communication protocol.

The server 1540 may or may not be connected to a gateway 1550 through a communication network, which may e.g. be a combination of a CDN, the Internet and/or one or more access networks. The gateway may also or alternatively be referred to as a middle-box. For DASH, the gateway may be an edge server (of a CDN) or a web proxy. It is noted that the system may generally comprise any number gateways or alike, but for the sake of simplicity, the following description only considers one gateway 1550. The gateway 1550 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions.

The system includes one or more receivers 1560, typically capable of receiving, demodulating, and de-capsulating the transmitted signal into a coded media bitstream. The coded media bitstream may be transferred to a recording storage 1570. The recording storage 1570 may comprise any type of mass memory to store the coded media bitstream. The recording storage 1570 may alternatively or additively comprise computation memory, such as random access memory. The format of the coded media bitstream in the recording storage 1570 may be an elementary self-contained bitstream format, or one or more coded media bitstreams may be encapsulated into a container file. If there are multiple coded media bitstreams, such as an audio stream and a video stream, associated with each other, a container file is typically used and the receiver 1560 comprises or is attached to a container file generator producing a container file from input streams. Some systems operate "live," i.e. omit the recording storage 1570 and transfer coded media bitstream from the receiver 1560 directly to the decoder 1580. In some systems, only the most recent part of the recorded stream, e.g., the most recent 10-minute excerption of the recorded stream, is maintained in the recording storage 1570, while any earlier recorded data is discarded from the recording storage 1570.

The coded media bitstream may be transferred from the recording storage 1570 to the decoder 1580. If there are many coded media bitstreams, such as an audio stream and a video stream, associated with each other and encapsulated into a container file or a single media bitstream is encapsulated in a container file e.g. for easier access, a file parser (not shown in the figure) is used to decapsulate each coded media bitstream from the container file. The recording storage 1570 or a decoder 1580 may comprise the file parser, or the file parser is attached to either recording storage 1570 or the decoder 1580. It should also be noted that the system may include many decoders, but here only one decoder 1570 is discussed to simplify the description without a lack of generality

The coded media bitstream may be processed further by a decoder 1570, whose output is one or more uncompressed media streams. Finally, a renderer 1590 may reproduce the uncompressed media streams with a loudspeaker or a display, for example. The receiver 1560, recording storage 1570, decoder 1570, and renderer 1590 may reside in the same physical device or they may be included in separate devices.

A sender 1540 and/or a gateway 1550 may be configured to perform switching between different representations e.g. for switching between different viewports of 360-degree video content, view switching, bitrate adaptation and/or fast start-up, and/or a sender 1540 and/or a gateway 1550 may be configured to select the transmitted representation(s). Switching between different representations may take place for multiple reasons, such as to respond to requests of the receiver 1560 or prevailing conditions, such as throughput, of the network over which the bitstream is conveyed. A request from the receiver can be, e.g., a request for a Segment or a Subsegment from a different representation than earlier, a request for a change of transmitted scalability layers and/or sub-layers, or a change of a rendering device having different capabilities compared to the previous one. A request for a Segment may be an HTTP GET request. A request for a Subsegment may be an HTTP GET request with a byte range. Additionally or alternatively, bitrate adjustment or bitrate adaptation may be used for example for providing so-called fast start-up in streaming services, where the bitrate of the transmitted stream is lower than the channel bitrate after starting or random-accessing the streaming in order to start playback immediately and to achieve a buffer occupancy level that tolerates occasional packet delays and/or retransmissions. Bitrate adaptation may include multiple representation or layer up-switching and representation or layer down-switching operations taking place in various orders.

A decoder 1580 may be configured to perform switching between different representations e.g. for switching between different viewports of 360-degree video content, view switching, bitrate adaptation and/or fast start-up, and/or a decoder 1580 may be configured to select the transmitted representation(s). Switching between different representations may take place for multiple reasons, such as to achieve faster decoding operation or to adapt the transmitted bitstream, e.g. in terms of bitrate, to prevailing conditions, such as throughput, of the network over which the bitstream is conveyed. Faster decoding operation might be needed for example if the device including the decoder 1580 is multi-tasking and uses computing resources for other purposes than decoding the video bitstream. In another example, faster decoding operation might be needed when content is played back at a faster pace than the normal playback speed, e.g. twice or three times faster than conventional real-time playback rate.

In the above, some embodiments were described with reference to monoscopic video content. It needs to be understood that embodiments similarly apply to stereoscopic and multiview video content.

In the above, some embodiments were described with reference to particular projection formats, such as the equirectangular panorama projection or cubemap projection. It needs to be understood that embodiments are not constrained to any particular projection format, but embodiments generally apply to any projection formats.

In the above, some embodiments have been described in relation to DASH or MPEG-DASH. It needs to be understood that embodiments could be similarly realized with any other similar streaming system, and/or any similar protocols as those used in DASH, and/or any similar segment and/or manifest formats as those used in DASH, and/or any similar client operation as that of a DASH client. For example, some embodiments could be realized with the M3U manifest format.

In the above, some embodiments have been described in relation to ISOBMFF, e.g. when it comes to segment format. It needs to be understood that embodiments could be similarly realized with any other file format, such as Matroska, with similar capability and/or structures as those in ISOBMFF.

In the above, where the example embodiments have been described with reference to an encoder, it needs to be understood that the resulting bitstream and the decoder may have corresponding elements in them. Likewise, where the example embodiments have been described with reference to a decoder, it needs to be understood that the encoder may have structure and/or computer program for generating the bitstream to be decoded by the decoder.

The embodiments of the invention described above describe the codec in terms of separate encoder and decoder apparatus in order to assist the understanding of the processes involved. However, it would be appreciated that the apparatus, structures and operations may be implemented as a single encoder-decoder apparatus/structure/operation. Furthermore, it is possible that the coder and decoder may share some or all common elements.

Although the above examples describe embodiments of the invention operating within a codec within an electronic device, it would be appreciated that the invention as defined in the claims may be implemented as part of any video codec. Thus, for example, embodiments of the invention may be implemented in a video codec which may implement video coding over fixed or wired communication paths.

Thus, user equipment may comprise a video codec such as those described in embodiments of the invention above. It shall be appreciated that the term user equipment is intended to cover any suitable type of wireless user equipment, such as mobile telephones, portable data processing devices or portable web browsers.

Furthermore elements of a public land mobile network (PLMN) may also comprise video codecs as described above.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

**Claims**

1. A method for viewport-adaptive streaming comprising:

   requesting (900), by a client, a first time segment of a first set of a plurality of independently coded tile set and/or rectangle sequences from a server, said first set comprising a first, second, third, and fourth coded tile set and/or rectangle sequence of a first, second, third, and fourth spatial region of a picture, respectively, and being originated from bitstreams having a first stream access point (SAP) interval, wherein the first and second spatial regions belong to a first viewport corresponding to a first viewing orientation, and the third and fourth spatial regions fall outside the first viewport, wherein the first and second coded tile set and/or rectangle sequences of the first time segment are of a first higher picture quality, the third and fourth coded tile set and/or rectangle sequences of the first time segment are of a second lower picture quality;
   merging (902) the first and second coded tile set and/or rectangle sequences of the first time segment into the first time segment of a first bitstream;
   merging (904) the third and fourth coded tile set and/or rectangle sequences of the first time segment into the first time segment of a second bitstream;
   requesting (906), in response to a change in the viewing orientation from the first viewport to a second viewport, a second time segment of a second set of the plurality of independently coded tile set and/or rectangle sequences from the server, wherein the first and fourth spatial regions belong to a second viewport corresponding to a second viewing orientation, and the second and third spatial regions fall outside the second viewport, said second set comprising

   - a first and third coded tile set and/or rectangle sequences being temporally predicted from one or more tile rectangles of the first and third coded tile set and/or rectangle sequence of the first time segment, respectively, and
   - a second and fourth coded tile set and/or rectangle sequence of the second and fourth spatial region starting with a SAP and being originated from bitstreams having a second shorter SAP interval;

   merging (908) the first coded tile set and/or rectangle sequence and the fourth shorter-SAP-interval coded tile set and/or rectangle sequence of the second time segment into the second time segment of the first bitstream in such a manner that the first coded tile set and/or rectangle sequence has the same spatial position within a respective reconstructed picture in both the first and the second time segment of the first bitstream, wherein the first coded tile set and/or rectangle sequence and the fourth shorter-SAP-interval coded tile set and/or rectangle sequence of the second time segment are of the first higher picture quality; and
   merging (910) the third coded tile set and/or rectangle sequence and the second shorter-SAP-interval coded tile set and/or rectangle sequence of the second time segment into the second time segment of the second bitstream in such a manner that the third coded tile set and/or rectangle sequence has the same spatial position within a respective reconstructed picture in both the first and the second time segment of the second bitstream, wherein the third coded tile set and/or rectangle sequence and the second shorter-SAP-interval coded tile set and/or rectangle sequence of the second time segment are of the second lower picture quality.

2. The method according to claim 1, wherein said merging comprises, for each of a plurality of time instances, merging the coded tile rectangles of different coded tile rectangle sequences and of the same time instance vertically into a coded picture such that, for each coded tile rectangle, a coded slice is formed within the coded picture.

3. The method according to claim 1, wherein said merging comprises, for each of a plurality of time instances, merging the coded tile sets of different coded tile set sequences and of the same time instance as coded tile sets within the coded picture or vertically such that for each coded tile set, a coded slice is formed within the coded picture, or coded tile sets are used also in the coded picture.

4. The method according to any preceding claim, wherein two decoder instances are used for decoding the merged first and second bitstreams, wherein one of said first and second bitstreams contains only a subset of temporal sub-layers.

5. The method according to any preceding claim, further comprising. requesting the first time segment of a first tile set or rectangle collection track and a second tile set or rectangle collection track;
resolving the first time segment of the first tile set or rectangle collection track to perform said merging into the first time segment of the first bitstream;
resolving the first time segment of the second tile set or rectangle collection track to perform said merging into the first time segment of the second bitstream;
selecting a third tile set or rectangle collection track that is such that the first coded tile set and/or rectangle sequence has the same spatial position within a respective reconstructed picture in both the first and the second time segment of the first bitstream;
selecting a fourth tile set or rectangle collection track that is such that the third coded tile set and/or rectangle sequence has the same spatial position within a respective reconstructed picture in both the first and the second time segment of the second bitstream,
requesting the second time segment of the third tile set or rectangle collection track and the fourth tile set or rectangle collection track;
resolving the second time segment of the third tile set or rectangle collection track to perform said merging into the second time segment of the first bitstream; and
resolving the second time segment of the fourth tile set or rectangle collection track to perform said merging into the second time segment of the second bitstream.

6. An apparatus comprising at least one processor and at least one memory, said at least one memory stored with code thereon, which when executed by said at least one processor, causes the apparatus to perform the method according to at least one of claims 1 to 5.

7. A computer readable storage medium stored with code thereon for use by an apparatus, which when executed by a processor, causes the apparatus to perform the method according to at least one of claims 1 to 5.

**Patentansprüche**

1. Verfahren zum Streamen mit Anpassung an das Ansichtsfenster, das Folgendes umfasst:

Anfordern (900) eines ersten Zeitabschnitts eines ersten Satzes von mehreren unabhängig codierten Kachelsatz- und/oder Rechtecksequenzen von einem Server durch einen Client, wobei der erste Satz jeweils eine erste, zweite, dritte und vierte codierte Kachelsatz- und/oder Rechtecksequenz eines ersten, zweiten, dritten und vierten räumlichen Gebiets eines Bildes umfasst und von Bitstreams stammt, die ein erstes Stream-Access-Point-Intervall (SAP-Intervall) aufweisen, wobei das erste und das zweite räumliche Gebiet zu einem ersten Ansichtsfenster gehören, das einer ersten Betrachtungsausrichtung entspricht, und das dritte und das vierte räumliche Gebiet außerhalb des ersten Ansichtsfensters fallen, wobei die erste und die zweite codierte Kachelsatz- und/oder Rechtecksequenz des ersten Zeitabschnitts eine erste, höhere Bildqualität aufweisen und die dritte und die vierte codierte Kachelsatz- und/oder Rechtecksequenz des ersten Zeitabschnitts eine zweite, niedrigere Bildqualität aufweisen;

Zusammenführen (902) der ersten und der zweiten codierten Kachelsatz- und/oder Rechtecksequenz des ersten Zeitabschnitts in den ersten Zeitabschnitt eines ersten Bitstreams;

Zusammenführen (904) der dritten und der vierten codierten Kachelsatz- und/oder Rechtecksequenz des ersten Zeitabschnitts in den ersten Zeitabschnitt eines zweiten Bitstreams;

Anfordern (906) eines zweiten Zeitabschnitts eines zweiten Satzes der mehreren unabhängig codierten Kachelsatz- und/oder Rechtecksequenzen von dem Server als Antwort auf eine Änderung der Betrachtungsausrichtung von dem ersten Ansichtsfenster zu einem zweiten Ansichtsfenster, wobei das erste und das vierte räumliche Gebiet zu einem zweiten Ansichtsfenster gehören, das einer zweiten Betrachtungsausrichtung entspricht, und das zweite und das dritte räumliche Gebiet außerhalb des zweiten Ansichtsfensters liegen, wobei der zweite Satz Folgendes umfasst:

- eine erste und eine dritte codierte Kachelsatz- und/oder Rechtecksequenz, die jeweils von einem oder mehreren Kachelrechtecken der ersten und der dritten codierten Kachelsatz- und/oder Rechtecksequenz des ersten Zeitabschnitts zeitlich vorhergesagt werden, und
- eine zweite und eine vierte codierte Kachelsatz- und/oder Rechtecksequenz des zweiten und des vierten räumlichen Gebiets, die mit einer SAP beginnen und die von Bitstreams stammen, die ein zweites, kürzeres SAP-Intervall aufweisen;

Zusammenführen (908) der ersten codierten Kachelsatz- und/oder Rechtecksequenz und der vierten codierten Kachelsatz- und/oder Rechtecksequenz mit kürzerem SAP-Intervall des zweiten Zeitabschnitts in den zweiten Zeitabschnitt des ersten Bitstreams in der Weise, dass die erste codierte Kachelsatz- und/oder Rechtecksequenz die gleiche räumliche Position innerhalb eines zugehörigen rekonstruierten Bildes sowohl in dem ersten als auch dem zweiten Zeitabschnitt des ersten Bitstreams aufweist, wobei die erste codierte Kachelsatz- und/oder Rechtecksequenz und die vierte codierte Kachelsatz- und/oder Rechtecksequenz mit kürzerem SAP-Intervall des zweiten Zeitabschnitts die erste höhere Bildqualität aufweisen, und

Zusammenführen (910) der dritten codierten Kachelsatz- und/oder Rechtecksequenz und der zweiten codierten Kachelsatz- und/oder Rechtecksequenz mit kürzerem SAP-Intervall des zweiten Zeitabschnitts in den zweiten Zeitabschnitt des zweiten Bitstreams in der Weise, dass die dritte codierte Kachelsatz- und/oder Rechtecksequenz die gleiche räumliche Position innerhalb eines zugehörigen rekonstruierten Bildes sowohl in dem ersten als auch dem zweiten Zeitabschnitt des zweiten Bitstreams aufweist, wobei die dritte codierte Kachelsatz- und/oder Rechtecksequenz und die zweite codierte Kachelsatz- und/oder Rechtecksequenz mit kürzerem SAP-Intervall des zweiten Zeitabschnitts die zweite niedrigere Bildqualität aufweisen.

2. Verfahren nach Anspruch 1, wobei das Zusammenführen für jede von mehreren Zeitinstanzen das Zusammenführen der codierten Kachelrechtecke von unterschiedlichen codierten Kachelrechtecksequenzen und von den gleichen Zeitinstanzen vertikal in ein codiertes Bild umfasst, so dass für jedes codierte Kachelrechteck ein codiertes Slice innerhalb des codierten Bildes gebildet ist.

3. Verfahren nach Anspruch 1, wobei das Zusammenführen für jede von mehreren Zeitinstanzen das Zusammenführen der codierten Kachelsätze von unterschiedlichen codierten Kachelsatzsequenzen und von der gleichen Zeitinstanz als codierte Kachelsätze innerhalb des codierten Bildes oder vertikal umfasst, so dass für jeden codierten Kachelsatz ein codiertes Slice innerhalb des codierten Bildes gebildet ist oder codierte Kachelsätze auch in dem codierten Bild verwendet werden.

4. Verfahren nach einem der vorhergehenden Ansprüche, wobei zwei Decodiererinstanzen zum Decodieren des zusammengeführten ersten und zweiten Bitstreams verwendet werden, wobei der erste oder der zweite Bitstream nur eine Teilmenge von zeitlichen Unterschichten enthält.

5. Verfahren nach einem der vorhergehenden Ansprüche, das ferner Folgendes umfasst:

Anfordern des ersten Zeitabschnitts einer ersten Kachelsatz- oder Rechtecksammelspur und einer zweiten Kachelsatz- oder Rechtecksammelspur;

Zerlegen des ersten Zeitabschnitts der ersten Kachelsatz- oder Rechtecksammelspur, um das Zusammenführen in den ersten Zeitabschnitt des ersten Bitstreams durchzuführen;

Zerlegen des ersten Zeitabschnitts der zweiten Kachelsatz- oder Rechtecksammelspur, um das Zusammenführen in den ersten Zeitabschnitt des zweiten Bitstreams durchzuführen;

Auswählen einer dritten Kachelsatz- oder Rechtecksammelspur, die derart ist, dass die erste codierte Kachelsatz- und/oder Rechtecksequenz die gleiche räumliche Position innerhalb eines zugehörigen rekonstruierten Bildes sowohl in dem ersten als auch dem zweiten Zeitabschnitt des ersten Bitstreams aufweisen;

Auswählen einer vierten Kachelsatz- oder Rechtecksammelspur, die derart ist, dass die dritte codierte Kachelsatz- und/oder Rechtecksequenz die gleiche räumliche Position innerhalb eines zugehörigen rekonstruierten Bildes sowohl in dem ersten als auch dem zweiten Zeitabschnitt des zweiten Bitstreams aufweisen;

Anfordern des zweiten Zeitabschnitts der dritten Kachelsatz- oder Rechtecksammelspur und der vierten Kachelsatz- oder Rechtecksammelspur;

Zerlegen des zweiten Zeitabschnitts der dritten Kachelsatz- oder Rechtecksammelspur, um das Zusammenführen in den zweiten Zeitabschnitt des ersten Bitstreams durchzuführen, und

Zerlegen des zweiten Zeitabschnitts der vierten Kachelsatz- oder Rechtecksammelspur, um das Zusammenführen in den zweiten Zeitabschnitt des zweiten Bitstreams durchzuführen.

6. Vorrichtung, die mindestens einen Prozessor und mindestens einen Speicher umfasst, wobei in dem mindestens einen Speicher Code gespeichert ist, der dann, wenn er durch den mindestens einen Prozessor ausgeführt wird, bewirkt, dass die Vorrichtung das Verfahren nach mindestens einem der Ansprüche 1 bis 5 ausführt.

7. Computerlesbares Speichermedium, in dem Code für die Verwendung durch eine Vorrichtung gespeichert ist, der dann, wenn er durch einen Prozessor ausgeführt wird, bewirkt, dass die Vorrichtung das Verfahren nach mindestens einem der Ansprüche 1 bis 5 durchführt.

**Revendications**

1. Procédé de diffusion en flux continu adaptable à une clôture, comprenant :

la requête (900), par un client, d'un premier segment temporel d'un premier ensemble d'une pluralité de séquences d'ensembles et/ou de rectangles de tuiles codés indépendamment auprès d'un serveur, ledit premier ensemble comprenant une première, une deuxième, une troisième et une quatrième séquence d'ensembles et/ou de rectangles de tuiles codés respectivement d'une première, d'une deuxième, d'une troisième et d'une quatrième région spatiale d'une image, et issu de flux binaires comportant un premier intervalle de points d'accès de flux (SAP), les première et deuxième régions spatiales appartenant à une première clôture correspondant à une première orientation de visionnage, et les troisième et quatrième régions spatiales se situant en dehors de la première clôture, les première et deuxième séquences d'ensembles et/ou de rectangles de tuiles codés du premier segment temporel étant d'une première qualité d'image supérieure, les troisième et quatrième séquences d'ensembles et/ou de rectangles de tuiles codés du premier segment temporel étant d'une deuxième qualité d'image inférieure ;

le fusionnement (902) des première et deuxième séquences d'ensembles et/ou de rectangles de tuiles codés du premier segment temporel dans le premier segment temporel d'un premier flux binaire ;

le fusionnement (904) des troisième et quatrième séquences d'ensembles et/ou de rectangles de tuiles codés du premier segment temporel dans le premier segment temporel d'un deuxième flux binaire ;

la requête (906), en réponse à un changement de l'orientation de visionnage de la première clôture à une deuxième clôture, d'un deuxième segment temporel d'un deuxième ensemble de la pluralité de séquences d'ensembles et/ou de rectangles de tuiles codés indépendamment auprès du serveur, les première et quatrième régions spatiales appartenant à une deuxième clôture correspondant à une deuxième orientation de visionnage et les deuxième et troisième régions spatiales se situant en dehors de la deuxième clôture, ledit deuxième ensemble comprenant

- une première et une troisième séquence d'ensembles et/ou de rectangles de tuiles codés prédites temporellement à partir d'un ou de plusieurs rectangles de tuiles respectivement de la première et de la troisième séquence d'ensembles et/ou de rectangles de tuiles codés du premier segment temporel, et
- une deuxième et une quatrième séquence d'ensembles et/ou de rectangles de tuiles codés de la deuxième et de la quatrième région spatiale commençant par un SAP et issues de flux binaires comportant un deuxième intervalle de SAP plus court ;

le fusionnement (908) de la première séquence d'ensembles et/ou de rectangles de tuiles codés et de la quatrième séquence d'ensembles et/ou de rectangles de tuiles codés à intervalle de SAP plus court du deuxième segment temporel dans le deuxième segment temporel du premier flux binaire de manière à ce que la première séquence d'ensembles et/ou de rectangles de tuiles codés occupe la même position spatiale au sein d'une image reconstruite respective à la fois dans le premier et le deuxième segment temporel du premier flux binaire, la première séquence d'ensembles et/ou de rectangles de tuiles codés et la quatrième séquence d'ensembles et/ou de rectangles de tuiles codés à intervalle de SAP plus court du deuxième segment temporel étant de la première qualité d'image supérieure ; et

le fusionnement (910) de la troisième séquence d'ensembles et/ou de rectangles de tuiles codés et de la deuxième séquence d'ensembles et/ou de rectangles de tuiles codés à intervalle de SAP plus court du deuxième segment temporel dans le deuxième segment temporel du deuxième flux binaire de manière à ce que la troisième séquence d'ensembles et/ou de rectangles de tuiles codés occupe la même position spatiale au sein d'une image reconstruite respective à la fois dans le premier et le deuxième segment temporel du deuxième flux binaire, la troisième séquence d'ensembles et/ou de rectangles de tuiles codés et la deuxième séquence d'ensembles et/ou de rectangles de tuiles codés à intervalle de SAP plus court du deuxième segment temporel étant de la deuxième qualité d'image inférieure.

2. Procédé selon la revendication 1, dans lequel ladite fusion comprend, pour chacune d'une pluralité d'instances temporelles, le fusionnement des rectangles de tuiles codés de séquences de rectangles de tuiles codés différentes et de la même instance temporelle verticalement dans une image codée de sorte que, pour chaque rectangle de tuiles codé, une tranche codée soit formée au sein de l'image codée.

3. Procédé selon la revendication 1, dans lequel ladite fusion comprend, pour chacune d'une pluralité d'instances temporelles, le fusionnement des ensembles de tuiles codés de séquences d'ensembles de tuiles codés différentes et de la même instance temporelle sous forme d'ensembles de tuiles codés au sein de l'image codée ou verticalement de sorte que, pour chaque ensemble de tuiles codé, une tranche codée soit formée au sein de l'image codée ou des ensembles de tuiles codés soient également utilisés dans l'image codée.

4. Procédé selon l'une quelconque des revendications précédentes, dans lequel deux instances de décodeur sont utilisées pour le décodage des premier et deuxième flux binaires fusionnés, l'un desdits premier et deuxième flux binaires contenant uniquement un sous-ensemble de sous-couches temporelles.

5. Procédé selon l'une quelconque des revendications précédentes, comprenant en outre :

la requête du premier segment temporel d'une première piste de collecte d'ensembles ou de rectangles de tuiles et d'une deuxième piste de collecte d'ensembles ou de rectangles de tuiles ;
la résolution du premier segment temporel de la première piste de collecte d'ensembles ou de rectangles de tuiles dans le but de réaliser ladite fusion dans le premier segment temporel du premier flux binaire ;
la résolution du premier segment temporel de la deuxième piste de collecte d'ensembles ou de rectangles de tuiles dans le but de réaliser ladite fusion dans le premier segment temporel du deuxième flux binaire ;
la sélection d'une troisième piste de collecte d'ensembles ou de rectangles de tuiles telle que la première séquence d'ensembles et/ou de rectangles de tuiles codés occupe la même position spatiale au sein d'une image reconstruite respective à la fois dans le premier et le deuxième segment temporel du premier flux binaire ;
la sélection d'une quatrième piste de collecte d'ensembles ou de rectangles de tuiles telle que la troisième séquence d'ensembles et/ou de rectangles de tuiles codés occupe la même position spatiale au sein d'une image reconstruite respective à la fois dans le premier et le deuxième segment temporel du deuxième flux binaire ;
la requête du deuxième segment temporel de la troisième piste de collecte d'ensembles ou de rectangles de tuiles et de la quatrième piste de collecte d'ensembles ou de rectangles de tuiles ;
la résolution du deuxième segment temporel de la troisième piste de collecte d'ensembles ou de rectangles de tuiles dans le but de réaliser ladite fusion dans le deuxième segment temporel du premier flux binaire ; et
la résolution du deuxième segment temporel de la quatrième piste de collecte d'ensembles ou de rectangles de tuiles dans le but de réaliser ladite fusion dans le deuxième segment temporel du deuxième flux binaire.

6. Appareil comprenant au moins un processeur et au moins une mémoire, ladite au moins une mémoire comportant un code qui y est enregistré, lequel code, une fois exécuté par ledit au moins un processeur, amène l'appareil à réaliser le procédé selon au moins une des revendications 1 à 5.

7. Support d'enregistrement lisible par ordinateur comportant un code qui y est enregistré destiné à être utilisé par un appareil, lequel code, une fois exécuté par un processeur, amène l'appareil à réaliser le procédé selon au moins une des revendications 1 à 5.

Fig. 1

Fig. 2

Fig. 3

Fig. 4

Multiview video source —encoding→ Server (multiview data)

←----View demands----→ Interacive client

—Requested multiview video→

←----View demands----→ Interacive client

—Requested multiview video→

## Fig. 5

Input images → Stitching and projection → Projected frame

## Fig.6a

Region-wise mapping (optional) → Packed VR frame(s) → Image/video encoding

Input images → Stiching onto spherical image → Projection to cylinder → Unfolding the cylinder to a 2D image

## Fig.6b

# Fig. 7

# Fig. 8

Request a first time segment of a 1st set of a plurality of independently coded tile set and/or rectangle sequences from a server, said 1st set comprising a 1st, 2nd, 3rd, and 4th coded tile set and/or rectangle sequence of a 1st, 2nd, 3rd, and 4th spatial region (900)

Merge, in response to said 1st and 2nd spatial regions belonging to a viewport corresponding to a viewing orientation, the 1st and 2nd coded tile set and/or rectangle sequences of the first time segment into the first time segment of a first bitstream (902)

Merge the 3rd and 4th coded tile set and/or rectangle sequences of the first time segment into the first time segment of a second bitstream (904)

Request, in response to a change in the viewing orientation, a second time segment of a 2nd set of the plurality of independently coded tile set and/or rectangle sequences from the server, said 2nd set comprising the 1st and 3rd coded tile set and/or rectangle sequences predicted from the 1st and 3rd coded tile set and/or rectangle sequence of the first time segment, and a 2nd and 4th coded tile set and/or rectangle sequence of the 2nd and 4th spatial region having a short SAP interval and starting with a SAP (906)

Merge the 1st coded tile set and/or rectangle sequence and the 4th short-SAP-interval coded tile set and/or rectangle sequence of the second time segment into the second time segment of the first bitstream in such a manner that the 1st coded tile set and/or rectangle sequence has the same position in both the first and the second time segment of the first bitstream (908)

Merge the 3rd coded tile set and/or rectangle sequence and the 2nd short-SAP-interval coded tile set and/or rectangle sequence of the second time segment into the second time segment of the second bitstream in such a manner that the 3rd coded tile set and/or rectangle sequence has the same position in both the first and the second time segment of the second bitstream (910)

# Fig. 9

# Fig. 10a

**Notation**

| | |
|---|---|
| N | Uncompressed tile rectangle #N |
| N̲ | Non-intra coded tile rectangle #N |
| N̲ | Intra coded tile rectangle #N |
| N̲ | Tile rectangle #N in bitstream with short intra period |
| $t_i$ | Time i or Picture #i in sequence |

Fig. 10b

Fig. 11

Fig. 12

```
┌──────────┐
│  Source  │
│   1510   │
└────┬─────┘
     │
     ▼
┌──────────┐
│ Encoder  │
│   1520   │
└────┬─────┘
     │
     ▼
┌──────────┐
│ Storage  │
│   1530   │
└────┬─────┘
     │
     ▼
┌──────────┐
│  Sender  │
│   1540   │
└────┬─────┘
     │
     ▼
┌──────────┐
│ Gateway  │
│   1550   │
└────┬─────┘
     │
     ▼
┌──────────┐
│ Receiver │
│   1560   │
└────┬─────┘
     │
     ▼
┌──────────┐
│Recording │
│ Storage  │
│   1570   │
└────┬─────┘
     │
     ▼
┌──────────┐
│ Decoder  │
│   1580   │
└────┬─────┘
     │
     ▼
┌──────────┐
│ Renderer │
│   1590   │
└──────────┘
```

# Fig. 13

# EP 3 349 467 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2824885 A

- US 2014219346 A

### Non-patent literature cited in the description

- Transparent end-to-end packet-switched streaming service (PSS); protocols and codecs. *3GPP TS 26.234 Release 9*
- Dynamic adaptive streaming over HTTP (DASH)-Part 1: Media presentation description and segment formats. International Standard. 2014

- Transparent end-to-end packet-switched streaming Service (PSS); Progressive download and dynamic adaptive Streaming over HTTP (3GP-DASH). *3GPP TS 26.247*